# EUROPEAN PATENT APPLICATION

(11) **EP 4 685 832 A1**
(43) Date of publication of application: **28.01.2026**
(21) Application number: 24929676.5
(22) Date of filing: 12.03.2024
(51) Int. Cl.: H01G 4/30

(54) **MULTILAYER CERAMIC CAPACITOR**

(71) Applicant: Murata Manufacturing Co., Ltd., Nagaokakyo-shi, Kyoto 617-8555 (JP)
(72) Inventor: NISHIKORI, Makoto, Nagaokakyo-shi, Kyoto 617-8555 (JP)
(74) Representative: Stöckeler, Ferdinand
(86) International application number: PCT/JP2024/009640
(87) International publication number: WO 2025/191704

(57) **Abstract**

Provided are multilayer ceramic capacitors that are each able to increase the capacitance without increasing the size of the multilayer ceramic capacitor, even in multilayer ceramic capacitors each with high voltage resistance specifications. In a multilayer ceramic capacitor 1, a plurality of internal electrode layers include first internal electrode layers 31, second internal electrode layers 32, and intermediate electrode layers 33. At least a portion of each of the intermediate electrode layers 33 has a coverage higher than the coverage of a region of a first counter portion 31A of each of the first internal electrode layers 31 adjacent to the first end surface LS1, and a coverage higher than the coverage of a region of the second counter portion 32A of each of the second internal electrode layers 32 adjacent to the second end surface LS2.

## Description

### TECHNICAL FIELD

The present invention relates to a multilayer ceramic capacitor.

### BACKGROUND ART

In multilayer ceramic capacitors, there are cases where high voltage resistance is required. As multilayer ceramic capacitors that each realize high voltage resistance, multilayer ceramic capacitors have been known that each have a configuration in which a plurality of capacitor portions connected in series are provided, i.e., multilayer ceramic capacitors each with a series configuration (see Patent Document 1).

### Citation List

### Patent Document

Patent Document 1: Japanese Unexamined Patent Application, Publication No. H10-261546

### DISCLOSURE OF THE INVENTION

### Problems to be Solved by the Invention

In the multilayer ceramic capacitors each with a series configuration, the voltage resistance is improved because it forms a series connection capacitance, but the capacitance decreases accordingly. However, there are cases where an increase in capacitance is required even in such multilayer ceramic capacitors, each with a series configuration.

It is an object for the present invention to provide multilayer ceramic capacitors that are each able to increase the capacitance without increasing the size of the multilayer ceramic capacitor, even in multilayer ceramic capacitors each with high voltage resistance specifications.

### Means for Solving the Problems

A multilayer ceramic capacitor according to one embodiment of the present invention includes: a multilayer body including a plurality of dielectric layers and a plurality of internal electrode layers that are laminated, a first main surface and a second main surface opposed to each other in a lamination direction, a first lateral surface and a second lateral surface opposed to each other in a width direction orthogonal or substantially orthogonal to the lamination direction, and a first end surface and a second end surface opposed to each other in a length direction orthogonal or substantially orthogonal to the lamination direction and the width direction; a first external electrode on the first end surface; and a second external electrode on the second end surface, in which the plurality of internal electrode layers include first internal electrode layers, second internal electrode layers, and intermediate electrode layers, each of the first internal electrode layers includes, at one end portion thereof, a first extension portion that extends toward the first end surface and connects to the first external electrode, and a first counter portion that is connected to the first extension portion and opposed to a corresponding one of the internal electrode layers adjacent in the lamination direction, each of the second internal electrode layers includes, at one end portion thereof, a second extension portion that extends toward the second end surface and connects to the second external electrode, and a second counter portion that is connected to the second extension portion and opposed to a corresponding one of the internal electrode layers adjacent in the lamination direction, each of the intermediate electrode layers is not connected to either the first external electrode or the second external electrode, and provides a series-connected capacitor element together with the first internal electrode layer and the second internal electrode layer, and at least a portion of each of the intermediate electrode layers has a coverage higher than a coverage of a region of the first counter portion of the first internal electrode layer adjacent to the first end surface, and higher than a coverage of a region of the second counter portion of the second internal electrode layer adjacent to the second end surface.

### Effects of the Invention

According to the present invention, it is possible to provide multilayer ceramic capacitors that are each able to increase the capacitance without increasing the size of the multilayer ceramic capacitor, even in multilayer ceramic capacitors each with high voltage resistance specifications.

### BRIEF DESCRIPTION OF THE DRAWINGS

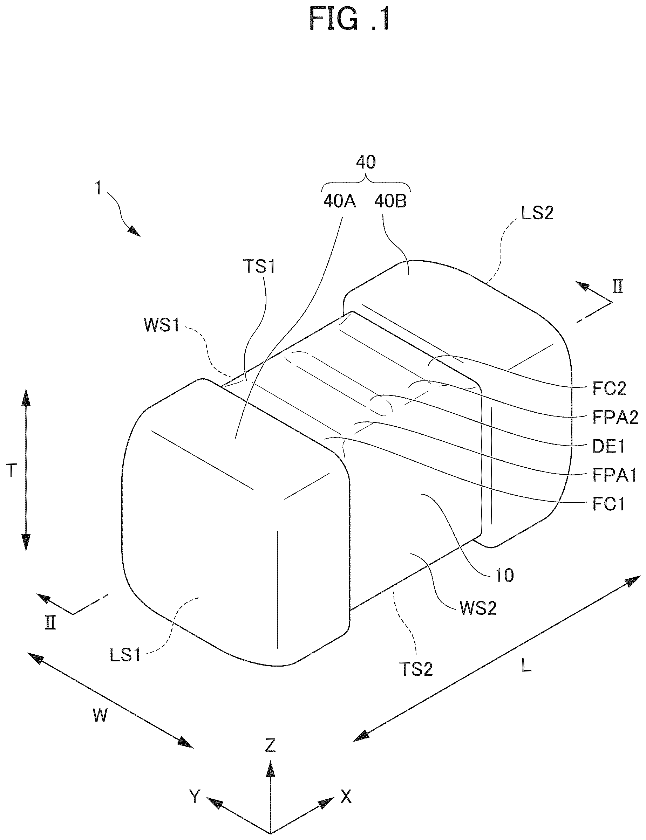

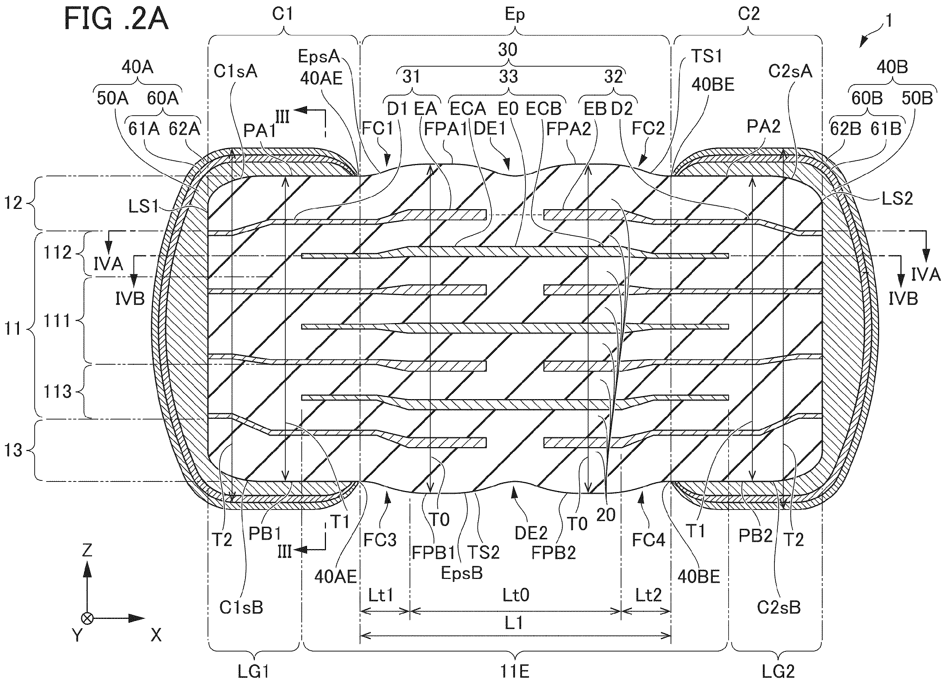

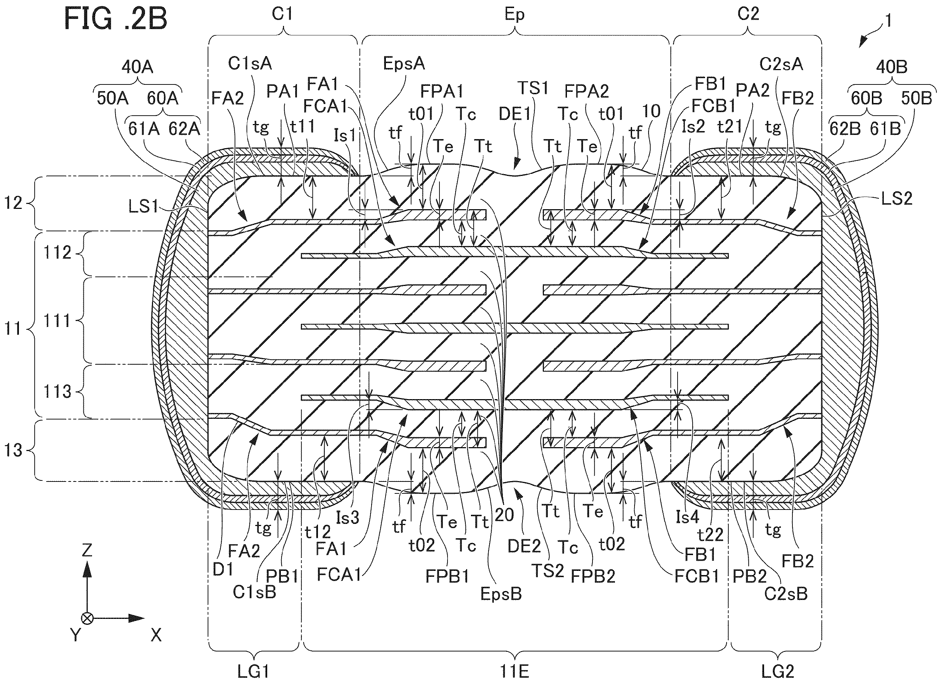

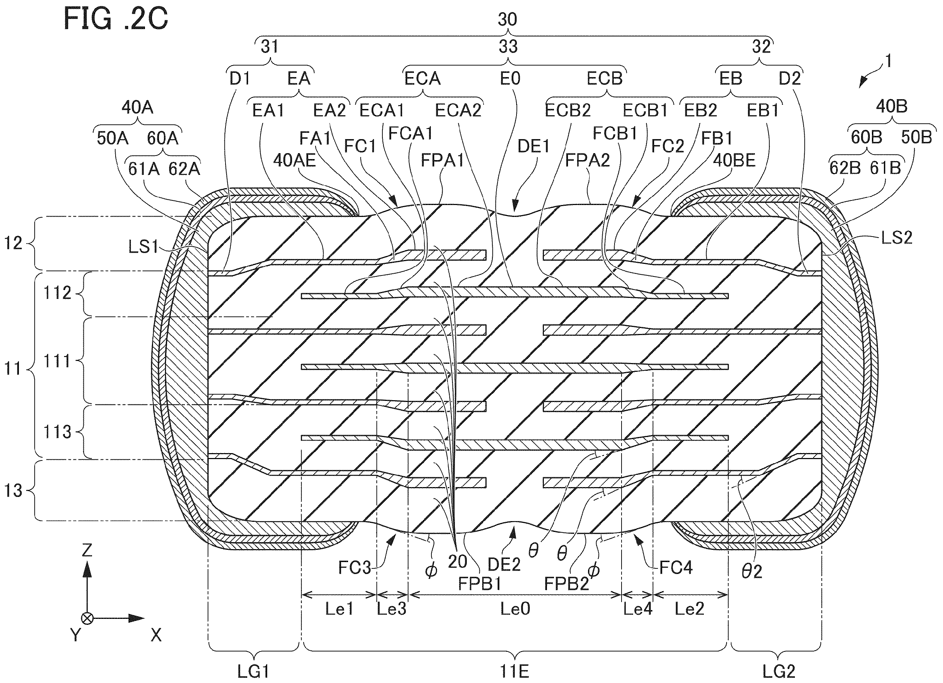

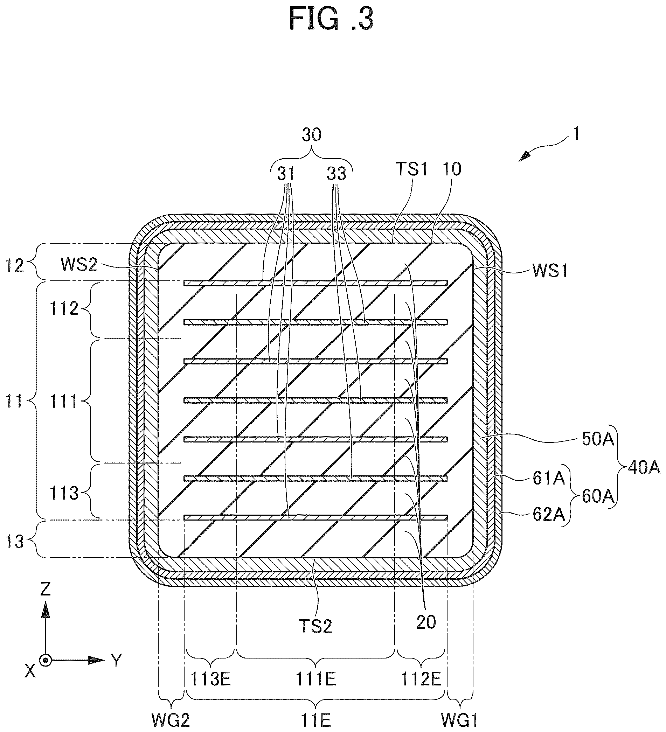

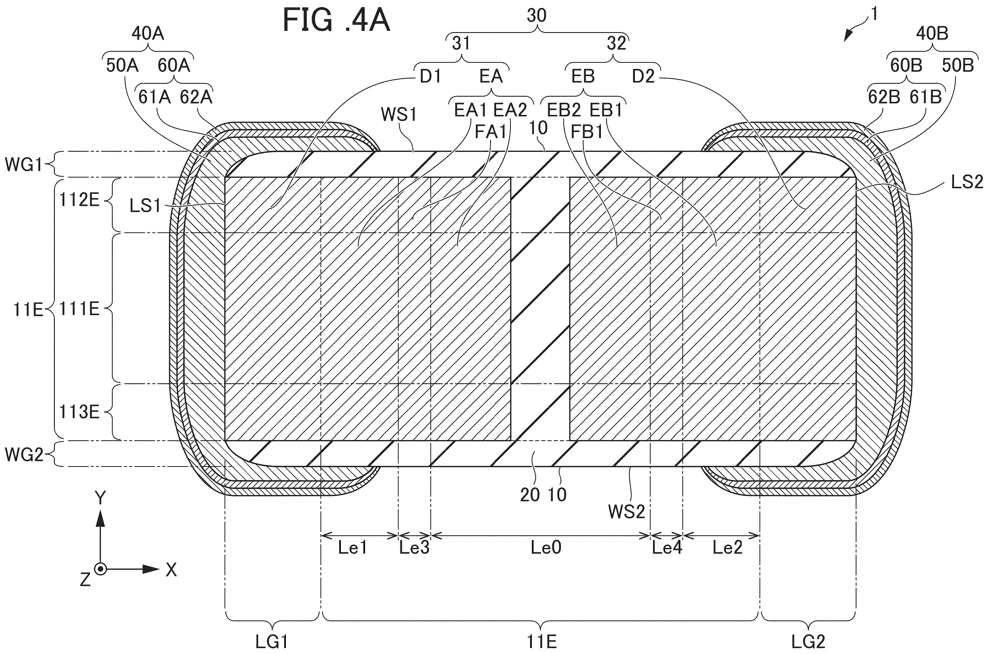

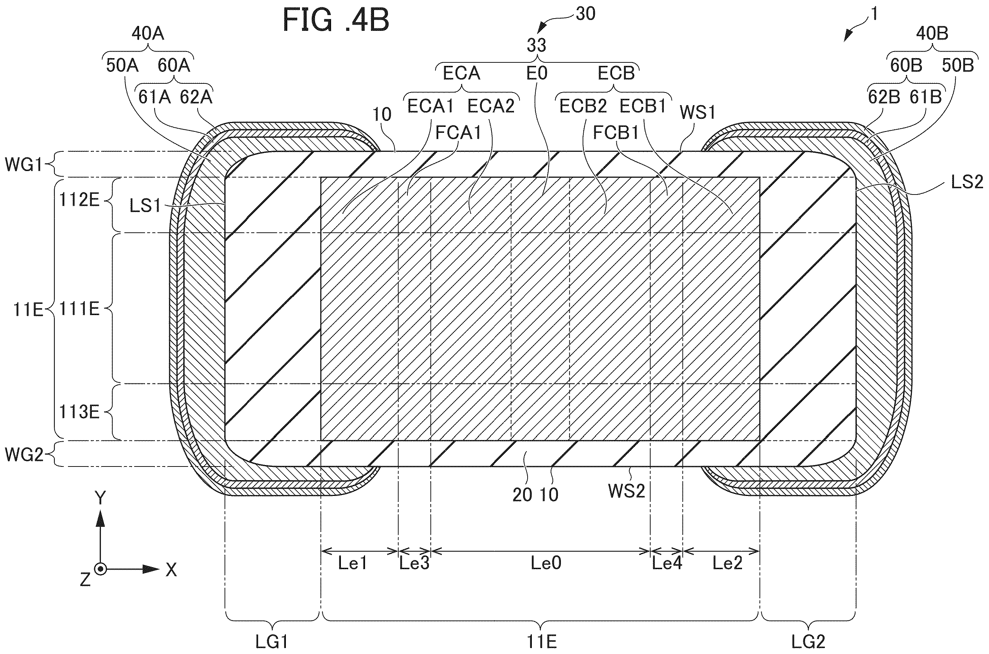

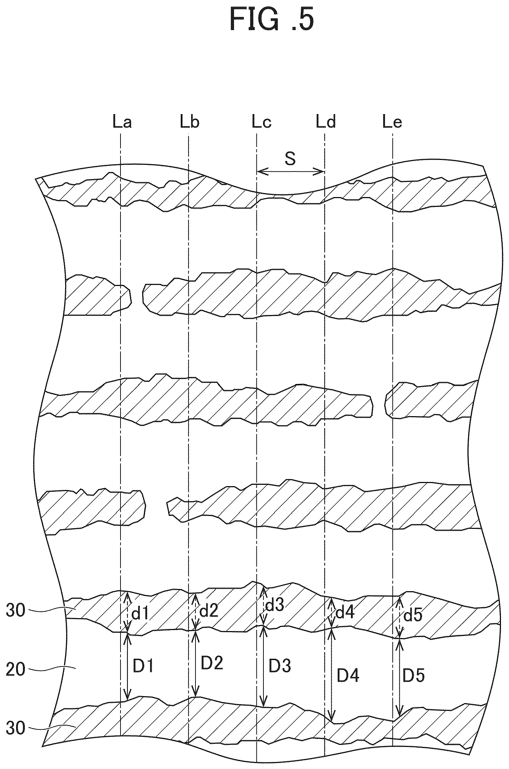

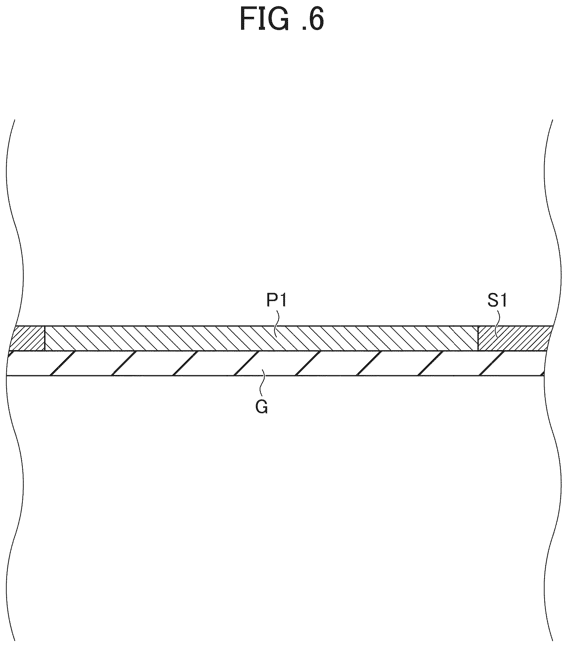

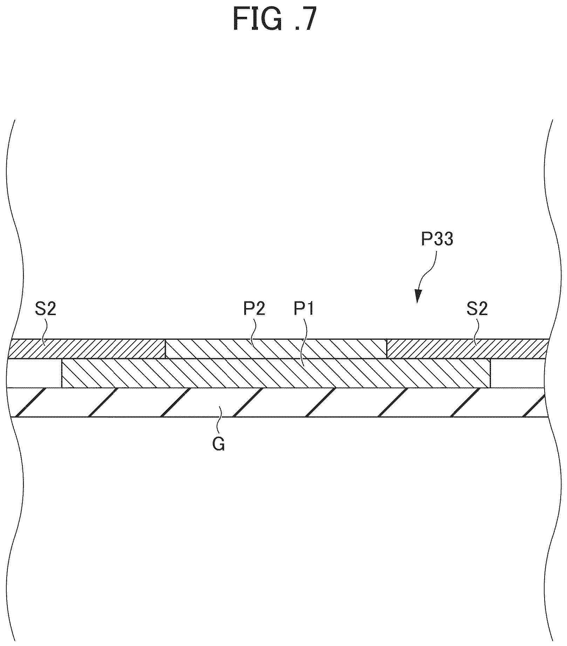

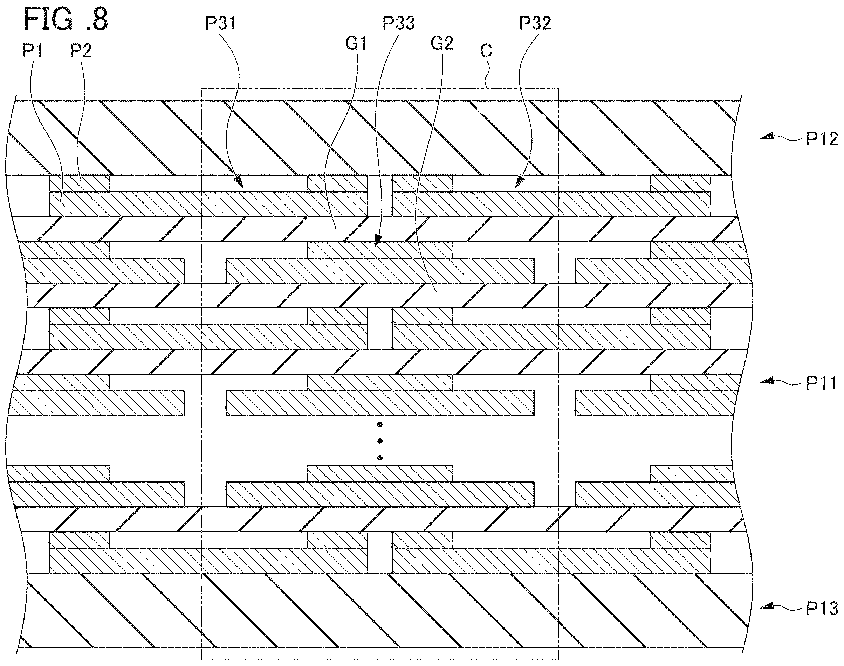

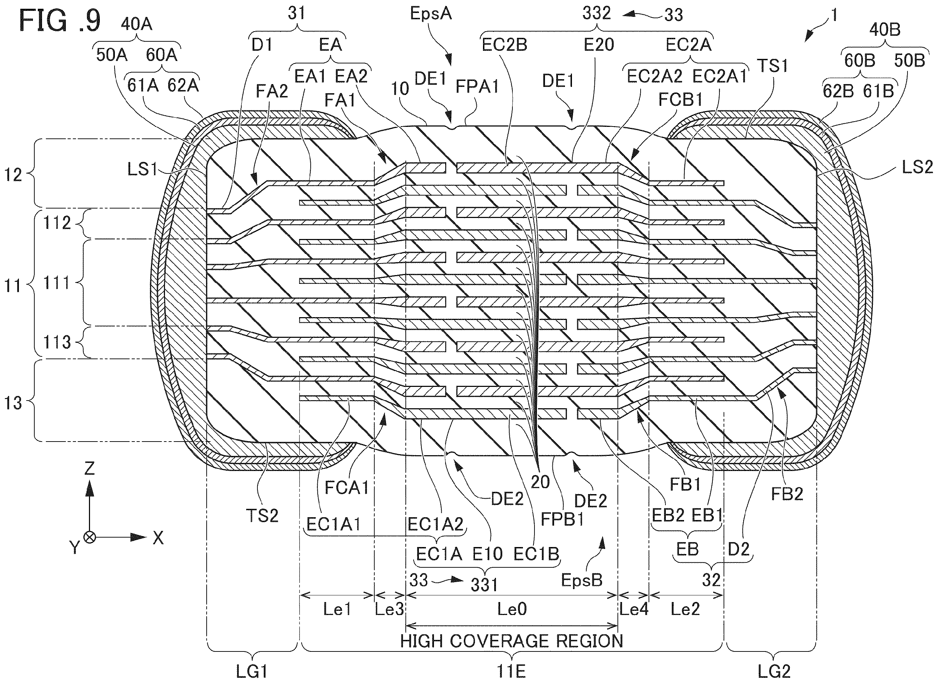

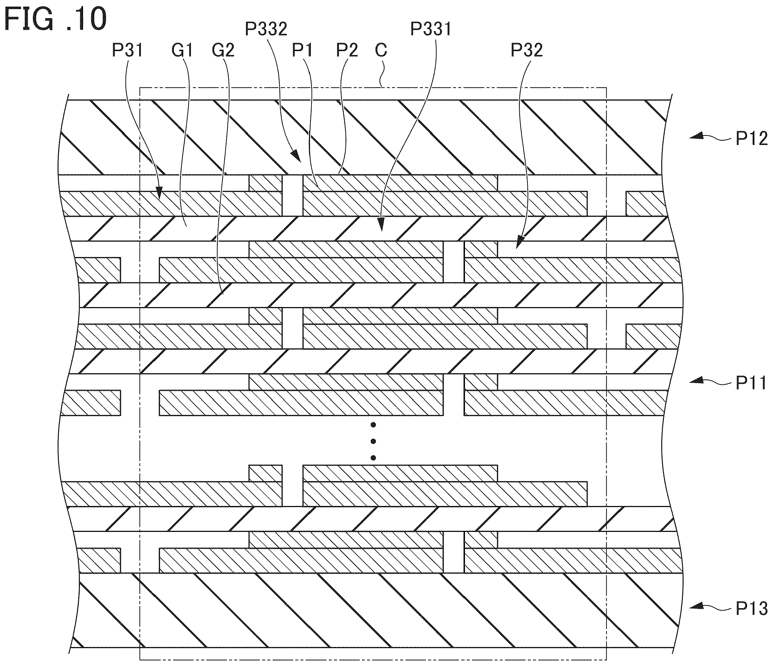

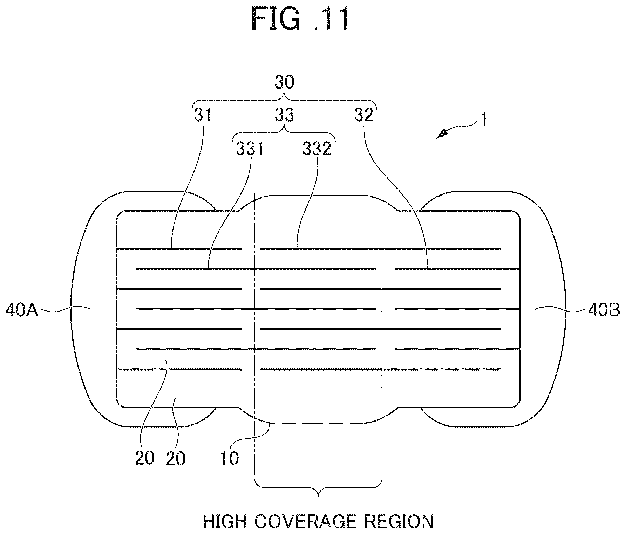

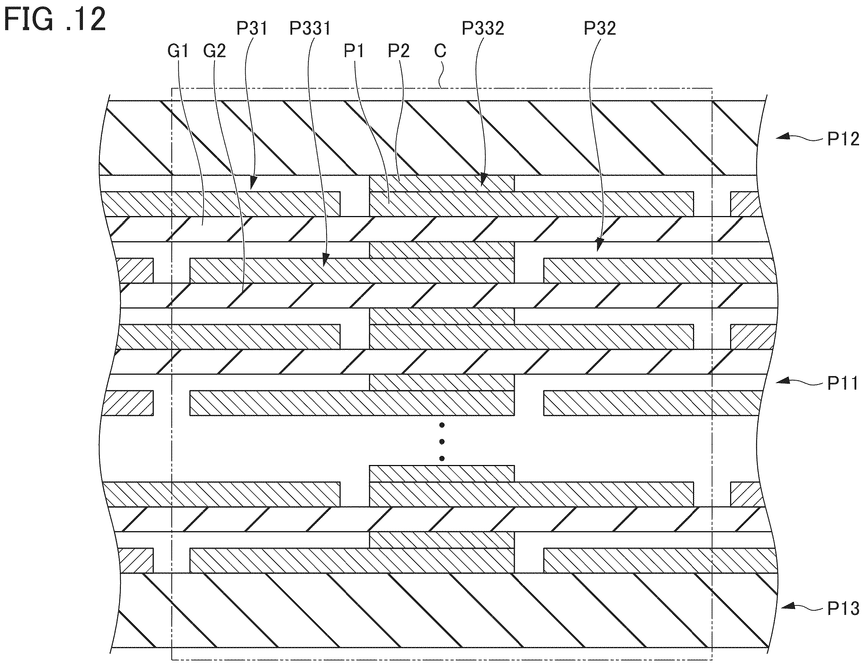

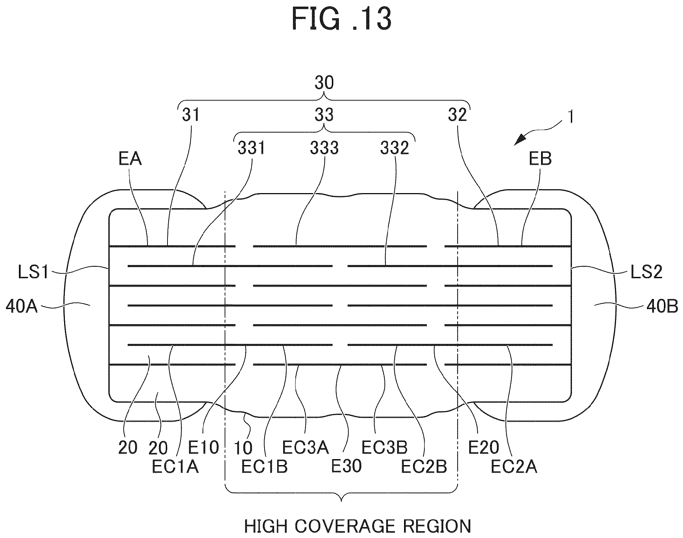

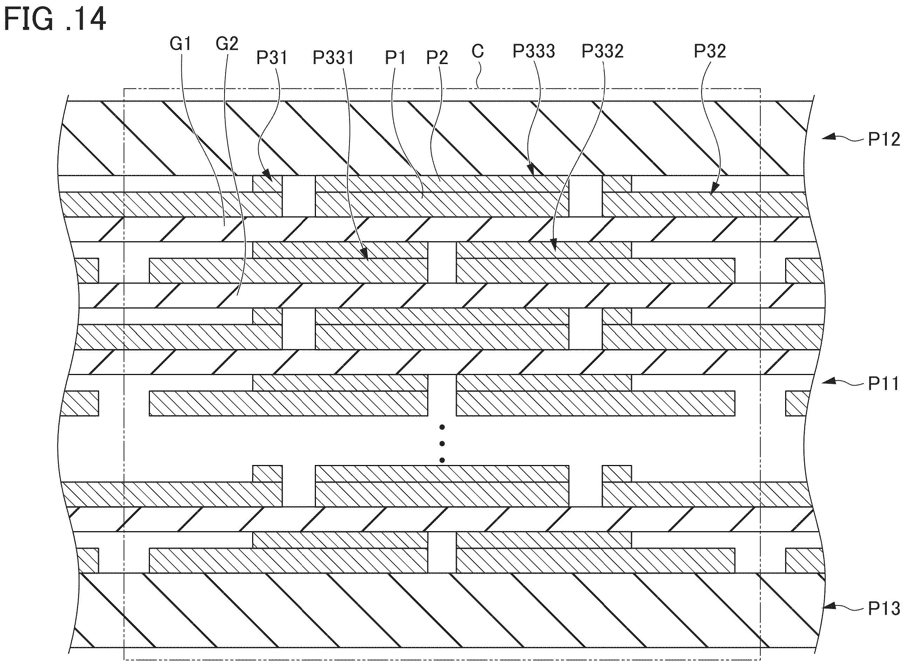

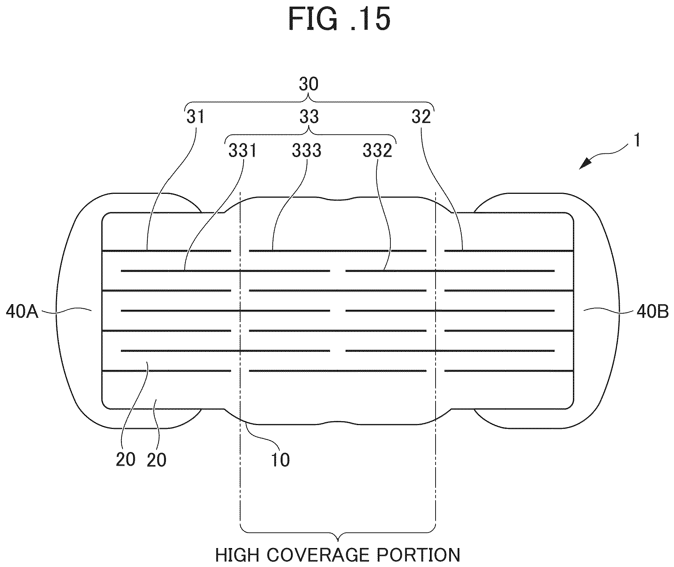

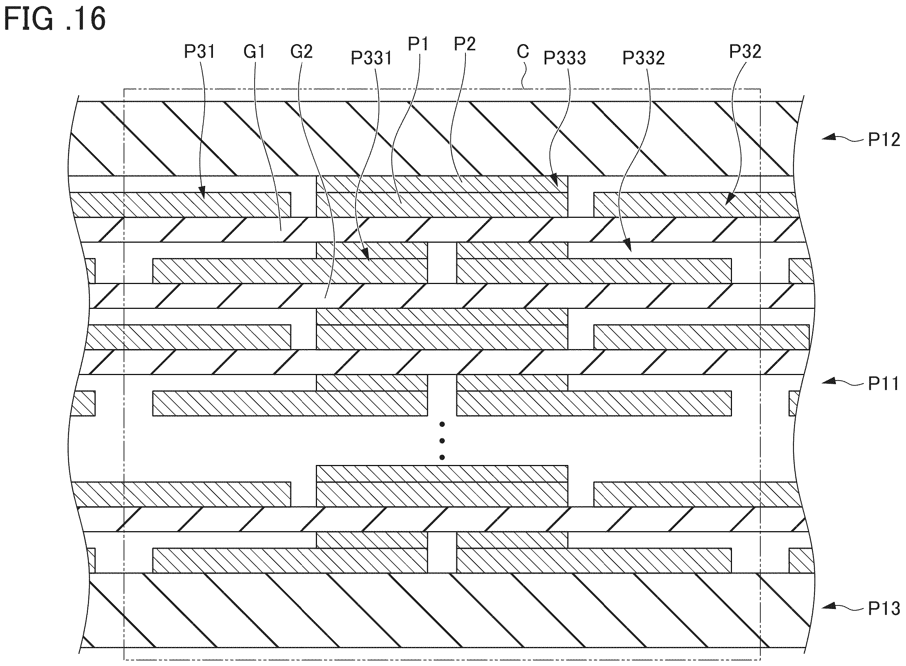

FIG. 1 is an external perspective view of a multilayer ceramic capacitor with a two-portion configuration according to a first embodiment. FIG. 2A is a cross-sectional view taken along the line II-II in FIG. 1, and is a view for explaining a schematic configuration of a multilayer body with a two-portion configuration according to the first embodiment. FIG. 2B is a cross-sectional view taken along the line II-II in FIG. 1, and is a view for explaining mainly the relationship between the thicknesses of each portion in the multilayer body with a two-portion configuration according to the first embodiment. FIG. 2C is a cross-sectional view taken along the line II-II in FIG. 1, and is a view for explaining mainly the regions of the internal electrode layers of the multilayer body with a two-portion configuration according to the first embodiment. FIG. 3 is a cross-sectional view taken along the line III-III in FIG. 2A. FIG. 4A is a cross-sectional view taken along the line IVA-IVA in FIG. 2A, and is a cross-sectional view taken along the first internal electrode layer and the second internal electrode layer. FIG. 4B is a cross-sectional view taken along the line IVB-IVB in FIG. 2A, and is a cross-sectional view taken along the intermediate electrode layer. FIG. 5 is a view showing an example of an SEM enlarged image of an exposed cross section of an inner layer portion. FIG. 6 is a schematic view of a cross section of a dielectric sheet during printing of an electrically conductive paste P1. FIG. 7 is a schematic view of a cross section of a dielectric sheet during printing of an electrically conductive paste P2 on the dielectric sheet of FIG. 6. FIG. 8 is a schematic view of a portion of a multilayer sheet in which a portion functioning as a first main surface-side outer layer portion and a portion functioning as a second main surface-side outer layer portion are provided above and below a portion functioning as an inner layer portion. FIG. 9 is a view for explaining a schematic configuration of a multilayer body with a three-portion configuration according to a second embodiment, and corresponds to FIG. 2A in the first embodiment. FIG. 10 is a schematic view of a portion of a multilayer sheet in which a portion functioning as a first main surface-side outer layer portion and a portion functioning as a second main surface-side outer layer portion are provided above and below a portion functioning as an inner layer portion in the second embodiment. FIG. 11 is a schematic view for explaining the range of a high coverage portion of a multilayer body with a three-portion configuration according to a third embodiment. FIG. 12 is a schematic view of a portion of a multilayer sheet in which a portion functioning as a first main surface-side outer layer portion and a portion functioning as a second main surface-side outer layer portion are provided above and below a portion functioning as an inner layer portion in the third embodiment. FIG. 13 is a schematic view for explaining the range of a high coverage portion of a multilayer body with a four-portion configuration according to a fourth embodiment. FIG. 14 is a schematic view of a portion of a multilayer sheet in which a portion functioning as a first main surface-side outer layer portion and a portion functioning as a second main surface-side outer layer portion are provided above and below a portion functioning as an inner layer portion in the fourth embodiment. FIG. 15 is a schematic view for explaining the range of a high coverage portion of a multilayer body with a four-portion configuration according to a fifth embodiment. FIG. 16 is a schematic view of a portion of a multilayer sheet in which a portion functioning as a first main surface-side outer layer portion and a portion functioning as a second main surface-side outer layer portion are provided above and below a portion functioning as an inner layer portion in the fifth embodiment.

### PREFERRED MODE FOR CARRYING OUT THE INVENTION

### <First Embodiment>

A multilayer ceramic capacitor 1 functioning as a multilayer ceramic electronic component with a two-portion configuration according to a first embodiment of the present disclosure will be described with reference to the drawings. FIG. 1 is an external perspective view of the multilayer ceramic capacitor 1 with a two-portion configuration according to the first embodiment. FIG. 2A is a cross-sectional view taken along the line II-II in FIG. 1, and is a diagram for explaining the schematic configuration of the multilayer body with a two-portion configuration according to the first embodiment. FIG. 2B is a cross-sectional view taken along the line II-II in FIG. 1, and is a diagram for explaining mainly the relationship between the thicknesses of each portion in the multilayer body with a two-portion configuration according to the first embodiment. FIG. 3 is a cross-sectional view taken along the line III-III in FIG. 2A. FIG. 4A is a cross-sectional view taken along the line IVA-IVA in FIG. 2A, and is a cross-sectional view along the first internal electrode layer and the second internal electrode layer. FIG. 4B is a cross-sectional view taken along the line IVB-IVB in FIG. 2A, and is a cross-sectional view along the intermediate electrode layer.

In addition, the drawings may be schematically simplified and drawn in order to explain the contents of the invention, and the drawn constituent elements or the ratio of the dimensions between the constituent elements may not coincide with the ratio of the dimensions described in the specification. In addition, components described in the specification may be omitted in the drawings or may be drawn with the number of components omitted. For example, the number of internal electrode layers shown in FIGS. 2A, 2B, 2C, and 3 is seven for convenience of description; however, this does not indicate the actual number of internal electrode layers 30. It should be noted that terms used in the present invention such as "parallel", "orthogonal", "same", and the like, and values of lengths and angles, and the like, which specify shapes, geometrical conditions, and degrees thereof, are not limited to strict meanings, and should be construed to include a range in which similar functions can be expected.

As shown in FIG. 1, the multilayer ceramic capacitor 1 according to the embodiment has a substantially rectangular parallelepiped shape. The multilayer ceramic capacitor 1 includes a multilayer body 10 having a substantially rectangular parallelepiped shape, and a pair of external electrodes 40 provided at both end portions of the multilayer body 10 so as to be spaced apart from each other.

In FIG. 1, the arrow T indicates a lamination (stacking) direction of the multilayer ceramic capacitor 1 and the multilayer body 10. The lamination direction T is also referred to as a thickness direction and a height direction of the multilayer ceramic capacitor 1 and the multilayer body 10. In FIG. 1, the arrow L indicates a length direction orthogonal or substantially orthogonal to the lamination direction T of the multilayer ceramic capacitor 1 and the multilayer body 10. In FIG. 1, the arrow W indicates a width direction orthogonal or substantially orthogonal to the lamination direction T and the length direction L of the multilayer ceramic capacitor 1 and the multilayer body 10. The pair of external electrodes 40 is provided at one end and the other end of the multilayer body 10 in the length direction L.

The XYZ Cartesian coordinate system is shown in FIGS. 1 to 4B, and later in FIG. 9. The length direction L of the multilayer ceramic capacitor 1 and the multilayer body 10 corresponds to the X direction. The width direction W of the multilayer ceramic capacitor 1 and the multilayer body 10 corresponds to the Y direction. The lamination direction T of the multilayer ceramic capacitor 1 and the multilayer body 10 corresponds to the Z direction. Here, the cross section shown in FIGS. 2A, 2B, and 9 is also referred to as an LT cross section. The cross section shown in FIG. 3 is also referred to as a WT cross section. The cross section shown in FIGS. 4A and 4B is also referred to as an LW cross section.

As shown in FIGS. 1 to 4B, the multilayer body 10 includes a first main surface TS1 and a second main surface TS2 which are opposing to each other in the lamination direction T, a first end surface LS1 and a second end surface LS2 which are opposing to each other in the length direction L orthogonal or substantially orthogonal to the lamination direction T, and a first lateral surface WS1 and a second lateral surface WS2 which are opposing to each other in the width direction W orthogonal or substantially orthogonal to the lamination direction T and the length direction L.

As shown in FIG. 1, the multilayer body 10 has a rectangular or substantially rectangular parallelepiped shape. The dimension of the multilayer body 10 in the length direction L is not necessarily longer than the dimension of the width direction W. The corner portions and ridge portions of the multilayer body 10 are preferably rounded. The corner portions are portions where the three surfaces of the multilayer body intersect, and the ridge portions are portions where the two surfaces of the multilayer body intersect. In addition, unevenness or the like may be provided on a portion or the entirety of the surface of the multilayer body 10. For example, the multilayer ceramic capacitor 1 according to one embodiment includes a first recessed portion DE1 functioning as a recessed portion provided on the first main surface TS1 as shown in FIGS. 1 to 2C. The multilayer ceramic capacitor 1 according to one embodiment includes a second recessed portion DE2 functioning as a recessed portion provided on the second main surface TS2 as shown in FIGS. 2A to 2C. However, the recessed portion may not be provided.

The dimension of the multilayer body 10 is not particularly limited. However, when the dimension in the length direction L of the multilayer body 10 is defined as an L dimension, the L dimension is preferably 0.2 mm or more and 6 mm or less, for example. Furthermore, when the dimension in the lamination direction T of the multilayer body 10 is defined as a T dimension, the T dimension is preferably 0.05 mm or more and 5 mm or less, for example. Furthermore, when the dimension in the width direction W of the multilayer body 10 is defined as a W dimension, the W dimension is preferably 0.1 mm or more and 5 mm or less, for example.

As shown in FIGS. 2A, 2B, 2C, and 3, the multilayer body 10 includes an inner layer portion 11, and a first main surface-side outer layer portion 12 and a second main surface-side outer layer portion 13 that sandwich the inner layer portion 11 in the lamination direction T.

The inner layer portion 11 includes a plurality of dielectric layers 20 and a plurality of internal electrode layers 30 alternately laminated in the lamination direction T. The inner layer portion 11 includes, in the lamination direction T, from the internal electrode layer 30 located closest to the first main surface TS1 to the internal electrode layer 30 located closest to the second main surface TS2. In the inner layer portion 11, a plurality of internal electrode layers 30 are opposing to each other with a corresponding one of the dielectric layers 20 interposed therebetween. The inner layer portion 11 generates a capacitance, and substantially defines and functions as a capacitor. The thickness of the inner layer portion 11 in the lamination direction T varies along the length direction L according to the shape of the internal electrode layer 30 located closest to the first main surface TS1 and the shape of the internal electrode layer 30 located closest to the second main surface TS2.

The plurality of dielectric layers 20 are each made of a dielectric material. The dielectric material may be a dielectric ceramic including a component such as BaTiO₃, CaTiO₃, SrTiO₃, or CaZrO₃. Furthermore, the dielectric material may be obtained by adding a secondary component such as a Mn compound, an Fe compound, a Cr compound, a Co compound, or a Ni compound to the main component. The dielectric material particularly preferably includes BaTiO₃ as a main component.

The thicknesses of the dielectric layers 20 are each preferably 0.2 µm or more and 10 µm or less. The number of the dielectric layers 20 to be laminated (stacked) is preferably fifteen or more and 1200 or less, for example. The number of the dielectric layers 20 refers to the total number of dielectric layers in the inner layer portion 11, and dielectric layers in the first main surface-side outer layer portion 12 and the second main surface-side outer layer portion 13.

The plurality of internal electrode layers 30 include a plurality of first internal electrode layers 31, a plurality of second internal electrode layers 32, and a plurality of intermediate electrode layers 33. The first internal electrode layers 31 and the second internal electrode layers 32 are provided adjacent to each other with a distance in the length direction L, and the first internal electrode layers 31 and the second internal electrode layers 32, and the intermediate electrode layers 33 are alternately provided in the lamination direction T with a corresponding one of the dielectric layers 20 interposed therebetween.

The first internal electrode layers 31 extend toward the first end surface LS1 and are connected to the first external electrode 40A described later. The second internal electrode layers 32 extend toward the second end surface LS2 and are connected to the second external electrode 40B described later. The intermediate electrode layers 33 do not extend toward either the first end surface LS1 or the second end surface LS2, and is not connected to either the first external electrode 40A or the second external electrode 40B described later. The first internal electrode layers 31, the intermediate electrode layers 33, and the second internal electrode layers 32 included in the plurality of internal electrode layers 30 provide a series-connected capacitor element. Hereinafter, when it is not necessary to distinguish between the first internal electrode layers 31, the second internal electrode layers 32, and the intermediate electrode layers 33, they may be collectively referred to as the internal electrode layers 30.

As shown in FIGS. 2A and 4A, the first internal electrode layers 31 each include a first counter portion EA and a first extension portion D1. The first counter portion EA is a region opposed to the intermediate electrode layer 33 adjacent in the lamination direction T with a corresponding one of the dielectric layers 20 interposed therebetween, and is located inside the multilayer body 10. The first internal electrode layers 31 each include the first counter portion EA that is opposed to the internal electrode layers 30 provided adjacent in the lamination direction T and connected to the first extension portion D1. The first extension portion D1 is a portion which extends from the first counter portion EA toward the first end surface LS1, and is exposed at the first end surface LS1. The first internal electrode layers 31 each include the first extension portion D1 having one end portion that extends toward the first end surface LS1 and connects to the first external electrode 40A.

As shown in FIGS. 2A and 4A, the second internal electrode layers 32 each include a second counter portion EB and a second extension portion D2. The second counter portion EB is a region opposed to the intermediate electrode layer 33 adjacent in the lamination direction T with a corresponding one of the dielectric layers 20 interposed therebetween, and is located inside the multilayer body 10. The second internal electrode layers 32 each include the second counter portion EB that is opposed to the internal electrode layers 30 provided adjacent in the lamination direction T, and connected to the second extension portion D2. The second extension portion D2 is a portion extending from the second counter portion EB toward the second end surface LS2, and is exposed at the second end surface LS2. The second internal electrode layers 32 each include the second extension portion D2 having one end portion that extends toward the second end surface LS2 and connects to the second external electrode 40B.

As shown in FIGS. 2A and 4B, the intermediate electrode layers 33 each include a first electrode layer-side counter portion ECA, a second electrode layer-side counter portion ECB, and a coupling portion E0. The first electrode layer-side counter portion ECA is a region opposed to the first internal electrode layers 31 provided adjacent in the lamination direction T with a corresponding one of the dielectric layers 20 interposed therebetween, and is located inside the multilayer body 10. The second electrode layer-side counter portion ECB is a region opposed to the second internal electrode layers 32 provided adjacent in the lamination direction T with a corresponding one of the dielectric layers 20 interposed therebetween, and is located inside the multilayer body 10. The coupling portion E0 is a portion that connects the first electrode layer-side counter portion ECA and the second electrode layer-side counter portion ECB, and is provided between the first electrode layer-side counter portion ECA and the second electrode layer-side counter portion ECB.

In the multilayer ceramic capacitor 1 according to one embodiment, the end portion of each of the intermediate electrode layers 33 adjacent to the first end surface LS1 is provided spaced apart from the first end surface LS1. In the multilayer ceramic capacitor 1 according to one embodiment, the end portion of each of the intermediate electrode layers 33 adjacent to the first end surface LS1 is provided closer to the first end surface LS1 than the end portion 40AE of the first external electrode 40A described later. However, the present invention is not limited thereto, and the end portion of each of the intermediate electrode layers 33 adjacent to the first end surface LS1 may be provided closer to the second end surface LS2 than the end portion 40AE of the first external electrode 40A described later.

The end portion of each of the intermediate electrode layers 33 adjacent to the second end surface LS2 is provided spaced apart from the second end surface LS2. In the multilayer ceramic capacitor 1 according to one embodiment, the end portion of each of the intermediate electrode layers 33 adjacent to the second end surface LS2 is provided closer to the second end surface LS2 than the end portion 40BE of the second external electrode 40B described later. However, the present invention is not limited thereto, and the end portion of each of the intermediate electrode layers 33 adjacent to the second end surface LS2 may be provided closer to the first end surface LS1 than the end portion 40BE of the second external electrode 40B described later.

As shown in FIGS. 2A and 2B, in the multilayer ceramic capacitor 1 according to the first embodiment, the first internal electrode layers 31 and the second internal electrode layers 32 are provided adjacent to each other in the length direction L. In the multilayer ceramic capacitor 1 according to the first embodiment, the first internal electrode layers 31 and the second internal electrode layers 32, and the intermediate electrode layers 33 are laminated alternately with a corresponding one of the dielectric layers 20 interposed therebetween.

In one embodiment, a capacitance CAP1 (first capacitor portion) is formed by the first counter portion EA and the first electrode layer-side counter portion ECA opposing each other with the dielectric layer 20 interposed therebetween. A capacitance CAP2 (second capacitor portion) is formed by the second counter portion EB and the second electrode layer-side counter portion ECB of the intermediate electrode layer 33 including the first electrode layer-side counter portion ECA opposing each other with the dielectric layer 20 interposed therebetween. The coupling portion E0 connects the capacitance CAP1 and the capacitance CAP2 in series. The multilayer ceramic capacitor 1 of one embodiment is a multilayer ceramic capacitor 1 with a series configuration of a two-portion configuration in which two capacitor portions connected in series are provided.

The shapes of the first counter portion EA, the second counter portion EB, the first electrode layer-side counter portion ECA, and the second electrode layer-side counter portion ECB are not particularly limited, but are preferably rectangular. However, the corner portions of the rectangular shape may be rounded, or the corner portions of the rectangular shape may be formed obliquely. The shapes of the first extension portion D1 and the second extension portion D2 are not particularly limited, but are preferably rectangular. However, the corner portions of the rectangular shape may be rounded, or the corner portions of the rectangular shape may be formed obliquely. The shape of the coupling portion E0 is not particularly limited, but is preferably rectangular.

The dimension of the first counter portion EA in the width direction W and the dimension of the first extension portion D1 in the width direction W may be the same, or either one of them may be smaller. The dimension of the second counter portion EB in the width direction W and the dimension of the second extension portion D2 in the width direction W may be the same, or either one of them may be narrower. The dimensions of the first electrode layer-side counter portion ECA and the second electrode layer-side counter portion ECB in the width direction W and the dimension of the coupling portion E0 in the width direction W may be the same, or either one of them may be smaller.

The first internal electrode layers 31, the second internal electrode layers 32, and the intermediate electrode layers 33 are each made of an appropriate electrically conductive material including a metal such as, for example, Ni, Cu, Ag, Pd, and Au, and an alloy including at least one of these metals. When using an alloy, the first internal electrode layers 31, the second internal electrode layers 32, and the intermediate electrode layers 33 may be made of, for example, an Ag-Pd alloy or the like.

The thickness of each of the first internal electrode layers 31, the second internal electrode layers 32, and the intermediate electrode layers 33 is preferably, for example, 0.2 µm or more and 2.0 µm or less. The total number of the first internal electrode layers 31, the second internal electrode layers 32, and the intermediate electrode layers 33 is preferably fifteen or more and 1000 or less.

As shown in FIGS. 2A, 2B, and 3, the first main surface-side outer layer portion 12 is located adjacent to the first main surface TS1 of the multilayer body 10. The first main surface-side outer layer portion 12 includes a plurality of dielectric layers 20 located between the first main surface TS1 and the internal electrode layer 30 closest to the first main surface TS1. On the other hand, the second main surface-side outer layer portion 13 is located adjacent to the second main surface TS2 of the multilayer body 10. The second main surface-side outer layer portion 13 includes a plurality of dielectric layers 20 located between the second main surface TS2 and the internal electrode layer 30 closest to the second main surface TS2. The dielectric layers 20 used in the first main surface-side outer layer portion 12 and the second main surface-side outer layer portion 13 may be the same as the dielectric layers 20 used in the inner layer portion 11.

In addition, the multilayer body 10 includes a series capacitor forming portion 11E. The series capacitor forming portion 11E includes a portion (portion forming the capacitance CAP1) where the first counter portion EA of the first internal electrode layer 31 and the first electrode layer-side counter portion ECA of the intermediate electrode layer 33 are opposing to each other, a portion (portion forming the capacitance CAP2) where the second counter portion EB of the second internal electrode layer 32 and the second electrode layer-side counter portion ECB of the intermediate electrode layer 33 are opposing to each other, and a portion that connects the capacitance CAP1 and the capacitance CAP2 in series. The series capacitor forming portion 11E defines and functions as a portion of the inner layer portion 11. FIG. 4A and FIG. 4B each show the range of the series capacitor forming portion 11E in the width direction W and in the length direction L. The portion (first capacitor portion) forming the capacitance CAP1 and the portion (second capacitor portion) forming the capacitance CAP2 in the series capacitor forming portion 11E are also referred to as a capacitor active portion.

The multilayer body 10 includes lateral surface-side outer layer portions. The lateral surface-side outer layer portions include a first lateral surface-side outer layer portion WG1 and a second lateral surface-side outer layer portion WG2. The first lateral surface-side outer layer portion WG1 is a portion including the dielectric layers 20 located between the series capacitor forming portion 11E and the first lateral surface WS1. The second lateral surface-side outer layer portion WG2 is a portion including the dielectric layers 20 located between the series capacitor forming portion 11E and the second lateral surface WS2. FIGS. 3, 4A, and 4B each show the ranges of the first lateral surface-side outer layer portion WG1 and the second lateral surface-side outer layer portion WG2 in the width direction W. The lateral surface-side outer layer portions are also each referred to as a W gap or a side gap.

The multilayer body 10 includes end surface-side outer layer portions. The end surface-side outer layer portions include a first end surface-side outer layer portion LG1 and a second end surface-side outer layer portion LG2. The first end surface-side outer layer portion LG1 is a portion that includes the dielectric layers 20 and the first extension portion D1, and is located between the series capacitor forming portion 11E and the first end surface LS1. That is, the first end surface-side outer layer portion LG1 is an aggregate of portions of a plurality of dielectric layers 20 adjacent to the first end surface LS1 and a plurality of first extension portions D1. The second end surface-side outer layer portion LG2 is a portion that includes the dielectric layers 20 and the second extension portion D2, and is located between the series capacitor forming portion 11E and the second end surface LS2. That is, the second end surface-side outer layer portion LG2 is an aggregate of portions of a plurality of dielectric layers 20 adjacent to the second end surface LS2 and a plurality of second extension portions D2. FIGS. 2A, 2B, 4A, and 4B each show the ranges in the length direction L of the first end surface-side outer layer portion LG1 and the second end surface-side outer layer portion LG2. The end surface-side outer layer portions are also each referred to as an L gap or an end gap. The series capacitor forming portion 11E of the multilayer body 10 includes a series connection region. The series connection region is a portion that includes the dielectric layers 20 and the coupling portion E0, and is located between the portion forming the capacitance CAP1 and the portion forming the capacitance CAP2. That is, the series connection region is an aggregate of middle portions in the length direction L of a plurality of dielectric layers 20 and a plurality of coupling portions E0. The series connection region is also referred to as an intermediate gap.

As shown in FIGS. 1, 2A, and 2B, the external electrodes 40 include a first external electrode 40A provided on the first end surface LS1 of the multilayer body 10 and a second external electrode 40B provided on the second end surface LS2 of the multilayer body 10.

In addition, the basic configurations of the first external electrode 40A and the second external electrode 40B are the same or substantially same each other. Furthermore, the first external electrode 40A and the second external electrode 40B have a shape that is substantially plane symmetrical with respect to the WT cross section in the middle in the length direction L of the multilayer ceramic capacitor 1. Therefore, in the following description, when it is not necessary to distinguish between the first external electrode 40A and the second external electrode 40B, the first external electrode 40A and the second external electrode 40B may be collectively referred to as an external electrode 40.

The first external electrode 40A is provided on the first end surface LS1. The first external electrode 40A is in contact with the first extension portion D1 of each of the plurality of first internal electrode layers 31 exposed at the first end surface LS1. As a result, the first external electrode 40A is electrically connected to the plurality of first internal electrode layers 31. The first external electrode 40A may be provided on a portion of the first main surface TS1 and a portion of the second main surface TS2, and also on a portion of the first lateral surface WS1 and a portion of the second lateral surface WS2. In one embodiment, the first external electrode 40A extends from the first end surface LS1 to a portion of the first main surface TS1 and to a portion of the second main surface TS2, and to a portion of the first lateral surface WS1 and to a portion of the second lateral surface WS2.

The second external electrode 40B is provided on the second end surface LS2. The second external electrode 40B is in contact with the second extension portion D2 of each of the plurality of second internal electrode layers 32 exposed at the second end surface LS2. As a result, the second external electrode 40B is electrically connected to the plurality of second internal electrode layers 32. The second external electrode 40B may be provided on a portion of the first main surface TS1 and a portion of the second main surface TS2, and also on a portion of the first lateral surface WS1 and a portion of the second lateral surface WS2. In one embodiment, the second external electrode 40B extends from the second end surface LS2 to a portion of the first main surface TS1 and to a portion of the second main surface TS2, and to a portion of the first lateral surface WS1 and to a portion of the second lateral surface WS2.

As described above, in the multilayer body 10, the capacitance CAP1 (first capacitor portion) is generated by the first counter portion EA of the first internal electrode layer 31 and the first electrode layer-side counter portion ECA of the intermediate electrode layer 33 which are opposed to each other with the dielectric layer 20 interposed therebetween. The capacitance CAP2 (second capacitor portion) is generated by the second counter portion EB of the second internal electrode layer 32 and the second electrode layer-side counter portion ECB of the intermediate electrode layer 33 which are opposed to each other with the dielectric layer 20 interposed therebetween. The coupling portion E0 connects the capacitance CAP1 and the capacitance CAP2 in series. Therefore, characteristics of the capacitor by the series-connected capacitance are provided between the first external electrode 40A to which the first internal electrode layers 31 are connected and the second external electrode 40B to which the second internal electrode layers 32 are connected.

As shown in FIGS. 2A to 4B, the first external electrode 40A includes a first base electrode layer 50A and a first plated layer 60A provided on the first base electrode layer 50A. In addition, the second external electrode 40B includes a second base electrode layer 50B and a second plated layer 60B provided on the second base electrode layer 50B.

The first base electrode layer 50A is provided on the first end surface LS1. The first base electrode layer 50A is connected to the first extension portion D1 of each of the plurality of first internal electrode layers 31 exposed at the first end surface LS1. In one embodiment, the first base electrode layer 50A extends from the first end surface LS1 toward a portion of the first main surface TS1 and toward a portion of the second main surface TS2, and toward a portion of the first lateral surface WS1 and toward a portion of the second lateral surface WS2.

The second base electrode layer 50B is provided on the second end surface LS2. The second base electrode layer 50B is in contact with the second extension portion D2 of each of the plurality of second internal electrode layers 32 exposed at the second end surface LS2. In one embodiment, the second base electrode layer 50B extends from the second end surface LS2 toward a portion of the first main surface TS1 and toward a portion of the second main surface TS2, and toward a portion of the first lateral surface WS1 and toward a portion of the second lateral surface WS2.

The first base electrode layer 50A and the second base electrode layer 50B include at least one selected from a fired layer and a thin film layer, for example.

The first base electrode layer 50A and the second base electrode layer 50B of one embodiment are fired layers. It is preferable that the fired layers each include both a metal component, and either a glass component or a ceramic component, or both the glass component and the ceramic component. The metal component includes, for example, at least one selected from Cu, Ni, Ag, Pd, Ag-Pd alloy, Au, and the like. The glass component includes, for example, at least one selected from B, Si, Ba, Mg, Al, Li, and the like. As the ceramic component, the same type of ceramic material as that of the dielectric layer 20 may be used, or a different type of ceramic material may be used. The ceramic component includes, for example, at least one selected from BaTiO₃, CaTiO₃, (Ba, Ca)TiO₃, SrTiO₃, CaZrO₃, and the like.

The fired layer is obtained, for example, by applying an electrically conductive paste containing glass and metal to the multilayer body 10 and firing the paste. The fired layer may be obtained by co-firing a multilayer chip which is a pre-firing material of the multilayer body 10 having a plurality of internal electrodes and dielectric layers, and an electrically conductive paste applied to the multilayer chip. Alternatively, the fired layer may be formed by firing the multilayer chip to obtain the multilayer body 10, and thereafter applying the electrically conductive paste to the multilayer body 10 for firing. In the above configuration, it is preferable that the fired layer is formed by firing a material to which a ceramic material instead of glass component is added. In this case, it is particularly preferable to use, as the ceramic material to be added, the same type of ceramic material as the dielectric layer 20. Furthermore, the fired layer may include a plurality of layers.

The thickness of the first base electrode layer 50A located on the first end surface LS1 in the length direction L is preferably, for example, about 3 µm or more and about 200 µm or less in the middle of the first base electrode layer 50A in the lamination direction T and the width direction W.

The thickness of the second base electrode layer 50B located on the second end surface LS2 in the length direction L is preferably, for example, abo 3 µm or more and about 200 µm or less in the middle of the second base electrode layer 50B in the lamination direction T and the width direction W.

When providing the first base electrode layer 50A to portions of at least one of the first main surface TS1 and the second main surface TS2, the thickness in the lamination direction T of the first base electrode layer 50A provided at this portion is preferably about 3 µm or more and about 25 µm or less in the middle in the length direction L and the width direction W of the first base electrode layer 50A provided at this portion, for example.

When providing the first base electrode layer 50A to portions of at least one of the first lateral surface WS1 and the second lateral surface WS2, the thickness in the width direction W of the first base electrode layer 50A provided at this portion is preferably about 3 µm or more and about 25 µm or less in the middle in the length direction L and the lamination direction T of the first base electrode layer 50A provided at this portion, for example.

When providing the second base electrode layer 50B to portions of at least one of the first main surface TS1 and the second main surface TS2, the thickness in the lamination direction T of the second base electrode layer 50B provided at this portion is preferably about 3 µm or more and about 25 µm or less in the middle in the length direction L and the width direction W of the second base electrode layer 50B provided at this portion, for example.

When providing the second base electrode layer 50B to portions of at least one of the first lateral surface WS1 and the second lateral surface WS2, the thickness in the width direction W of the second base electrode layer 50B provided at this portion is preferably about 3 µm or more and about 25 µm or less in the middle in the length direction L and the lamination direction T of the second base electrode layer 50B provided at this portion, for example.

In one embodiment, each of the first base electrode layer 50A and the second base electrode layer 50B may be a thin film layer. The thin film layer is a layer on which metal particles are deposited.

In a case in which the first base electrode layer 50A and the second base electrode layer 50B are formed as thin film layers, they are preferably formed by a thin film forming method such as a sputtering method or a deposition method. Here, an electrode formed by using a sputtering method (sputtered electrode) will be described.

The first base electrode layer 50A according to one embodiment may be composed of a first thin film layer formed by a sputtered electrode. The second base electrode layer 50B may be composed of a second thin film layer formed by a sputtered electrode. When the base electrode layer is formed by a sputtered electrode, it is preferable to form the sputtered electrode directly on at least one of the first main surface TS1 and the second main surface TS2 of the multilayer body 10. The first thin film layer formed by the sputtered electrode is located on a portion of the first main surface TS1 adjacent to the first lateral surface WS1. The second thin film layer formed by the sputtered electrode is located on a portion of the first main surface TS1 adjacent to the second lateral surface WS2.

The thin film layer formed by the sputtered electrode preferably includes at least one metal selected from the group including, for example, Mg, Al, Ti, W, Cr, Cu, Ni, Ag, Co, Mo and V. Thus, it is possible to increase the adhesion of the external electrode 40 to the multilayer body 10. The thin film layer may be a single layer or may include a plurality of layers. For example, the thin film layer may include a two-layer configuration including a layer of Ni-Cr alloy and a layer of Ni-Cu alloy.

The first plated layer 60A covers the first base electrode layer 50A.

The second plated layer 60B covers the second base electrode layer 50B.

The first plated layer 60A and the second plated layer 60B may each include at least one selected from Cu, Ni, Sn, Ag, Pd, a Ag-Pd alloy, Au, and the like. The first plated layer 60A and the second plated layer 60B may each include a plurality of layers. The first plated layer 60A and the second plated layer 60B each preferably include a two-layer configuration including a Sn plated layer on a Ni plated layer.

In one embodiment, the first plated layer 60A includes a first Ni plated layer 61A, and a first Sn plated layer 62A provided on the first Ni plated layer 61A.

In one embodiment, the second plated layer 60B includes a second Ni plated layer 61B, and a second Sn plated layer 62B provided on the second Ni plated layer 61B.

The Ni plated layer prevents the first base electrode layer 50A and the second base electrode layer 50B from being eroded by solder when mounting the multilayer ceramic capacitor 1. Furthermore, the Sn plated layer improves the wettability of the solder when mounting the multilayer ceramic capacitor 1. This facilitates the mounting of the multilayer ceramic capacitor 1. The thickness of each of the first Ni plated layer 61A, the first Sn plated layer 62A, the second Ni plated layer 61B, and the second Sn plated layer 62B is preferably 2 µm or more and 10 µm or less.

The external electrode 40 of one embodiment may include an electrically conductive resin layer including electrically conductive particles and a thermosetting resin, for example. The electrically conductive resin layer may cover the fired layer. When the electrically conductive resin layer covers the fired layer, the electrically conductive resin layer is provided between the fired layer and the plated layers (the first plated layer 60A and the second plated layer 60B). The electrically conductive resin layer may completely cover the fired layer or may partially cover the fired layer.

The electrically conductive resin layer including a thermosetting resin is more flexible than an electrically conductive layer made of, for example, a plating film or a fired product of an electrically conductive paste. Therefore, even when an impact caused by physical shock or thermal cycling is applied to the multilayer ceramic capacitor 1, the electrically conductive resin layer defines and functions as a buffer layer. Therefore, the electrically conductive resin layer reduces or prevents the occurrence of cracking in the multilayer ceramic capacitor 1.

Metals of the electrically conductive particles may be, for example, Ag, Cu, Ni, Sn, Bi or alloys including them. The electrically conductive particle preferably includes Ag, for example. The electrically conductive particle is a metal powder of Ag, for example. Ag is suitable as an electrode material because of its lowest resistivity among metals. In addition, since Ag is a noble metal, it is not likely to be oxidized, and weatherability thereof is high. Therefore, the metal powder of Ag is suitable as the electrically conductive particle.

Furthermore, the electrically conductive particle may be a metal powder coated on the surface of the metal powder with Ag. When using these coated with Ag on the surface of the metal powder, the metal powder is preferably Cu, Ni, Sn, Bi, or an alloy powder thereof. In order to make the metal of the base material inexpensive while keeping the characteristics of Ag, it is preferable to use a metal powder coated with Ag.

Furthermore, the electrically conductive particle may be formed by subjecting Cu and Ni to an oxidation prevention treatment. Furthermore, the electrically conductive particle may be a metal powder coated with Sn, Ni, and Cu on the surface of the metal powder. When using those coated with Sn, Ni, and Cu on the surface of the metal powder, the metal powder is preferably Ag, Cu, Ni, Sn, Bi, or an alloy powder thereof.

The shape of the electrically conductive particle is not particularly limited. For the electrically conductive particle, a spherical metal powder, a flat metal powder, or the like can be used. However, it is preferable to use a mixture of a spherical metal powder and a flat metal powder.

The electrically conductive particles included in the electrically conductive resin layer mainly maintain the electrical conductivity of the electrically conductive resin layer. Specifically, by a plurality of electrically conductive particles being in contact with each other, an energization path is provided inside the electrically conductive resin layer.

The resin of the electrically conductive resin layer may include, for example, at least one selected from a variety of known thermosetting resins such as epoxy resin, phenolic resin, urethane resin, silicone resin, polyimide resin, and the like. Among those, epoxy resin is excellent in heat resistance, moisture resistance, adhesion, etc., and thus is one of the most preferable resins. Furthermore, it is preferable that the resin of the electrically conductive resin layer include a curing agent together with a thermosetting resin. When epoxy resin is used as a base resin, the curing agent for the epoxy resin may be various known compounds such as phenols, amines, acid anhydrides, imidazoles, active esters, and amideimides.

The electrically conductive resin layer may include a plurality of layers. The thickest portion of the electrically conductive resin layer is preferably 10 µm or more and 150 µm or less.

The first plated layer 60A and the second plated layer 60B may be provided directly on the multilayer body 10 without providing the first base electrode layer 50A and the second base electrode layer 50B. That is, the multilayer ceramic capacitor 1 may include the plated layer that is directly electrically connected to the first internal electrode layer 31 and the second internal electrode layer 32. In such a case, the plated layer may be provided after the catalyst is provided on the surface of the multilayer body 10 as a pretreatment.

Also in this case, the plated layer preferably includes a plurality of layers. The lower plated layer and the upper plated layer preferably include, respectively, at least one metal selected from Cu, Ni, Sn, Pb, Au, Ag, Pd, Bi or Zn, for example, or an alloy containing these metals, for example. It is more preferable that the lower plated layer is provided using Ni with solder barrier performance. It is more preferable that the upper plated layer is provided using Sn or Au with favorable solder wettability. For example, when the first internal electrode layer 31 and the second internal electrode layer 32 are provided using Ni, it is preferable that the lower plated layer is provided using Cu with a good bonding property with Ni. The upper plated layer may be provided as necessary. The external electrode 40 may include only the lower plated layer. The plated layer may include the upper plated layer as an outermost layer. Furthermore, another plated layer may be provided on the surface of the upper plated layer.

The thickness per layer of the plated layer without the base electrode layer is preferably 2 µm or more and 10 µm or less. The plated layer preferably does not include glass. The metal ratio per unit volume of the plated layer is preferably 99% by volume or more.

When the plated layer is provided directly on the multilayer body 10, it is possible to reduce the thickness of the base electrode layer. Therefore, it is possible to reduce the dimension in the height direction T of the multilayer ceramic capacitor 1 in proportion to the amount reducing the thickness of the base electrode layer. As a result, it is possible to reduce the height of the multilayer ceramic capacitor 1. Alternatively, it is possible to increase the thickness of the dielectric layer 20 sandwiched between the first internal electrode layer 31, the second internal electrode layer 32, and the intermediate electrode layer 33 in proportion to the amount reducing the thickness of the base electrode layer. As a result, it is possible to improve the thickness of the element body. Thus, by providing the plated layer directly on the multilayer body 10, it is possible to improve the design freedom of the multilayer ceramic capacitor.

The basic configuration of the multilayer ceramic capacitor 1 according to the embodiment is described as above. When the dimension in the length direction of the multilayer ceramic capacitor 1 including the multilayer body 10 and the external electrodes 40 is defined as the L dimension, the L dimension is preferably 0.2 mm or more and 6 mm or less. Furthermore, when the dimension in the lamination direction of the multilayer ceramic capacitor 1 is defined as the T dimension, the T dimension is preferably 0.05 mm or more and 5 mm or less. Moreover, when the dimension in the width direction of the multilayer ceramic capacitor 1 is defined as the W dimension, the W dimension is preferably 0.1 mm or more and 5 mm or less.

Here, the inventor of the present application has found from rigorous studies, experiments, and simulations that, in order to increase the capacitance without increasing the size of the multilayer ceramic capacitor, it is desirable to appropriately set the dimensions and coverage of each configuration included in the multilayer ceramic capacitor. In addition to the metal material, although the internal electrode layer 30 includes hollow portions where the metal material does not exist, the ratio or proportion of internal electrode layer 30 occupied by the metal material will be described as coverage. The coverage is also referred to as a coverage ratio of the internal electrode layer 30 relative to the dielectric layer 20. A ceramic component such as a dielectric or a glass component such as silica may be present in the hollow portions where the metal material does not exist. Alternatively, the hollow portions where the metal material does not exist may be voids. Hereinafter, one embodiment will be described in detail with reference to FIGS. 1 to 7.

As shown in FIGS. 2A to 3, the inner layer portion 11 includes a first main surface-side inner layer portion 112, a second main surface-side inner layer portion 113, and a middle inner layer portion 111 provided between the first main surface-side inner layer portion 112 and the second main surface-side inner layer portion 113. In addition, as described above, FIGS. 2A to 3 are schematic diagrams each with a reduced number of internal electrode layers 30 for convenience of explanation.

The first main surface-side inner layer portion 112 is a portion of the inner layer portion 11 adjacent to the first main surface TS1. The first main surface-side inner layer portion 112 is, for example, a portion of the inner layer portion 11 adjacent to the first main surface TS1, and includes at least the internal electrode layers 30 from the internal electrode layer 30 closest to the first main surface TS1 to the fifth internal electrode layer 30 therefrom. The first main surface-side inner layer portion 112 is, for example, a portion occupying 250 of the inner layer portion 11 adjacent to the first main surface TS1 in the lamination direction.

The second main surface-side inner layer portion 113 is a portion of the inner layer portion 11 adjacent to the second main surface TS2. The second main surface-side inner layer portion 113 is, for example, a portion of the inner layer portion 11 adjacent to the second main surface TS2, and includes at least the internal electrode layers 30 from the internal electrode layer 30 closest to the second main surface TS2 to the fifth internal electrode layer 30 therefrom. The second main surface-side inner layer portion 113 is, for example, a portion occupying 25% of the inner layer portion 11 adjacent to the second main surface TS2 in the lamination direction.

The middle inner layer portion 111 is a portion of the inner layer portion 11 in the middle in the lamination direction T of the multilayer body 10. The middle inner layer portion 111 is, for example, a portion including at least the internal electrode layers 30 provided in the middle region of the multilayer body in the lamination direction T. The thicknesses of the middle inner layer portion 111, the first main surface-side inner layer portion 112, and the second main surface-side inner layer portion 113 in the lamination direction T change along the length direction L in accordance with the shape of the internal electrode layers 30.

As shown in FIGS. 3 to 4B, the series capacitor forming portion 11E of the inner layer portion 11 includes a first lateral surface-side region 112E, a second lateral surface-side region 113E, and a middle region 111E.

The first lateral surface-side region 112E is a portion of the series capacitor forming portion 11E adjacent to the first lateral surface WS1. The first lateral surface-side region 112E is, for example, a portion occupying 25% of the series capacitor forming portion 11E adjacent to the first lateral surface WS1 in the width direction W. The first lateral surface-side region 112E includes a region overlapping a portion of each of the first main surface-side inner layer portion 112, the second main surface-side inner layer portion 113, and the middle inner layer portion 111.

The second lateral surface-side region 113E is a portion of the series capacitor forming portion 11E adjacent to the second lateral surface WS2. The second lateral surface-side region 113E is, for example, a portion occupying 25% of the series capacitor forming portion 11E adjacent to the second lateral surface WS2 in the width direction W. The second lateral surface-side region 113E includes a region overlapping a portion of each of the first main surface-side inner layer portion 112, the second main surface-side inner layer portion 113, and the middle inner layer portion 111.

The middle region 111E is provided between the first lateral surface-side region 112E and the second lateral surface-side region 113E. The middle region 111E is a portion including the middle region in the width direction W of the series capacitor forming portion 11E in the width direction W. The middle region 111E includes a region overlapping a portion of each of the first main surface-side inner layer portion 112, the second main surface-side inner layer portion 113, and the middle inner layer portion 111.

Next, details of the internal electrode layers 30 will be described with reference to FIGS. 2A to 4B.

As shown in FIGS. 2C and 4A, the first counter portion EA of the first internal electrode layer 31 includes a first region EA1 and a second region EA2. The first region EA1 is a region of the first counter portion EA adjacent to the first end surface LS1. The second region EA2 is a region of the first counter portion EA adjacent to the second end surface LS2. The second region EA2 has higher coverage than the first region EA1. Also, as shown in FIG. 2C, the second region EA2 is thicker in the lamination direction T than the first region EA1, and is provided to be biased more toward the outside of the multilayer body 10 than the first region EA1.

Specifically, in the first main surface-side inner layer portion 112, the second region EA2 of the first internal electrode layer 31 is provided to be biased more toward the first main surface TS1 of the multilayer body 10 than the first region EA1. Further, in one embodiment, in the second main surface-side inner layer portion 113, the second region EA2 of the first internal electrode layer 31 is provided to be biased more toward the second main surface TS2 of the multilayer body 10 than the first region EA1. In at least one of the first main surface-side inner layer portion 112 or the second main surface-side inner layer portion 113, the second region EA2 may be provided to be biased more toward the outside of the multilayer body 10 than the first region EA1.

As shown in FIGS. 2C and 4A, the second counter portion EB of the second internal electrode layer 32 includes a third region EB1 and a fourth region EB2. The third region EB1 is a region of the second counter portion EB adjacent to the second end surface LS2. The fourth region EB2 is a region of the second counter portion EB adjacent to the first end surface LS1. The fourth region EB2 has higher coverage than the third region EB1. Also, as shown in FIG. 2C, the fourth region EB2 is thicker in the lamination direction T than the third region EB1, and is provided to be biased more toward the outside of the multilayer body 10 than the third region EB1.

Specifically, in the first main surface-side inner layer portion 112, the fourth region EB2 of the second internal electrode layer 32 is provided to be biased more toward the first main surface TS1 of the multilayer body 10 than the third region EB1. In addition, in one embodiment, in the second main surface-side inner layer portion 113, the fourth region EB2 of the second internal electrode layer 32 is provided to be biased more toward the second main surface TS2 of the multilayer body 10 than the third region EB1. In at least one of the first main surface-side inner layer portion 112 or the second main surface-side inner layer portion 113, the fourth region EB2 may be provided to be biased more toward the outside of the multilayer body 10 than the third region EB1.

In one embodiment, as shown in FIGS. 2C and 4B, the first electrode layer-side counter portion ECA of the intermediate electrode layer 33 includes a fifth region ECA1 and a sixth region ECA2. The fifth region ECA1 is a region of the first electrode layer-side counter portion ECA adjacent to the first end surface LS1. The sixth region ECA2 is a region of the first electrode layer-side counter portion ECA adjacent to the second end surface LS2.

The sixth region ECA2 has higher coverage than the fifth region ECA1. Also, as shown in FIG. 2C, the sixth region ECA2 is thicker in the lamination direction T than the fifth region ECA1, and is provided to be biased more toward the outside of the multilayer body 10 than the fifth region ECA1.

Specifically, in the first main surface-side inner layer portion 112, the sixth region ECA2 of the intermediate electrode layer 33 is provided to be biased more toward the first main surface TS1 of the multilayer body 10 than the fifth region ECA1 of the intermediate electrode layer 33. Further, in one embodiment, in the second main surface-side inner layer portion 113, the sixth region ECA2 of the intermediate electrode layer 33 is provided to be biased more toward the second main surface TS2 of the multilayer body 10 than the fifth region ECA1 of the intermediate electrode layer 33.

In one embodiment, as shown in FIGS. 2C and 4B, the second electrode layer-side counter portion ECB of the intermediate electrode layer 33 includes a seventh region ECB1 and an eighth region ECB2. The seventh region ECB1 is a region of the second electrode layer-side counter portion ECB adjacent to the second end surface LS2. The eighth region ECB2 is a region of the second electrode layer-side counter portion ECB adjacent to the first end surface LS1.

The eighth region ECB2 has higher coverage than the seventh region ECB1. Also, as shown in FIG. 2C, the eighth region ECB2 is thicker in the lamination direction T than the seventh region ECB1, and is provided to be biased more toward the outside of the multilayer body 10 than the seventh region ECB1.

Specifically, in the first main surface-side inner layer portion 112, the eighth region ECB2 of the intermediate electrode layer 33 is provided to be biased more toward the first main surface TS1 of the multilayer body 10 than the seventh region ECB1 of the intermediate electrode layer 33. Further, in one embodiment, in the second main surface-side inner layer portion 113, the eighth region ECB2 of the intermediate electrode layer 33 is provided to be biased more toward the second main surface TS2 of the multilayer body 10 than the seventh region ECB1 of the intermediate electrode layer 33.

Also, the coverage of at least a portion of the intermediate electrode layer 33 is higher than the coverage of the region adjacent to the first end surface LS1 of the first counter portion EA of the first internal electrode layer 31, and higher than the coverage of the region adjacent to the second end surface LS2 of the second counter portion EB of the second internal electrode layer 32.

In one embodiment, the sixth region ECA2 of the intermediate electrode layer 33 has higher coverage than the first region EA1 of the first internal electrode layer 31. Also, as shown in FIG. 2C, the sixth region ECA2 of the intermediate electrode layer 33 is thicker in the lamination direction T than the first region EA1 of the first internal electrode layer 31.

In one embodiment, the eighth region ECB2 of the intermediate electrode layer 33 has higher coverage than the third region EB1 of the second internal electrode layer 32. Also, as shown in FIG. 2C, the eighth region ECB2 of the intermediate electrode layer 33 is thicker in the lamination direction T than the third region EB1 of the second internal electrode layer 32.

In one embodiment, the coverage of the second region EA2 of the first counter portion EA of the first internal electrode layer 31 is higher than the coverage of the fifth region ECA1 of the first electrode layer-side counter portion ECA of the intermediate electrode layer 33. As shown in FIG. 2C, the second region EA2 of the first counter portion EA of the first internal electrode layer 31 is thicker in the lamination direction T than the fifth region ECA1 of the first electrode layer-side counter portion ECA of the intermediate electrode layer 33.

Also, the coverage of the fourth region EB2 of the second counter portion EB of the second internal electrode layer 32 is higher than the coverage of the seventh region ECB1 of the second electrode layer-side counter portion ECB of the intermediate electrode layer 33. As shown in FIG. 2C, the fourth region EB2 of the second counter portion EB of the second internal electrode layer 32 is thicker in the lamination direction T than the seventh region ECB1 of the second electrode layer-side counter portion ECB of the intermediate electrode layer 33.

Therefore, in the multilayer ceramic capacitor 1 according to one embodiment, as shown in FIG. 2C, high coverage regions functioning as high coverage portions with higher coverage, such as the second region EA2, the fourth region EB2, the sixth region ECA2, and the eighth region ECB2 described above, are provided.

With such a configuration, it is possible to increase the thickness of the internal electrode layers 30 in the second region EA2 of the first internal electrode layer 31, the fourth region EB2 of the second internal electrode layer 32, the sixth region ECA2 of the intermediate electrode layer 33, and the eighth region ECB2 of the intermediate electrode layer 33 and increase the coverage, thereby increasing the capacitance, while reducing or preventing an increase in size of the multilayer ceramic capacitor 1. Preferably, the thickness of the coupling portion E0 of the intermediate electrode layer 33 is the same as the thickness of the sixth region ECA2 and the eighth region ECB2 of the intermediate electrode layer 33. With such a configuration, it is possible to connect the capacitance CAP1 and the capacitance CAP2 in series with higher reliability. This also facilitates manufacturing. However, the present invention is not limited thereto.

The second region EA2 is preferably parallel or substantially parallel to a plane orthogonal or substantially orthogonal to the lamination direction T. The first region EA1 and the second region EA2 preferably include portions that are parallel or substantially parallel to each other. More preferably, the first region EA1 and the second region EA2 include portions that are parallel or substantially parallel to a surface orthogonal or substantially orthogonal to the lamination direction T.

The fourth region EB2 is preferably parallel or substantially parallel to a plane orthogonal or substantially orthogonal to the lamination direction T. The third region EB1 and the fourth region EB2 preferably include portions that are parallel or substantially parallel to each other. More preferably, the third region EB1 and the fourth region EB2 include portions that are parallel or substantially parallel to a plane orthogonal or substantially orthogonal to the lamination direction T.

The sixth region ECA2 is preferably parallel or substantially parallel to a plane orthogonal or substantially orthogonal to the lamination direction T. The fifth region ECA1 and the sixth region ECA2 preferably include portions that are parallel or substantially parallel to each other. More preferably, the fifth region ECA1 and the sixth region ECA2 include portions that are parallel or substantially parallel to a plane orthogonal or substantially orthogonal to the lamination direction T.

The sixth region ECA2 preferably has a portion that is substantially parallel to the first region EA1 and the second region EA2. More preferably, the sixth region ECA2, the first region EA1, and the second region EA2 have portions that are substantially parallel to a plane orthogonal to the lamination direction T.

The eighth region ECB2 is preferably substantially parallel to a plane orthogonal to the lamination direction T. The seventh region ECB1 and the eighth region ECB2 preferably have portions that are substantially parallel to each other. More preferably, the seventh region ECB1 and the eighth region ECB2 have portions that are substantially parallel to a plane orthogonal to the lamination direction T.

The eighth region ECB2 preferably has a portion that is substantially parallel to the third region EB1 and the fourth region EB2. More preferably, the eighth region ECB2, the third region EB1, and the fourth region EB2 have portions that are substantially parallel to a plane orthogonal to the lamination direction T.

The fifth region ECA1, the sixth region ECA2, the seventh region ECB1, and the eighth region ECB2 preferably have portions that are substantially parallel to each other. More preferably, the fifth region ECA1, the sixth region ECA2, the seventh region ECB1, and the eighth region ECB2 have portions that are substantially parallel to a plane orthogonal to the lamination direction T.

With such a configuration, it is possible to reduce or prevent the formation of a portion having a locally large size in the multilayer ceramic capacitor 1, and it is possible to increase the capacitance without increasing the size of the multilayer ceramic capacitor 1.

In the length direction L, the distance Le0 from the end of the second region EA2 adjacent to the first end surface LS1 to the end of the fourth region EB2 adjacent to the second end surface LS2 is shorter than the distance L1 between the first external electrode 40A and the second external electrode 40B. In addition, in the length direction L, the distance Le0 from the end of the sixth region ECA2 adjacent to the first end surface LS1 to the end of the eighth region ECB2 adjacent to the second end surface LS2 is shorter than the distance L1 between the first external electrode 40A and the second external electrode 40B.

In the length direction L, the distance Le0 from the end of the second region EA2 adjacent to the first end surface LS1 to the end of the fourth region EB2 adjacent to the second end surface LS2 and the distance Le0 from the end of the sixth region ECA2 adjacent to the first end surface LS1 to the end of the eighth region ECB2 adjacent to the second end surface LS2 are preferably substantially equal to each other, but the present invention is not limited thereto. In the length direction L, the second region EA2, the fourth region EB2, the sixth region ECA2, and the eighth region ECB2 are preferably provided within the range of the distance L1 between the first external electrode 40A and the second external electrode 40B.

In the length direction L, the end portions of the second region EA2 and the sixth region ECA2 adjacent to the first end surface LS1 are provided closer to the second end surface LS2 than the end portions 40AE of the first external electrode 40A provided on the first main surface TS1 and the second main surface TS2 adjacent to the middle of the multilayer body. In the length direction L, the end portions of the fourth region EB2 and the eighth region ECB2 adjacent to the second end surface LS2 are provided closer to the first end surface LS1 than the end portions 40BE of the second external electrode 40B provided on the first main surface TS1 and the second main surface TS2 adjacent to the middle of the multilayer body.

With such a configuration, it is possible to increase the thickness of each of the internal electrode layers 30 in the second region EA2, the fourth region EB2, the sixth region ECA2, and the eighth region ECB2, and increase the coverage, thereby increasing the capacitance, while reducing or preventing an increase in size of the multilayer ceramic capacitor 1.

In the length direction L, the end portions (left ends of the EA1 and ECA1 regions in FIG. 2C) of the first region EA1 and the fifth region ECA1 adjacent to the first end surface LS1 are provided closer to the first end surface LS1 than the end portions 40AE of the first external electrode 40A provided on the first main surface TS1 and the second main surface TS2 adjacent to the middle of the multilayer body. In the length direction L, the end portions (right ends of the EB1 and ECB1 regions in FIG. 2C) of the third region EB1 and the seventh region ECB1 adjacent to the second end surface LS2 are provided closer to the second end surface LS2 than the end portions 40BE of the second external electrode 40B provided on the first main surface TS1 and the second main surface TS2 adjacent to the middle of the multilayer body.

With such a configuration, it is possible to secure a large area for the series capacitor forming portion 11E and to increase the capacitance, while reducing or preventing an increase in size of the multilayer ceramic capacitor 1.

The thickness in the lamination direction T of the second region EA2 of the first internal electrode layer 31 is, as described above, thicker than the thickness in the lamination direction T of the first region EA1.

For example, the thickness of the second region EA2 is preferably 101% or more and 111% or less of the thickness of the first region EA1. The thickness of the second region EA2 may be 101% or more and 110% or less of the thickness of the first region EA1, and is more preferably 102% or more and 110% or less. For example, the thickness of the second region EA2 is even more preferably 103% or more and 110% or less of the thickness of the first region EA1.

The thickness in the lamination direction T of the fourth region EB2 of the second internal electrode layer 32 is, as described above, thicker than the thickness in the lamination direction T of the third region EB1.

For example, the thickness of the fourth region EB2 is preferably 101% or more and 111% or less of the thickness of the third region EB1. The thickness of the fourth region EB2 may be 101% or more and 110% or less of the thickness of the third region EB1, and is more preferably 102% or more and 110% or less. For example, the thickness of the fourth region EB2 is even more preferably 103% or more and 110% or less of the thickness of the third region EB1.

The thickness in the lamination direction T of the sixth region ECA2 of the intermediate electrode layer 33 is, as described above, thicker than the thickness in the lamination direction T of the fifth region ECA1.

For example, the thickness of the sixth region ECA2 is preferably 101% or more and 111% or less of the thickness of the fifth region ECA1. The thickness of the sixth region ECA2 may be 101% or more and 110% or less of the thickness of the fifth region ECA1, and is more preferably 102% or more and 110% or less. For example, the thickness of the sixth region ECA2 is even more preferably 103% or more and 110% or less of the thickness of the fifth region ECA1.

The thickness in the lamination direction T of the eighth region ECB2 of the intermediate electrode layer 33 is, as described above, thicker than the thickness in the lamination direction T of the seventh region ECB1.

For example, the thickness of the eighth region ECB2 is preferably 101% or more and 111% or less of the thickness of the seventh region ECB1. The thickness of the eighth region ECB2 may be 101% or more and 110% or less of the thickness of the seventh region ECB1, and is more preferably 102% or more and 110% or less. For example, the thickness of the eighth region ECB2 is even more preferably 103% or more and 110% or less of the thickness of the seventh region ECB1.

To summarize the first internal electrode layer 31, the second internal electrode layer 32, and the intermediate electrode layer 33, the thicknesses of the second region EA2, the fourth region EB2, the sixth region ECA2, and the eighth region ECB2 are thicker than the thicknesses of the first region EA1, the third region EB1, the fifth region ECA1, and the seventh region ECB1. The thicknesses of the second region EA2, the fourth region EB2, the sixth region ECA2, and the eighth region ECB2 are preferably 101% or more and 111% or less of the thicknesses of the first region EA1, the third region EB1, the fifth region ECA1, and the seventh region ECB1.

The thickness of the second region EA2, the fourth region EB2, the sixth region ECA2, and the eighth region ECB2 may be 101% or more and 110% or less of the thickness of the first region EA1, the third region EB1, the fifth region ECA1, and the seventh region ECB1, and is more preferably 102% or more and 110% or less. For example, the thickness of the second region EA2, the fourth region EB2, the sixth region ECA2, and the eighth region ECB2 is even more preferably 103% or more and 110% or less of the thickness of the first region EA1, the third region EB1, the fifth region ECA1, and the seventh region ECB1.

The thickness in the lamination direction T of the second region EA2 of the first counter portion EA of the first internal electrode layer 31 is thicker than the thickness of the first extension portion D1.

For example, the thickness of the second region EA2 is preferably 101% or more and 111% or less of the thickness of the first extension portion D1. For example, the thickness of the second region EA2 may be 101% or more and 110% or less of the thickness of the first extension portion D1, and is more preferably 102% or more and 110% or less. For example, the thickness of the second region EA2 is even more preferably 103% or more and 110% or less of the thickness of the first extension portion D1.

The thickness in the lamination direction T of the fourth region EB2 of the second counter portion EB of the second internal electrode layer 32 is thicker than the thickness of the second extension portion D2.

For example, the thickness of the fourth region EB2 is preferably 101% or more and 111% or less of the thickness of the second extension portion D2. For example, the thickness of the fourth region EB2 may be 101% or more and 110% or less of the thickness of the second extension portion D2, and is more preferably 102% or more and 110% or less. For example, the thickness of the fourth region EB2 is even more preferably 103% or more and 110% or less of the thickness of the second extension portion D2.

The coverage of the second region EA2 is higher than the coverage of the first region EA1.

The difference between the coverage of the second region EA2 and the coverage of the first region EA1 is preferably 2 percentage points or more. In addition, the difference between the coverage of the second region EA2 and the coverage of the first region EA1 is preferably 2 percentage points or more and 11 percentage points or less.

The difference between the coverage of the second region EA2 and the coverage of the first region EA1 is more preferably 3 percentage points or more and 11 percentage points or less, and a further enhanced effect can be expected. In addition, the difference between the coverage of the second region EA2 and the coverage of the first region EA1 is further preferably 4 percentage points or more and 11 percentage points or less.

The coverage of the fourth region EB2 is higher than the coverage of the third region EB1.

The difference between the coverage of the fourth region EB2 and the coverage of the third region EB1 is preferably 2 percentage points or more. In addition, the difference between the coverage of the fourth region EB2 and the coverage of the third region EB1 is preferably 2 percentage points or more and 11 percentage points or less.

The difference between the coverage of the fourth region EB2 and the coverage of the third region EB1 is more preferably 3 percentage points or more and 11 percentage points or less, and further enhanced effects can be expected. In addition, the difference between the coverage of the fourth region EB2 and the coverage of the third region EB1 is further preferably 4 percentage points or more and 11 percentage points or less.

The coverage of the sixth region ECA2 is higher than the coverage of the fifth region ECA1.

The difference between the coverage of the sixth region ECA2 and the coverage of the fifth region ECA1 is preferably 2 percentage points or more. In addition, the difference between the coverage of the sixth region ECA2 and the coverage of the fifth region ECA1 is preferably 2 percentage points or more and 11 percentage points or less.

The difference between the coverage of the sixth region ECA2 and the coverage of the fifth region ECA1 is more preferably 3 percentage points or more and 11 percentage points or less, and further enhanced effects can be expected. In addition, the difference between the coverage of the sixth region ECA2 and the coverage of the fifth region ECA1 is further preferably 4 percentage points or more and 11 percentage points or less.

The coverage of the eighth region ECB2 is higher than the coverage of the seventh region ECB1.

The difference between the coverage of the eighth region ECB2 and the coverage of the seventh region ECB1 is preferably 2 percentage points or more. In addition, the difference between the coverage of the eighth region ECB2 and the coverage of the seventh region ECB1 is preferably 2 percentage points or more and 11 percentage points or less.

The difference between the coverage of the eighth region ECB2 and the coverage of the seventh region ECB1 is more preferably 3 percentage points or more and 11 percentage points or less, and further enhanced effects can be expected. In addition, the difference between the coverage of the eighth region ECB2 and the coverage of the seventh region ECB1 is further preferably 4 percentage points or more and 11 percentage points or less.

To summarize the first internal electrode layer 31, the second internal electrode layer 32, and the intermediate electrode layer 33, the coverage of the second region EA2, the fourth region EB2, the sixth region ECA2, and the eighth region ECB2 is higher than the coverage of the first region EA1, the third region EB1, the fifth region ECA1, and the seventh region ECB1. The coverage of the second region EA2, the fourth region EB2, the sixth region ECA2, and the eighth region ECB2 is preferably 2 percentage points or more higher than the coverage of the first region EA1, the third region EB1, the fifth region ECA1, and the seventh region ECB1.

In addition, the difference between the coverage of the second region EA2, the fourth region EB2, the sixth region ECA2, and the eighth region ECB2, and the coverage of the first region EA1, the third region EB1, the fifth region ECA1, and the seventh region ECB1 is preferably 2 percentage points or more and 11 percentage points or less. The difference between the coverage of the second region EA2, the fourth region EB2, the sixth region ECA2, and the eighth region ECB2, and the coverage of the first region EA1, the third region EB1, the fifth region ECA1, and the seventh region ECB1 is more preferably 3 percentage points or more and 11 percentage points or less, and further enhanced effects can be expected. In addition, the difference between the coverage of the second region EA2, the fourth region EB2, the sixth region ECA2, and the eighth region ECB2, and the coverage of the first region EA1, the third region EB1, the fifth region ECA1, and the seventh region ECB1 is even more preferably 4 percentage points or more and 11 percentage points or less.

With such a configuration, it is possible to increase the thickness of each of the internal electrode layers 30 in the second region EA2, the fourth region EB2, the sixth region ECA2, and the eighth region ECB2, thereby sufficiently increasing the coverage, such that it is possible to further increase the capacitance without increasing the size of the multilayer ceramic capacitor 1.

The plurality of internal electrode layers 30 further include sloped portions. For example, the first counter portion EA of the first internal electrode layer 31 includes, as shown in FIG. 2B, a first sloped portion FA1 connecting the first region EA1 and the second region EA2.

The second counter portion EB of the second internal electrode layer 32 includes, as shown in FIGS. 2B and 2C, a second sloped portion FB1 connecting the third region EB1 and the fourth region EB2.

The first electrode layer-side counter portion ECA of the intermediate electrode layer 33 includes, as shown in FIGS. 2B and 2C, a third sloped portion FCA1 connecting the fifth region ECA1 and the sixth region ECA2. The second electrode layer-side counter portion ECB of the intermediate electrode layer 33 includes, as shown in FIG. 2B, a fourth sloped portion FCB1 connecting the seventh region ECB1 and the eighth region ECB2.

With such a configuration, it is possible to increase the thickness of each of the internal electrode layers 30 in the second region EA2, the fourth region EB2, the sixth region ECA2, and the eighth region ECB2 and increase the coverage, thereby increasing the capacitance, while reducing or preventing an increase in size of the multilayer ceramic capacitor 1.

The distance Le3 in the length direction L of the first sloped portion FA1 and the distance Le4 in the length direction L of the second sloped portion FB1 are shorter than the distance Le0 from the end of the second region EA2 adjacent to the first end surface LS1 in the length direction L to the end of the fourth region EB2 adjacent to the second end surface LS2 in the length direction L. Further, the distance Le3 in the length direction L of the third sloped portion FCA1 and the distance Le4 in the length direction L of the fourth sloped portion FCB1 are shorter than the distance Le0 from the end of the sixth region ECA2 adjacent to the first end surface LS1 in the length direction L to the end of the eighth region ECB2 adjacent to the second end surface LS2 in the length direction L.

With such a configuration, it is possible to maintain the areas of the second region EA2, the fourth region EB2, the sixth region ECA2, and the eighth region ECB2 having high coverage. Therefore, it is possible to further increase the capacitance without increasing the size of the multilayer ceramic capacitor 1.

Further, the distance Le1 in the length direction L of the first region EA1 and the distance Le2 in the length direction L of the third region EB1 may be shorter than the distance Le0 from the end of the second region EA2 adjacent to the first end surface LS1 in the length direction L to the end of the fourth region EB2 adjacent to the second end surface LS2 in the length direction L. Further, the distance Le1 in the length direction L of the fifth region ECA1 and the distance Le2 in the length direction L of the seventh region ECB1 may be shorter than the distance Le0 from the end of the sixth region ECA2 adjacent to the first end surface LS1 in the length direction L to the end of the eighth region ECB2 adjacent to the second end surface LS2 in the length direction L.

The ratio of the area of the second region EA2 to the area of the first counter portion EA is preferably 30% or more and 80% or less, and may be 30% or more and 60% or less. The ratio of the area of the fourth region EB2 to the area of the second counter portion EB is preferably 30% or more and 80% or less, and may be 30% or more and 60% or less.

The ratio of the area of the sixth region ECA2 to the area of the first electrode layer-side counter portion ECA is preferably 30% or more and 80% or less, and may be 30% or more and 60% or less. The ratio of the area of the eighth region ECB2 to the area of the second electrode layer-side counter portion ECB is preferably 30% or more and 80% or less, and may be 30% or more and 60% or less.

With such a configuration, it is possible to maintain a large area of the series capacitor forming portion 11E, to also maintain an area in which the first external electrode 40A and the second external electrode 40B are provided, and further to appropriately maintain the areas of the second region EA2, the fourth region EB2, the sixth region ECA2, and the eighth region ECB2 having high coverage. Therefore, it is possible to further increase the capacitance without increasing the size of the multilayer ceramic capacitor 1.

The distance Le3 in the length direction L of the first sloped portion FA1 and the third sloped portion FCA1, and the distance Le4 in the length direction L of the second sloped portion FB1 and the fourth sloped portion FCB1 are preferably substantially equal to each other, but are not limited thereto. In the length direction L, it is preferable that the second region EA2, the fourth region EB2, the sixth region ECA2, and the eighth region ECB2 are provided within the range of the distance L1 between the first external electrode 40A and the second external electrode 40B, and the first sloped portion FA1, the second sloped portion FB1, the third sloped portion FCA1, and the fourth sloped portion FCB1 are also provided within the range of the distance L1.

The distance (Le0 + Le3 + Le4) is obtained by adding the distance Le0 in the length direction L from the end of the second region EA2 adjacent to the first end surface LS1 to the end of the fourth region EB2 adjacent to the second end surface LS2, or from the end of the sixth region ECA2 adjacent to the first end surface LS1 to the end of the eighth region ECB2 adjacent to the second end surface LS2, the distance Le3 in the length direction L of the first sloped portion FA1 or the third sloped portion FCA1, and the distance Le4 in the length direction L of the second sloped portion FB1 or the fourth sloped portion FCB1. The distance (Le0 + Le3 + Le4) is preferably shorter than the distance L1 between the first external electrode 40A and the second external electrode 40B. However, the present invention is not limited to this configuration.

The slope angle θ of the first sloped portion FA1 with respect to the second region EA2 is preferably 1° or more. For example, the slope angle θ of the first sloped portion FA1 with respect to the second region EA2 may be 1° or more and 12° or less. More preferably, the slope angle θ of the first sloped portion FA1 with respect to the second region EA2 may be 2° or more and 10° or less.

The slope angle θ of the second sloped portion FB1 with respect to the fourth region EB2 is preferably 1° or more. For example, the slope angle θ of the second sloped portion FB1 with respect to the fourth region EB2 may be 1° or more and 12° or less. More preferably, the slope angle θ of the second sloped portion FB1 with respect to the fourth region EB2 may be 2° or more and 10° or less.

The slope angle θ of the third sloped portion FCA1 with respect to the sixth region ECA2 is preferably 1° or more. For example, the slope angle θ of the third sloped portion FCA1 with respect to the sixth region ECA2 may be 1° or more and 12° or less. More preferably, the slope angle θ of the third sloped portion FCA1 with respect to the sixth region ECA2 may be 2° or more and 10° or less.

The slope angle θ of the fourth sloped portion FCB1 with respect to the eighth region ECB2 is preferably 1° or more. For example, the slope angle θ of the fourth sloped portion FCB1 with respect to the eighth region ECB2 may be 1° or more and 12° or less. More preferably, the slope angle θ of the fourth sloped portion FCB1 with respect to the eighth region ECB2 may be 2° or more and 10° or less.

In FIG. 2C, the slope angle θ of the second sloped portion FB1 with respect to the fourth region EB2 in the second internal electrode layer 32, and the slope angle θ of the fourth sloped portion FCB1 with respect to the eighth region ECB2 in the intermediate electrode layer 33 are shown as examples of the above-described slope angle θ.

With such a configuration, it is possible to increase the thickness of each of the internal electrode layers 30 in the second region EA2, the fourth region EB2, the sixth region ECA2, and the eighth region ECB2 and increase the coverage, thereby increasing the capacitance, while reducing or preventing an increase in size of the multilayer ceramic capacitor 1. Specifically, by setting the above-described slope angle θ to 1° or more, preferably 2° or more, it is possible to secure a region for increasing the thickness of the internal electrode layers 30 in the second region EA2, the fourth region EB2, the sixth region ECA2, and the eighth region ECB2. In addition, by setting the above-described slope angle θ to 12° or less, preferably 10° or less, it is possible to suppress the surface of the multilayer body 10 from swelling excessively in the lamination direction T and protruding outward beyond the surface of the external electrode 40.

More specifically, by setting the slope angle θ within the above-described range, it is easier to set the relationship between the thickness of the second region EA2, the fourth region EB2, the sixth region ECA2, and the eighth region ECB2 and the thickness of the first region EA1, the third region EB1, the fifth region ECA1, and the seventh region ECB1 within the range of one embodiment. In addition, by setting the slope angle θ within the above-described range, it is easier to set the relationship between the maximum distance T0 at the center of the exposed portion of the multilayer body 10 to be described later and the maximum distance T1 in the covered portion of the multilayer body to be described later within the range of one embodiment to be described later.

As shown in FIGS. 2A to 2C, the thickness of the first sloped portion FA1 gradually decreases as approaching the first end surface LS1. Also, as shown in FIGS. 2A to 2C, the thickness of the second sloped portion FB1 gradually decreases as approaching the second end surface LS2.

As shown in FIGS. 2A to 2C, the thickness of the third sloped portion FCA1 gradually decreases as approaching the first end surface LS1. Also, as shown in FIGS. 2A to 2C, the thickness of the fourth sloped portion FCB1 gradually decreases as approaching the second end surface LS2.

If there is a portion where the thickness of the internal electrode layer 30 rapidly changes, there is a possibility that a portion will form where the distance between the internal electrode layers 30 sandwiching the dielectric layer 20 is locally short. In this case, since the electric field concentrates on such a portion, the reliability of the multilayer ceramic capacitor 1 may be lowered. However, with the above configuration, since it is possible to reduce or prevent the formation of a portion where the distance between the internal electrode layers 30 is locally short in the vicinity of the sloped portion, it is possible to reduce or prevent the decline in the reliability of the multilayer ceramic capacitor 1 due to electric field concentration while increasing the capacitance without increasing the size of the multilayer ceramic capacitor 1.

In addition, since it is possible to reduce or prevent stress concentration in the sloped portion, it is possible to increase the capacitance without increasing the size of the multilayer ceramic capacitor 1, and it is possible to further reduce or prevent the occurrence of cracks in the multilayer body.

The step difference distance ls1 in the lamination direction T between the first region EA1 and the second region EA2 caused by the first sloped portion FA1 is preferably larger than the thickness Tc of the dielectric layer 20 provided between the internal electrode layers 30 in the lamination direction T. More preferably, the step difference distance ls1 in the lamination direction T between the first region EA1 and the second region EA2 caused by the first sloped portion FA1 is larger than the sum Tt (= Te + Tc) of the thickness Te of the internal electrode layer 30 in the lamination direction T and the thickness Tc of the dielectric layer 20 in the lamination direction T.

More preferably, the step difference distance ls1 in the lamination direction T between the first region EA1 and the second region EA2 caused by the first sloped portion FA1 is two times or more the sum Tt of the thickness Te of the internal electrode layer 30 in the lamination direction T and the thickness Tc of the dielectric layer 20 in the lamination direction T. The step difference distance ls1 in the lamination direction T between the first region EA1 and the second region EA2 caused by the first sloped portion FA1 may be three times or more the sum Tt of the thickness Te of the internal electrode layer 30 in the lamination direction T and the thickness Tc of the dielectric layer 20 in the lamination direction T.

The step difference distance ls2 in the lamination direction T between the third region EB1 and the fourth region EB2 caused by the second sloped portion FB1 is preferably larger than the thickness Tc of the dielectric layer 20 provided between the internal electrode layers 30 in the lamination direction T. More preferably, the step difference distance ls2 in the lamination direction T between the third region EB1 and the fourth region EB2 caused by the second sloped portion FB1 is larger than the sum Tt (= Te + Tc) of the thickness Te of the internal electrode layer 30 in the lamination direction T and the thickness Tc of the dielectric layer 20 in the lamination direction T.

More preferably, the step difference distance ls2 in the lamination direction T between the third region EB1 and the fourth region EB2 caused by the second sloped portion FB1 is two times or more the sum Tt of the thickness Te of the internal electrode layer 30 in the lamination direction T and the thickness Tc of the dielectric layer 20 in the lamination direction T. The step difference distance ls2 in the lamination direction T between the third region EB1 and the fourth region EB2 caused by the second sloped portion FB1 may be three times or more the sum Tt of the thickness Te of the internal electrode layer 30 in the lamination direction T and the thickness Tc of the dielectric layer 20 in the lamination direction T.

The step difference distance ls3 in the lamination direction T between the fifth region ECA1 and the sixth region ECA2 caused by the third sloped portion FCA1 is preferably larger than the thickness Tc of the dielectric layer 20 provided between the internal electrode layers 30 in the lamination direction T. More preferably, the step difference distance ls3 in the lamination direction T between the fifth region ECA1 and the sixth region ECA2 caused by the third sloped portion FCA1 is larger than the sum Tt (= Te + Tc) of the thickness Te of the internal electrode layer 30 in the lamination direction T and the thickness Tc of the dielectric layer 20 in the lamination direction T.

More preferably, the step difference distance ls3 in the lamination direction T between the fifth region ECA1 and the sixth region ECA2 caused by the third sloped portion FCA1 is two times or more the sum Tt of the thickness Te of the internal electrode layer 30 in the lamination direction T and the thickness Tc of the dielectric layer 20 in the lamination direction T. The step difference distance ls3 in the lamination direction T between the fifth region ECA1 and the sixth region ECA2 caused by the third sloped portion FCA1 may be three times or more the sum Tt of the thickness Te of the internal electrode layer 30 in the lamination direction T and the thickness Tc of the dielectric layer 20 in the lamination direction T.

The step difference distance ls4 in the lamination direction T between the seventh region ECB1 and the eighth region ECB2 caused by the fourth sloped portion FCB1 is preferably larger than the thickness Tc of the dielectric layer 20 provided between the internal electrode layers 30 in the lamination direction T. More preferably, the step difference distance ls4 in the lamination direction T between the seventh region ECB1 and the eighth region ECB2 caused by the fourth sloped portion FCB1 is larger than the sum Tt (= Te + Tc) of the thickness Te of the internal electrode layer 30 in the lamination direction T and the thickness Tc of the dielectric layer 20 in the lamination direction T.

More preferably, the step difference distance ls4 in the lamination direction T between the seventh region ECB1 and the eighth region ECB2 caused by the fourth sloped portion FCB1 is two times or more the sum Tt of the thickness Te of the internal electrode layer 30 in the lamination direction T and the thickness Tc of the dielectric layer 20 in the lamination direction T. The step difference distance ls4 in the lamination direction T between the seventh region ECB1 and the eighth region ECB2 caused by the fourth sloped portion FCB1 may be three times or more the sum Tt of the thickness Te of the internal electrode layer 30 in the lamination direction T and the thickness Tc of the dielectric layer 20 in the lamination direction T.

The thickness Te of the internal electrode layer 30 in the lamination direction T refers to the thickness of the internal electrode layer 30 in the lamination direction T in the second region EA2, the fourth region EB2, the sixth region ECA2, and the eighth region ECB2. The thickness Tc of the dielectric layer 20 in the lamination direction T refers to the thickness of the dielectric layer 20 provided between the second region EA2, the fourth region EB2, the sixth region ECA2, and the eighth region ECB2 in the lamination direction T.

With such a configuration, it is possible to increase the thickness of the internal electrode layer 30 in each of the second region EA2, the fourth region EB2, the sixth region ECA2, and the eighth region ECB2 to sufficiently increase the coverage by making use of the step difference caused by the sloped portion, and thus it is possible to further increase the capacitance without increasing the size of the multilayer ceramic capacitor 1.

The step difference distance ls1 in the lamination direction T between the first region EA1 and the second region EA2 caused by the first sloped portion FA1 may be 1.6 um or more, and may be 1.6 µm or more and 16 µm or less. For example, it may be 2.9 µm or more and 14.8 µm or less.

The step difference distance ls2 in the lamination direction T between the third region EB1 and the fourth region EB2 caused by the second sloped portion FB1 may be 1.6 µm or more, or may be 1.6 µm or more and 16 µm or less. For example, it may be 2.9 µm or more and 14.8 µm or less.

The step difference distance ls3 in the lamination direction T between the fifth region ECA1 and the sixth region ECA2 caused by the third sloped portion FCA1 may be 1.6 µm or more, and may be 1.6 µm or more and 16 µm or less. For example, it may be 2.9 µm or more and 14.8 µm or less.

The step difference distance ls4 in the lamination direction T between the seventh region ECB1 and the eighth region ECB2 caused by the fourth sloped portion FCB1 may be 1.6 µm or more, and may be 1.6 µm or more and 16 µm or less. For example, it may be 2.9 µm or more and 14.8 µm or less.

The first internal electrode layer 31 further includes a fifth sloped portion FA2 located at the first extension portion D1. The fifth sloped portion FA2 is preferably located closer to the first end surface LS1 than the end of the intermediate electrode layer 33 adjacent to the first end surface LS1 in the length direction L. The second internal electrode layer 32 further includes a sixth sloped portion FB2 located at the second extension portion D2. The sixth sloped portion FB2 is preferably located closer to the second end surface LS2 than the end of the intermediate electrode layer 33 adjacent to the second end surface LS2 in the length direction L.

With such a configuration, it is possible to maintain a long distance of the intrusion path of moisture from the outside, such that it is possible to increase the capacitance and to maintain moisture resistance without increasing the size of the multilayer ceramic capacitor 1.

Moisture such as a plating solution or the like may infiltrate from the interface between the multilayer body 10 and the external electrode. By providing the fifth sloped portion FA2 and the sixth sloped portion FB2, it is possible to increase the distance of the intrusion path to the end portion of the internal electrode layer 30 through the interface. Therefore, it is possible to increase the capacitance and maintain the moisture resistance without increasing the size of the multilayer ceramic capacitor 1.

In addition, moisture such as a plating solution or the like may infiltrate from the surface of the external electrode 40 in the thickness direction of the external electrode 40. With the fifth sloped portion FA2 and the sixth sloped portion FB2, it is possible to provide the end portion of each of the internal electrode layers 30 at a position closer to the center in the height direction of the multilayer body 10 where the external electrode 40 is likely to become thick in the length direction L. Therefore, it is possible to increase the capacitance and maintain the moisture resistance without increasing the size of the multilayer ceramic capacitor 1.

With the fifth sloped portion FA2 and the sixth sloped portion FB2, it is possible to increase the distance from the end portion of each of the internal electrode layers 30 to the counter portion of the internal electrode layers 30. With such a configuration, it is possible to increase the distance of the moisture intrusion path to the counter portion of the internal electrode layers 30. Therefore, it is possible to increase the capacitance and maintain the moisture resistance without increasing the size of the multilayer ceramic capacitor 1.

The slope angle θ of the first sloped portion FA1 is smaller than the slope angle θ2 of the fifth sloped portion FA2. That is, the slope angle θ2 of the fifth sloped portion FA2 is larger than the slope angle θ of the first sloped portion FA1.

The slope angle θ2 of the fifth sloped portion FA2 with respect to the first region EA1 or the second region EA2 may be, for example, 10° or more, and may be 15° or more.

The slope angle θ of the third sloped portion FCA1 is smaller than the slope angle θ2 of the fifth sloped portion FA2. That is, the slope angle θ2 of the fifth sloped portion FA2 is larger than the slope angle θ of the third sloped portion FCA1.

The slope angle θ of the second sloped portion FB1 is smaller than the slope angle θ2 of the sixth sloped portion FB2. That is, the slope angle θ2 of the sixth sloped portion FB2 is larger than the slope angle θ of the second sloped portion FB1.

The slope angle θ2 of the sixth sloped portion FB2 with respect to the third region EB1 or the fourth region EB2 may be, for example, 10° or more, and may be 15° or more.

The slope angle θ of the fourth sloped portion FCB1 is smaller than the slope angle θ2 of the sixth sloped portion FB2. That is, the slope angle θ2 of the sixth sloped portion FB2 is larger than the slope angle θ of the third sloped portion FCA1 and the fourth sloped portion FCB1.

In FIG. 2C, the slope angle θ2 of the sixth sloped portion FB2 with respect to the third region EB1 in the second internal electrode layer 32 is shown as an example of the above-described slope angle θ2.

With such a configuration, it is possible to maintain a longer distance of the intrusion path of moisture from the outside, such that it is possible to increase the capacitance and to maintain moisture resistance without increasing the size of the multilayer ceramic capacitor 1.

As shown in FIGS. 2A and 2B, the multilayer body 10 includes an exposed portion Ep exposed from the first external electrode 40A and the second external electrode 40B, a first covered portion C1 covered with the first external electrode 40A, and a second covered portion C2 covered with the second external electrode 40B. The distance L1 in the length direction L of the exposed portion Ep exposed from the first external electrode 40A and the second external electrode 40B corresponds to the distance L1 between the first external electrode 40A and the second external electrode 40B. In one embodiment, the exposed portion Ep has, as described above, a first recessed portion DE1 on the first main surface TS1 and a second recessed portion DE2 on the second main surface TS2.

In one embodiment, the maximum distance T0 in the lamination direction T of the exposed portion Ep is longer than the maximum distance T1, which is the maximum value of the distance in the lamination direction T between the surface of the first covered portion C1 adjacent to the first main surface TS1 and the surface adjacent to the second main surface TS2. Also, in one embodiment, the maximum distance T0 in the lamination direction T of the exposed portion Ep is longer than the maximum distance T1, which is the maximum value of the distance in the lamination direction T between the surface of the second covered portion C2 adjacent to the first main surface TS1 and the surface adjacent to the second main surface TS2. In one embodiment, the maximum distance T0 in the lamination direction T of the exposed portion Ep is the maximum distance in the lamination direction T in the exposed portion Ep of the multilayer body 10.

With such a configuration, it is possible to increase the thickness of each of the internal electrode layers 30 in the second region EA2, the fourth region EB2, the sixth region ECA2, and the eighth region ECB2 and increase the coverage, thereby increasing the capacitance, while reducing or preventing an increase in size of the multilayer ceramic capacitor 1.

The maximum distance T0 in the lamination direction T of the exposed portion Ep is preferably 103% or less of the maximum distance T1 in the lamination direction T between the surface of the first covered portion C1 adjacent to the first main surface TS1 and the surface adjacent to the second main surface TS2. For example, the maximum distance T0 in the lamination direction T of the exposed portion Ep may be 101% or more and 103% or less of the maximum distance T1 in the lamination direction T between the surface of the first covered portion C1 adjacent to the first main surface TS1 and the surface adjacent to the second main surface TS2. More preferably, the maximum distance T0 in the lamination direction T of the exposed portion Ep may be 101% or more and 103% or less of the maximum distance T1 in the lamination direction T between the surface of the first covered portion C1 adjacent to the first main surface TS1 and the surface adjacent to the second main surface TS2. In addition, in one embodiment, the distance in the lamination direction T between the first plane surface portion PA1 and the third plane surface portion PB1 described later is the above-described maximum distance T1.

The maximum distance T0 in the lamination direction T of the exposed portion Ep is preferably 103% or less of the maximum distance T1 in the lamination direction T between the surface of the second covered portion C2 adjacent to the first main surface TS1 and the surface adjacent to the second main surface TS2. For example, the maximum distance T0 in the lamination direction T of the exposed portion Ep may be 101% or more and 103% or less of the maximum distance T1 in the lamination direction T between the surface of the second covered portion C2 adjacent to the first main surface TS1 and the surface adjacent to the second main surface TS2. More preferably, the maximum distance T0 in the lamination direction T of the exposed portion Ep may be 101% or more and 103% or less of the maximum distance T1 in the lamination direction T between the surface of the second covered portion C2 adjacent to the first main surface TS1 and the surface adjacent to the second main surface TS2. In addition, in one embodiment, the distance in the lamination direction T between the second plane surface portion PA2 and the fourth plane surface portion PB2 described later is the above-described maximum distance T1.

The maximum distance T0 in the lamination direction T of the exposed portion Ep is shorter than the maximum distance T2 which is the maximum value of the distance in the lamination direction T between the surface of the first external electrode 40A adjacent to the first main surface TS1 and the surface of the first external electrode 40A adjacent to the second main surface TS2. In addition, the maximum distance T0 in the lamination direction T of the exposed portion Ep is shorter than the maximum distance T2 which is the maximum value of the distance in the lamination direction T between the surface of the second external electrode 40B adjacent to the first main surface TS1 and the surface of the second external electrode 40B adjacent to the second main surface TS2.

With such a configuration, it is possible to increase the thickness of each of the internal electrode layers 30 in the second region EA2, the fourth region EB2, the sixth region ECA2, and the eighth region ECB2 and increase the coverage, thereby increasing the capacitance, while reducing or preventing an increase in size of the multilayer ceramic capacitor 1.

In addition, the ratio of the thickness of each of the first internal electrode layers 31 in the lamination direction T in the second region EA2 to the thickness in the lamination direction T in the first region EA1 may be set to be larger than the ratio of the maximum distance T0 in the lamination direction T of the exposed portion Ep of the multilayer body 10 to the maximum distance T1 in the lamination direction T of the first covered portion C1 of the multilayer body 10. The ratio of the thickness of each of the second internal electrode layers 32 in the lamination direction T in the fourth region EB2 to the thickness in the lamination direction T in the third region EB1 may be set to be larger than the ratio of the maximum distance T0 in the lamination direction T of the exposed portion Ep of the multilayer body 10 to the maximum distance T1 in the lamination direction T of the second covered portion C2 of the multilayer body 10.

As shown in FIG. 2A, the first main surface TS1 includes a first covered surface C1sA covered by the first external electrode 40A, a second covered surface C2sA covered by the second external electrode 40B, and a first protruding surface EpsA exposed from the first external electrode 40A and the second external electrode 40B and protruding toward the center in the length direction L.

As shown in FIGS. 1 and 2A, the first protruding surface EpsA includes a first flat surface FPA1, a second flat surface FPA2, a first recessed portion DE1 functioning as a recessed portion, a first sloped surface FC1, and a second sloped surface FC2. The first recessed portion DE1 is a recess-shaped portion provided in the middle of the first protruding surface EpsA in the length direction L so as to extend in the width direction W.

The first flat surface FPA1 is a surface perpendicular to the lamination direction T and is provided adjacent to the first end surface LS1 with respect to the first recessed portion DE1. The second flat surface FPA2 is a surface perpendicular to the lamination direction T and is provided adjacent to the second end surface LS2 with respect to the first recessed portion DE1. The first sloped surface FC1 connects the first flat surface FPA1 and the first covered surface C1sA. The second sloped surface FC2 connects the second flat surface FPA2 and the second covered surface C2sA.

In one embodiment of the present invention, the first plane surface portion PA1 is provided at the first covered surface C1sA and adjacent to the middle of the multilayer body, and the first sloped surface FC1 connects the first flat surface FPA1 and the first plane surface portion PA1. In addition, the second plane surface portion PA2 is provided at the second covered surface C2sA and adjacent to the middle of the multilayer body, and the second sloped surface FC2 connects the second flat surface FPA2 and the second plane surface portion PA2.

That is, the first main surface TS1 of one embodiment of the present invention includes the first plane surface portion PA1 adjacent to the first end surface LS1, the second plane surface portion PA2 adjacent to the second end surface LS2, the first flat surface FPA1 that is provided between the first plane surface portion PA1 and the first recessed portion DE1 and protrudes from the first plane surface portion PA1, the second flat surface FPA2 that is provided between the second plane surface portion PA2 and the first recessed portion DE1 and protrudes from the second plane surface portion PA2, the first sloped surface FC1 that connects the first flat surface FPA1 and the first plane surface portion PA1, the second sloped surface FC2 that connects the second flat surface FPA2 and the second plane surface portion PA2, and the first recessed portion DE1 that extends in the width direction W between the first flat surface FPA1 and the second flat surface FPA2.

As shown in FIG. 2A, the second main surface TS2 includes a third covered surface C1sB covered by the first external electrode 40A, a fourth covered surface C2sB covered by the second external electrode 40B, and a second protruding surface EpsB that is exposed from the first external electrode 40A and the second external electrode 40B and protrudes toward the center in the length direction L.

The second protruding surface EpsB includes a third flat surface FPB1, a fourth flat surface FPB2, a second recessed portion DE2 as a recessed portion, a third sloped surface FC3, and a fourth sloped surface FC4. The second recessed portion DE2 is a recessed-shape portion provided to extend in the width direction W in the middle of the second protruding surface EpsB in the length direction L.

The third flat surface FPB1 is a surface perpendicular to the lamination direction T and is provided adjacent to the first end surface LS1 with respect to the second recessed portion DE2. The fourth flat surface FPB2 is a surface perpendicular to the lamination direction T and is provided adjacent to the second end surface LS2 with respect to the second recessed portion DE2. The third sloped surface FC3 connects the third flat surface FPB1 and the third covered surface C1sB. The fourth sloped surface FC4 connects the fourth flat surface FPB2 and the fourth covered surface C2sB.

In one embodiment of the present invention, the third plane surface portion PB1 is provided at the third covered surface C1sB and adjacent to the middle of the multilayer body, and the third sloped surface FC3 connects the third flat surface FPB1 and the third plane surface portion PB1. In addition, the fourth plane surface portion PB2 is provided at the fourth covered surface C2sB and adjacent to the middle of the multilayer body, and the fourth sloped surface FC4 connects the fourth flat surface FPB2 and the fourth plane surface portion PB2.

That is, the second main surface TS2 of one embodiment of the present invention includes the third plane surface portion PB1 adjacent to the first end surface LS1, the fourth plane surface portion PB2 adjacent to the second end surface LS2, the third flat surface FPB1 that is provided between the third plane surface portion PB1 and the second recessed portion DE2 and protrudes from the third plane surface portion PB1, the fourth flat surface FPB2 that is provided between the fourth plane surface portion PB2 and the second recessed portion DE2 and protrudes from the fourth plane surface portion PB2, the third sloped surface FC3 that connects the third flat surface FPB1 and the third plane surface portion PB1, the fourth sloped surface FC4 that connects the fourth flat surface FPB2 and the fourth plane surface portion PB2, and the second recessed portion DE2 that extends in the width direction W between the third flat surface FPB1 and the fourth flat surface FPB2.

With this configuration, it is easier to secure the area of the second region EA2, the fourth region EB2, the sixth region ECA2, and the eighth region ECB2 with high coverage corresponding to the first flat surface FPA1, the second flat surface FPA2, the third flat surface FPB1, or the fourth flat surface FPB2, and it is possible to increase the capacitance without increasing the size of the multilayer ceramic capacitor 1. In addition, by providing the flat surfaces, it is possible to suppress adsorption failure during mounting.

The distance Lt1 in the length direction L of the first sloped surface FC1 and the distance Lt2 in the length direction L of the second sloped surface FC2 are shorter than the distance Lt0 in the length direction L from the end of the first flat surface FPA1 adjacent to the first end surface LS1 to the end of the second flat surface FPA2 adjacent to the second end surface LS2. The distance Lt1 in the length direction L of the third sloped surface FC3 and the distance Lt2 in the length direction L of the fourth sloped surface FC4 are shorter than the distance Lt0 in the length direction L from the end of the third flat surface FPB1 adjacent to the first end surface LS1 to the end of the fourth flat surface FPB2 adjacent to the second end surface LS2.

With such a configuration, it is easier to secure the area of the second region EA2, the fourth region EB2, the sixth region ECA2, and the eighth region ECB2 with high coverage corresponding to the first flat surface FPA1, the second flat surface FPA2, the third flat surface FPB1, or the fourth flat surface FPB2, and it is possible to increase the capacitance without increasing the size of the multilayer ceramic capacitor 1. In addition, by securing the area of the flat surfaces, it is possible to suppress adsorption failure during mounting.

In one embodiment, in the length direction L, the distance Lt0 from the end of the first flat surface FPA1 adjacent to the first end surface LS1 to the end of the second flat surface FPA2 adjacent to the second end surface LS2 is shorter than the distance L1 between the first external electrode 40A and the second external electrode 40B. In addition, in the length direction L, the distance Lt0 from the end of the third flat surface FPB1 adjacent to the first end surface LS1 to the end of the fourth flat surface FPB2 adjacent to the second end surface LS2 is shorter than the distance L1 between the first external electrode 40A and the second external electrode 40B.

As described above, it is preferable that the distance Lt0 in the length direction L from the end of the first flat surface FPA1 adjacent to the first end surface LS1 to the end of the second flat surface FPA2 adjacent to the second end surface LS2 is within the range of the distance L1 between the first external electrode 40A and the second external electrode 40B in the length direction L.

In the length direction L, it is preferable that the distance Lt0 in the length direction L from the end of the third flat surface FPB1 adjacent to the first end surface LS1 to the end of the fourth flat surface FPB2 adjacent to the second end surface LS2 is within the range of the distance L1 between the first external electrode 40A and the second external electrode 40B.

The end portion 40AE of the first external electrode 40A may be located at the first sloped surface FC1 and the third sloped surface FC3, or may be located at the first plane surface portion PA1 and the third plane surface portion PB1, which are located closer to the first end surface LS1 than the first sloped surface FC1 and the third sloped surface FC3. The end portion 40BE of the second external electrode 40B may be located at the second sloped surface FC2 and the fourth sloped surface FC4, or may be located at the second plane surface portion PA2 and the fourth plane surface portion PB2, which are located closer to the second end surface LS2 than the second sloped surface FC2 and the fourth sloped surface FC4.

In one embodiment, the end portion 40AE of the first external electrode 40A is located in the vicinity of the boundary portion between the first sloped surface FC1 and the first plane surface portion PA1, and in the vicinity of the boundary portion between the third sloped surface FC3 and the third plane surface portion PB1. In addition, in one embodiment, the end portion 40BE of the second external electrode 40B is located in the vicinity of the boundary portion between the second sloped surface FC2 and the second plane surface portion PA2, and in the vicinity of the boundary portion between the fourth sloped surface FC4 and the fourth plane surface portion PB2.

With such a configuration, it is possible to increase the thickness of each of the internal electrode layers 30 in the second region EA2, the fourth region EB2, the sixth region ECA2, and the eighth region ECB2, and increase the coverage, thereby increasing the capacitance, while reducing or preventing an increase in size of the multilayer ceramic capacitor 1.

The slope angle ϕ of the first sloped surface FC1 with respect to the first flat surface FPA1 is preferably 1° or more. For example, the slope angle ϕ of the first sloped surface FC1 with respect to the first flat surface FPA1 may be 1° or more and 10° or less. More preferably, the slope angle ϕ of the first sloped surface FC1 with respect to the first flat surface FPA1 may be 2° or more and 5° or less.

The slope angle ϕ of the second sloped surface FC2 with respect to the second flat surface FPA2 is preferably 1° or more. For example, the slope angle ϕ of the second sloped surface FC2 with respect to the second flat surface FPA2 may be 1° or more and 10° or less. More preferably, the slope angle ϕ of the second sloped surface FC2 with respect to the second flat surface FPA2 may be 2° or more and 5° or less.

The slope angle ϕ of the third sloped surface FC3 with respect to the third flat surface FPB1 is preferably 1° or more. For example, the slope angle ϕ of the third sloped surface FC3 with respect to the third flat surface FPB1 may be 1° or more and 10° or less. More preferably, the slope angle ϕ of the third sloped surface FC3 with respect to the third flat surface FPB1 may be 2° or more and 5° or less.

The slope angle ϕ of the fourth sloped surface FC4 with respect to the fourth flat surface FPB2 is preferably 1° or more. For example, the slope angle ϕ of the fourth sloped surface FC4 with respect to the fourth flat surface FPB2 may be 1° or more and 10° or less. More preferably, the slope angle ϕ of the fourth sloped surface FC4 with respect to the fourth flat surface FPB2 may be 2° or more and 5° or less.

FIG. 2C shows the slope angle ϕ of the third sloped surface FC3 with respect to the third flat surface FPB1 in the second main surface TS2, and the slope angle ϕ of the fourth sloped surface FC4 with respect to the fourth flat surface FPB2 in the second main surface TS2, as examples of the above-described slope angle ϕ.

With such a configuration, it is possible to increase the thickness of each of the internal electrode layers 30 in the second region EA2, the fourth region EB2, the sixth region ECA2, and the eighth region ECB2, and increase the coverage, thereby increasing the capacitance, while reducing or preventing an increase in size of the multilayer ceramic capacitor 1. Specifically, by setting the above-described slope angle ϕ to 1° or more, preferably 2° or more, it is possible to secure a region for increasing the thickness of the internal electrode layers 30 in the second region EA2, the fourth region EB2, the sixth region ECA2, and the eighth region ECB2.

Further, by setting the above-described slope angle ϕ to 10° or less, preferably 5° or less, it is possible to reduce or prevent the surface of the multilayer body 10 from swelling excessively in the lamination direction T and protruding outward beyond the surface of the external electrode 40. More specifically, by setting the slope angle ϕ within the above-described range, it is easier to set the relationship between the thickness of the second region EA2, the fourth region EB2, the sixth region ECA2, and the eighth region ECB2, and the thickness of the first region EA1, the second region EA2, the third region EB1, and the fourth region EB2 within the range of one embodiment. Further, by setting the slope angle ϕ within the above-described range, it is easier to set the relationship between the maximum distance T0 in the lamination direction T of the exposed portion of the multilayer body 10 and the maximum distance T1 of the covered portion of the multilayer body within the range of one embodiment.

The first flat surface FPA1 is preferably parallel or substantially parallel to a surface orthogonal or substantially orthogonal to the lamination direction T. The first flat surface FPA1 is preferably parallel or substantially parallel to the first plane surface portion PA1 and the second plane surface portion PA2. More preferably, the first flat surface FPA1, the first plane surface portion PA1, and the second plane surface portion PA2 are parallel or substantially parallel to a plane orthogonal or substantially orthogonal to the lamination direction T.

The second flat surface FPA2 is preferably parallel or substantially parallel to a plane orthogonal or substantially orthogonal to the lamination direction T. The second flat surface FPA2 is preferably parallel or substantially parallel to the first plane surface portion PA1 and the second plane surface portion PA2. More preferably, the second flat surface FPA2, the first plane surface portion PA1, and the second plane surface portion PA2 are parallel or substantially parallel to a plane orthogonal or substantially orthogonal to the lamination direction T.

The third flat surface FPB1 is preferably parallel or substantially parallel to a plane orthogonal or substantially orthogonal to the lamination direction T. The third flat surface FPB1 is preferably parallel or substantially parallel to the third plane surface portion PB1 and the fourth plane surface portion PB2. More preferably, the third flat surface FPB1, the third plane surface portion PB1, and the fourth plane surface portion PB2 are parallel or substantially parallel to a plane orthogonal or substantially orthogonal to the lamination direction T.

The fourth flat surface FPB2 is preferably parallel or substantially parallel to a plane orthogonal or substantially orthogonal to the lamination direction T. The fourth flat surface FPB2 is preferably parallel or substantially parallel to the third plane surface portion PB1 and the fourth plane surface portion PB2. More preferably, the fourth flat surface FPB2, the third plane surface portion PB1, and the fourth plane surface portion PB2 are parallel or substantially parallel to a plane orthogonal or substantially orthogonal to the lamination direction T.

With such a configuration, it is possible to reduce or prevent the formation of a portion having a locally large size in the multilayer ceramic capacitor 1, and it is possible to increase the capacitance without increasing the size of the multilayer ceramic capacitor 1.

As shown in FIG. 2B, the step difference distance tf in the lamination direction T between the first flat surface FPA1 and the first plane surface portion PA1 provided by the first sloped surface FC1, that is, a raised height tf of the first flat surface FPA1 provided by the first sloped surface FC1 (a swelling dimension on one side of the multilayer body), is preferably smaller than the thickness tg in the lamination direction T of the first external electrode 40A and the second external electrode 40B provided on the first main surface TS1.

As shown in FIG. 2B, the step difference distance tf in the lamination direction T between the second flat surface FPA2 and the second plane surface portion PA2 provided by the second sloped surface FC2, that is, a raised height tf of the second flat surface FPA2 provided by the second sloped surface FC2 (a swelling dimension on one side of the multilayer body), is preferably smaller than the thickness tg in the lamination direction T of the first external electrode 40A and the second external electrode 40B provided on the first main surface TS1.

The step difference distance tf in the lamination direction T between the third flat surface FPB1 and the third plane surface portion PB1 provided by the third sloped surface FC3, that is, a raised height tf of the third flat surface FPB1 provided by the third sloped surface FC3 (a swelling dimension on one side of the multilayer body), is preferably smaller than the thickness tg in the lamination direction T of the first external electrode 40A and the second external electrode 40B provided on the second main surface TS2.

The step difference distance tf in the lamination direction T between the fourth flat surface FPB2 and the fourth plane surface portion PB2 provided by the fourth sloped surface FC4, that is, a raised height tf of the fourth flat surface FPB2 provided by the fourth sloped surface FC4 (a swelling dimension on one side of the multilayer body), is preferably smaller than the thickness tg in the lamination direction T of the first external electrode 40A and the second external electrode 40B provided on the second main surface TS2.

With such a configuration, it is possible to increase the capacitance while reducing or preventing an increase in size of the multilayer ceramic capacitor 1.

The raised height tf of the first flat surface FPA1 provided by the first sloped surface FC1 is preferably 2.9 µm or more and 14.8 µm or less. The raised height tf of the first flat surface FPA1 provided by the first sloped surface FC1 may be 2.9 µm or more and 12.6 µm or less.

The raised height tf of the second flat surface FPA2 provided by the second sloped surface FC2 is preferably 2.9 µm or more and 14.8 µm or less. The raised height tf of the second flat surface FPA2 provided by the second sloped surface FC2 may be 2.9 µm or more and 12.6 µm or less.

The raised height tf of the third flat surface FPB1 provided by the third sloped surface FC3 is preferably 2.9 µm or more and 14.8 µm or less. The raised height tf of the third flat surface FPB1 provided by the third sloped surface FC3 may be 2.9 µm or more and 12.6 µm or less.

The raised height tf of the fourth flat surface FPB2 provided by the fourth sloped surface FC4 is preferably 2.9 µm or more and 14.8 µm or less. The raised height tf of the fourth flat surface FPB2 provided by the fourth sloped surface FC4 may be 2.9 µm or more and 12.6 µm or less.

The raised height tf of the first flat surface FPA1 provided by the first sloped surface FC1 is larger than the thickness Tc in the lamination direction T of the dielectric layer 20 provided between the internal electrode layers 30. More preferably, the raised height tf of the first flat surface FPA1 provided by the first sloped surface FC1 is larger than the sum Tt of the thickness Te of each of the internal electrode layers 30 in the lamination direction T and the thickness Tc of each of the dielectric layers 20 in the lamination direction T (Te+Tc).

More preferably, the raised height tf of the first flat surface FPA1 provided by the first sloped surface FC1 is two times or more the sum Tt of the thickness Te of each of the internal electrode layers 30 in the lamination direction T and the thickness Tc of each of the dielectric layers 20 in the lamination direction T. Further, the raised height tf of the first flat surface FPA1 provided by the first sloped surface FC1 may be three times or more the sum Tt of the thickness Te of each of the internal electrode layers 30 in the lamination direction T and the thickness Tc of each of the dielectric layers 20 in the lamination direction T.

The raised height tf of the second flat surface FPA2 provided by the second sloped surface FC2 is larger than the thickness Tc in the lamination direction T of each of the dielectric layers 20 provided between the internal electrode layers 30. More preferably, the raised height tf of the second flat surface FPA2 provided by the second sloped surface FC2 is larger than the sum Tt of the thickness Te of each of the internal electrode layers 30 in the lamination direction T and the thickness Tc of each of the dielectric layers 20 in the lamination direction T (Te+Tc).

More preferably, the raised height tf of the second flat surface FPA2 provided by the second sloped surface FC2 is two times or more the sum Tt of the thickness Te of each of the internal electrode layers 30 in the lamination direction T and the thickness Tc of each of the dielectric layers 20 in the lamination direction T. Further, the raised height tf of the second flat surface FPA2 provided by the second sloped surface FC2 may be three times or more the sum Tt of the thickness Te of each of the internal electrode layers 30 in the lamination direction T and the thickness Tc of each of the dielectric layers 20 in the lamination direction T.

The raised height tf of the third flat surface FPB1 provided by the third sloped surface FC3 is larger than the thickness Tc in the lamination direction T of each of the dielectric layers 20 provided between the internal electrode layers 30. More preferably, the raised height tf of the third flat surface FPB1 provided by the third sloped surface FC3 is larger than the sum Tt of the thickness Te of each of the internal electrode layers 30 in the lamination direction T and the thickness Tc of each of the dielectric layers 20 in the lamination direction T (Te+Tc).

More preferably, the raised height tf of the third flat surface FPB1 provided by the third sloped surface FC3 is two times or more the sum Tt of the thickness Te of each of the internal electrode layers 30 in the lamination direction T and the thickness Tc of each of the dielectric layers 20 in the lamination direction T. Further, the raised height tf of the third flat surface FPB1 provided by the third sloped surface FC3 may be three times or more the sum Tt of the thickness Te of each of the internal electrode layers 30 in the lamination direction T and the thickness Tc of each of the dielectric layers 20 in the lamination direction T.

The raised height tf of the fourth flat surface FPB2 provided by the fourth sloped surface FC4 is larger than the thickness Tc in the lamination direction T of each of the dielectric layers 20 provided between the internal electrode layers 30. More preferably, the raised height tf of the fourth flat surface FPB2 provided by the fourth sloped surface FC4 is larger than the sum Tt of the thickness Te of each of the internal electrode layers 30 in the lamination direction T and the thickness Tc of each of the dielectric layers 20 in the lamination direction T (Te+Tc).

More preferably, the raised height tf of the fourth flat surface FPB2 provided by the fourth sloped surface FC4 is two times or more the sum Tt of the thickness Te of each of the internal electrode layers 30 in the lamination direction T and the thickness Tc of each of the dielectric layers 20 in the lamination direction T. Further, the raised height tf of the fourth flat surface FPB2 provided by the fourth sloped surface FC4 may be three times or more the sum Tt of the thickness Te of each of the internal electrode layers 30 in the lamination direction T and the thickness Tc of each of the dielectric layers 20 in the lamination direction T.

With such a configuration, it is possible to secure a region for increasing the thickness of the internal electrode layer 30 in each of the second region EA2, the fourth region EB2, the sixth region ECA2, and the eighth region ECB2 to sufficiently increase the coverage by making use of the step difference caused by the sloped portion, and thus it is possible to further increase the capacitance without increasing the size of the multilayer ceramic capacitor 1.

As shown in FIG. 2B, a thickness t01 in the lamination direction T in the region of the first flat surface FPA1 of the first main surface-side outer layer portion 12 is smaller than a thickness t11 in the lamination direction T in the region of the first covered surface C1sA of the first main surface-side outer layer portion 12 and a thickness t21 in the lamination direction T in the region of the second covered surface C2sA of the first main surface-side outer layer portion 12.

As shown in FIG. 2B, a thickness t01 in the lamination direction T in the region of the second flat surface FPA2 of the first main surface-side outer layer portion 12 is smaller than a thickness t11 in the lamination direction T in the region of the first covered surface C1sA of the first main surface-side outer layer portion 12 and a thickness t21 in the lamination direction T in the region of the second covered surface C2sA of the first main surface-side outer layer portion 12.

As shown in FIG. 2B, a thickness t02 in the lamination direction T in the region of the third flat surface FPB1 of the second main surface-side outer layer portion 13 is smaller than a thickness t12 in the lamination direction T in the region of the first covered surface C1sA of the second main surface-side outer layer portion 13 and a thickness t22 in the lamination direction T in the region of the second covered surface C2sA of the second main surface-side outer layer portion 13.

As shown in FIG. 2B, a thickness t02 in the lamination direction T in the region of the fourth flat surface FPB2 of the second main surface-side outer layer portion 13 is smaller than a thickness t12 in the lamination direction T in the region of the first covered surface C1sA of the second main surface-side outer layer portion 13 and a thickness t22 in the lamination direction T in the region of the second covered surface C2sA of the second main surface-side outer layer portion 13.

With such a configuration, the distance between the external electrode 40 and the internal electrode layer 30 is maintained to be relatively long while the capacitance is increased without increasing the size of the multilayer ceramic capacitor 1, such that it is possible to suppress concentration of an electric field and, therefore, it is possible to reduce or prevent a decline in the reliability of the multilayer ceramic capacitor 1 due to electric field concentration.

In addition, by maintaining the distances of the thicknesses t11, t21, t12, and t22 to be relatively long, even if cracks occur in the multilayer body 10 in the vicinity of the end portion of the external electrode 40 such as in the vicinity of the boundary between the exposed portion Ep of the multilayer body 10 and the first covered portion C1 or the second covered portion C2, it is possible to reduce or prevent the cracks from reaching the internal electrode.

In addition, in one embodiment, with the above-described sloped surfaces, the flat surface functioning as a portion of the surface of the multilayer body 10 swells on each of the first main surface TS1 and the second main surface TS2; however, the flat surface functioning as a portion of the surface of the multilayer body 10 may swell on either one of the first main surface TS1 or the second main surface TS2. The first flat surface FPA1, the second flat surface FPA2, the third flat surface FPB1, and the fourth flat surface FPB2 have flat surfaces in one embodiment, but they may be surfaces that are gently rounded as a whole.

As shown in FIGS. 2A to 2C, the thickness in the length direction L of the first external electrode 40A in the middle in the lamination direction T is thicker than the thickness in the length direction L of the first external electrode 40A adjacent to the first main surface TS1 in the lamination direction T or the thickness in the length direction L of the first external electrode 40A adjacent to the second main surface TS2 in the lamination direction T. As shown in FIGS. 4A and 4B, the thickness in the length direction L of the first external electrode 40A in the middle in the width direction W is thicker than the thickness in the length direction L of the first external electrode 40A adjacent to the first lateral surface WS1 in the width direction W and the thickness in the length direction L of the first external electrode 40A adjacent to the second lateral surface WS2 in the width direction W.

As shown in FIGS. 2A to 2C, the thickness in the length direction L of the second external electrode 40B in the middle in the lamination direction T is thicker than the thickness in the length direction L of the second external electrode 40B adjacent to the first main surface TS1 in the lamination direction T and the thickness in the length direction L of the second external electrode 40B adjacent to the second main surface TS2 in the lamination direction T. As shown in FIGS. 4A and 4B, the thickness in the length direction L of the second external electrode 40B in the middle in the width direction W is thicker than the thickness in the length direction L of the second external electrode 40B adjacent to the first lateral surface WS1 in the width direction W and the thickness in the length direction L of the second external electrode 40B adjacent to the second lateral surface WS2 in the width direction W.

With such a configuration, it is possible to maintain a long distance of the intrusion path of moisture from the outside, such that it is possible to increase the capacitance and to maintain moisture resistance without increasing the size of the multilayer ceramic capacitor 1.

The first internal electrode layers 31 of one embodiment preferably include the above-described second region EA2 having a higher coverage and a thicker thickness than those of the first region EA1 in the first main surface-side inner layer portion 112, the second main surface-side inner layer portion 113, and the middle inner layer portion 111. However, the first internal electrode layer 31 may include the above-described second region EA2 having a higher coverage and a thicker thickness than those of the first region EA1 at least in any portion of the first main surface-side inner layer portion 112 or the second main surface-side inner layer portion 113. With such a configuration, it is possible to increase the capacitance without increasing the size of the multilayer ceramic capacitor 1.

The second internal electrode layers 32 of one embodiment preferably include the above-described fourth region EB2 having a higher coverage and a thicker thickness than those of the third region EB1 in the first main surface-side inner layer portion 112, the second main surface-side inner layer portion 113, and the middle inner layer portion 111. However, the second internal electrode layer 32 may have the above-described fourth region EB2 having a higher coverage and a thicker thickness than those of the third region EB1 at least in any portion of the first main surface-side inner layer portion 112 or the second main surface-side inner layer portion 113. With such a configuration, it is possible to increase the capacitance without increasing the size of the multilayer ceramic capacitor 1.

The intermediate electrode layers 33 of one embodiment preferably include the above-described sixth region ECA2 and eighth region ECB2 having a higher coverage and a thicker thickness than those of the fifth region ECA1 and seventh region ECB1 in the first main surface-side inner layer portion 112, the second main surface-side inner layer portion 113, and the middle inner layer portion 111. However, the second internal electrode layer 32 may have the above-described sixth region ECA2 and eighth region ECB2 having a higher coverage and a thicker thickness than those of the fifth region ECA1 and seventh region ECB1 at least in any portion of the first main surface-side inner layer portion 112 or the second main surface-side inner layer portion 113. With such a configuration, it is possible to increase the capacitance without increasing the size of the multilayer ceramic capacitor 1.

In one embodiment, the first sloped portion FA1, the second sloped portion FB1, the third sloped portion FCA1, the fourth sloped portion FCB1, the fifth sloped portion FA2, and the sixth sloped portion FB2 are provided in the first main surface-side inner layer portion 112 and the second main surface-side inner layer portion 113. However, the first sloped portion FA1, the second sloped portion FB1, the third sloped portion FCA1, the fourth sloped portion FCB1, the fifth sloped portion FA2, and the sixth sloped portion FB2 may be provided at least in any portion of the first main surface-side inner layer portion 112 or the second main surface-side inner layer portion 113.

The first internal electrode layer 31 of one embodiment preferably includes the above-described second region EA2 having a higher coverage and a thicker thickness than those of the first region EA1 in the first lateral surface-side region 112E, the second lateral surface-side region 113E, and the middle region 111E.

The present disclosure is not limited thereto, but by including the above-described second region EA2 having a higher coverage and a thicker thickness than those of the first region EA1 in the first lateral surface-side region 112E and the second lateral surface-side region 113E in addition to the middle region 111E, it is possible to secure the area of the second region EA2 with high coverage, thereby increasing the capacitance without increasing the size of the multilayer ceramic capacitor 1. The first internal electrode layer may include the above-described second region EA2 having a higher coverage and a thicker thickness than those of the first region EA1 at least in the middle region 111E.

The second internal electrode layer 32 of one embodiment preferably includes the above-described fourth region EB2 having a higher coverage and a thicker thickness than those of the third region EB1 in the first lateral surface-side region 112E, the second lateral surface-side region 113E, and the middle region 111E.

The present disclosure is not limited thereto, but by including the above-described fourth region EB2 having a higher coverage and a thicker thickness than those of the third region EB1 in the first lateral surface-side region 112E and the second lateral surface-side region 113E in addition to the middle region 111E, it is possible to secure the area of the fourth region EB2 with high coverage, thereby increasing the capacitance without increasing the size of the multilayer ceramic capacitor 1. The second internal electrode layer may include the above-described fourth region EB2 having a higher coverage and a thicker thickness than those of the third region EB1 at least in the middle region 111E.

The intermediate electrode layer 33 of one embodiment preferably includes the above-described sixth region ECA2 and eighth region ECB2 having a higher coverage and a thicker thickness than those of the fifth region ECA1 and seventh region ECB1 in the first lateral surface-side region 112E, the second lateral surface-side region 113E, and the middle region 111E.

The present disclosure is not limited thereto, but by including the above-described sixth region ECA2 and eighth region ECB2 having a higher coverage and a thicker thickness than those of the fifth region ECA1 and seventh region ECB1 in the first lateral surface-side region 112E and the second lateral surface-side region 113E in addition to the middle region 111E, it is possible to secure the area of the sixth region ECA2 and eighth region ECB2 with high coverage, thereby increasing the capacitance without increasing the size of the multilayer ceramic capacitor 1. The intermediate electrode layer may include the above-described sixth region ECA2 and eighth region ECB2 having a higher coverage and a thicker thickness than those of the fifth region ECA1 and seventh region ECB1 at least in the middle region 111E.

In the multilayer ceramic capacitor 1 according to one embodiment, as described above, the end portion of the intermediate electrode layer 33 adjacent to the first end surface LS1 is located closer to the first end surface LS1 than the end portion 40AE of the first external electrode 40A. In addition, in the multilayer ceramic capacitor 1 according to one embodiment, as described above, the end portion of the intermediate electrode layer 33 adjacent to the second end surface LS2 is located closer to the second end surface LS2 than the end portion 40BE of the second external electrode 40B.

However, when the end portion of the intermediate electrode layer 33 adjacent to the first end surface LS1 is located closer to the second end surface LS2 than the end portion 40AE of the first external electrode 40A, and the end portion of the intermediate electrode layer 33 adjacent to the second end surface LS2 is located closer to the first end surface LS1 than the end portion 40BE of the second external electrode 40B, the first electrode layer-side counter portion ECA of the intermediate electrode layer 33 does not include the fifth region ECA1 and includes only the sixth region ECA2, and the second electrode layer-side counter portion ECB of the intermediate electrode layer 33 does not include the seventh region ECB1 and includes only the eighth region ECB2. The thickness of the first electrode layer-side counter portion ECA, the second electrode layer-side counter portion ECB, and the coupling portion E0 of the intermediate electrode layer 33 may be the same.

### <Measurement of Various Parameters>

Hereinafter, a method of measuring various parameters will be described. Various parameters can be measured by the following method.

### <Method of Measuring Thickness of Internal Electrode Layer and Dielectric Layer>

Hereinafter, a method of measuring the thickness of the internal electrode layer 30 of the multilayer ceramic capacitor 1 in the lamination direction T will be described.

First, the multilayer ceramic capacitor 1 is polished from the first lateral surface WS1 or the second lateral surface WS2 to expose the LT cross section where the series capacitor forming portion 11E of the multilayer body 10 is exposed. If necessary, the exposed cross section of the observation position is etched to remove the internal electrode layer 30 expanded by polishing. Of the exposed cross sections, the measurement points M1 to M8 described later are observed using a scanning electron microscope (SEM). In addition, for example, in a case where only the first main surface-side inner layer portion 112 includes the above-described second region EA2, fourth region EB2, sixth region ECA2, and eighth region ECB2 having a high coverage and a thick thickness, observation using SEM is performed with respect to the measurement points M1 to M4.

The measurement points are set in the region having a high coverage and a thick thickness, and the region having a low coverage and a thin thickness. The measurement values are the average values of each region. Since the multilayer ceramic capacitor 1 according to one embodiment has a two-portion configuration, the measurement points M1 to M8 described later are set, but it is preferable to set measurement points according to the configuration of the multilayer ceramic capacitor.

The measurement points M1 to M4 are set in the first main surface-side inner layer portion 112. The measurement point M1 is a portion including the first region EA1 of the first internal electrode layer 31 and the fifth region ECA1 of the intermediate electrode layer 33 in the first main surface-side inner layer portion 112. The measurement point M2 is a portion including the second region EA2 of the first internal electrode layer 31 and the sixth region ECA2 of the intermediate electrode layer 33 in the first main surface-side inner layer portion 112.

The measurement point M3 is a portion including the fourth region EB2 of the second internal electrode layer 32 and the eighth region ECB2 of the intermediate electrode layer 33 in the first main surface-side inner layer portion 112. The measurement point M4 is a portion including the third region EB1 of the second internal electrode layer 32 and the seventh region ECB1 of the intermediate electrode layer 33 in the first main surface-side inner layer portion 112.

The measurement points M5 to M8 are set in the second main surface-side inner layer portion 113. The measurement point M5 is a portion including the first region EA1 of the first internal electrode layer 31 and the fifth region ECA1 of the intermediate electrode layer 33 in the second main surface-side inner layer portion 113. The measurement point M6 is a portion including the second region EA2 of the first internal electrode layer 31 and the sixth region ECA2 of the intermediate electrode layer 33 in the second main surface-side inner layer portion 113.

The measurement point M7 is a portion including the fourth region EB2 of the second internal electrode layer 32 and the eighth region ECB2 of the intermediate electrode layer 33 in the second main surface-side inner layer portion 113. The measurement point M8 is a portion including the third region EB1 of the second internal electrode layer 32 and the seventh region ECB1 of the intermediate electrode layer 33 in the second main surface-side inner layer portion 113.

The measurement points M1 and M5 are set at the center position of the distance Le1 shown in FIG. 2C in the length direction L. The measurement points M2 and M6 are set at the center position of the second region EA2 of the first internal electrode layer 31 shown in FIG. 2C in the length direction L. The measurement points M3 and M7 are set at the center position of the fourth region EB2 of the second internal electrode layer 32 shown in FIG. 2C in the length direction L. The measurement points M4 and M8 are set at the center position of the distance Le2 shown in FIG. 2C in the length direction L.

The measurement points M2, M3, M6, and M7 are measurement points set in regions having a high coverage and a thick thickness, and the measurement points M1, M4, M5, and M8 are measurement points set in regions having a low coverage and a thin thickness.

The observation magnification at the time of observing each measurement point is a magnification at which the four dielectric layers 20 and the five internal electrode layers 30 can be observed, and the dielectric layers 20 and the internal electrode layers 30 can be clearly distinguished from each other. FIG. 5 is a view showing an example of an SEM enlarged image of an exposed cross section of an inner layer portion at a measurement point.

When the thickness of each of the internal electrode layers 30 of the multilayer ceramic capacitor 1 is measured, as shown in FIG. 5, five straight lines La to Le extending in the lamination direction of the multilayer body 10 are drawn at equal intervals of the pitch S in the enlarged image of the cross section of the multilayer ceramic capacitor 1. The pitch S may be set about 5 times to 10 times the thickness of each of the internal electrode layers 30 to be measured and, for example, in a case of measuring an internal electrode having a thickness of about 0.5 µm, the pitch S is set to 2.5 µm.

Next, the thickness of each of the internal electrode layers 30 is measured on each of the straight lines La to Le. However, when the internal electrode layers are missing on each of the straight lines La to Le and the dielectric layers 20 sandwiching the internal electrode layer 30 are connected to each other, or when the enlarged image of the measurement position is unclear, a new straight line is drawn and the thickness of each of the internal electrode layers 30 is measured.

For example, when the thickness of each of the internal electrode layers 30 is measured, as shown in FIG. 5, the thickness d1 on the straight line La, the thickness d2 on the straight line Lb, the thickness d3 on the straight line Lc, the thickness d4 on the straight line Ld, and the thickness d5 on the straight line Le are measured. Then, for each of the measurement points in the first main surface-side inner layer portion 112 and the measurement points in the second main surface-side inner layer portion 113, the thickness of each of the five internal electrode layers 30 is measured by the above-described method, and the average value thereof is defined as the thickness of the internal electrode layer 30 of one embodiment.

For example, when measuring the thickness of the second region EA2, the fourth region EB2, the sixth region ECA2, and the eighth region ECB2, which are regions with high coverage and thick thickness, the thicknesses of 25 points of 5 locations × 5 layers are measured at each of the measurement points M2, measurement point M3, measurement point M6, and measurement point M7, and an average value of 100 points in total is set as the thicknesses of the second region EA2, the fourth region EB2, the sixth region ECA2, and the eighth region ECB2 of one embodiment.

For example, when measuring the thickness of the first region EA1, the third region EB1, the fifth region ECA1, and the seventh region ECB1, which are regions with low coverage and thin thickness, the thicknesses of 25 points of 5 locations × 5 layers are measured at each of the measurement points M1, M4, M5, and M8, and an average value of 100 points in total is set as the thicknesses of the first region EA1, the third region EB1, the fifth region ECA1, and the seventh region ECB1 of one embodiment.

The thickness of the dielectric layer 20 is also measured in the same manner as the internal electrode layer 30. When the thickness of the dielectric layer 20 is measured, as shown in FIG. 5, the thicknesses D1, D2, D3, D4, and D5 respectively on the straight lines La, Lb, Lc, Ld, and Le are measured.

Then, for each of the measurement points in the first main surface-side inner layer portion 112 and the measurement points in the second main surface-side inner layer portion 113, the thickness of each of the four dielectric layers 20 is measured by the above-described method, and the average value thereof is set as the thickness of the dielectric layer 20 of one embodiment. The thickness of the dielectric layer 20 can be measured for each of the regions corresponding to the second region EA2, the fourth region EB2, the sixth region ECA2, and the eighth region ECB2, the regions corresponding to the first region EA1 and the fifth region ECA1, and the regions corresponding to the third region EB1 and the seventh region ECB1.

The polishing and the measurement are repeated, and the measurement can be performed at eight measurement points M1 to M8 at three positions including the center position of the first lateral surface-side region 112E in the width direction W, the center position of the middle region 111E in the width direction W, and the center position of the second lateral surface-side region 113E in the width direction W, respectively.

### <Method of Measuring Coverage>

A method for measuring the coverage as the coverage ratio of the internal electrode layer 30 with respect to the dielectric layer 20 will be described. In this measurement method, the measurement of coverage is also called the measurement of line coverage.

In the exposed LT cross section, line coverage is measured using an optical microscope. The measurement points at the time of measuring the line coverage conform to the measurement points M1 to M8 described above. However, the observation magnification at the time of observing each measurement point is 1000 times.

The internal electrode layer 30 has a region where an electrically conductive component exists and a region where an electrically conductive component does not exist, such as a hollow portion. The line coverage is calculated as the ratio of the length in the length direction L of the region occupied by the electrically conductive component actually constituting the internal electrode layer 30 to the length in the length direction L of the internal electrode layer 30 when the presence or absence of the electrically conductive component is not considered, that is, the ratio of the length in the length direction L excluding the region where the electrically conductive component does not exist relative to the length in the length direction L of the internal electrode layer 30 when the presence or absence of the electrically conductive component is not considered. The coverage of the internal electrode layer 30 is measured at each measurement point in the first main surface-side inner layer portion 112 and the second main surface-side inner layer portion 113, and the average value is used as the coverage of the internal electrode layer 30 of one embodiment. For example, when measuring the coverage of the second region EA2, the fourth region EB2, the sixth region ECA2, and the eighth region ECB2, the coverage of the internal electrode layer 30 is measured at each of the measurement points M2, M3, M6, and M7, and the average value is used as the coverage of the second region EA2, the fourth region EB2, the sixth region ECA2, and the eighth region ECB2 of one embodiment. For example, when measuring the coverage of the first region EA1, the third region EB1, the fifth region ECA1, and the seventh region ECB1, the coverage of the internal electrode layer 30 is measured at each of the measurement points M1, M4, M5, and M8, and the average value is used as the coverage of the first region EA1, the third region EB1, the fifth region ECA1, and the seventh region ECB1 of one embodiment.

### <Distance and Angle Measurement Methods>

Various distances and angles are measured using the exposed LT cross section described above. Distance and angle measurements are performed using a digital microscope.

### <Manufacturing Method>

Next, a method of manufacturing the multilayer ceramic capacitor 1 of one embodiment will be described. The manufacturing method of the multilayer ceramic capacitor 1 of one embodiment is not limited as long as the requirements described above are satisfied. However, a preferred manufacturing method includes the following steps. Details of each step will be described below.

Dielectric sheets for manufacturing the dielectric layers 20 and an electrically conductive paste for manufacturing the internal electrode layers 30 are provided. The dielectric sheet and the electrically conductive paste for manufacturing the internal electrode include a binder and a solvent. Known binders and solvents may be used.

On each of the dielectric sheets, an electrically conductive paste for manufacturing the internal electrode layer 30 is printed in a predetermined pattern by, for example, screen printing or gravure printing. Thus, the dielectric sheet in which the pattern of the first internal electrode layer 31 is formed and the dielectric sheet in which the pattern of the second internal electrode layer 32 is formed, and the dielectric sheet in which the pattern of the intermediate electrode layer 33 is formed are each prepared. The printing method is not limited to screen printing or the like.

Here, a method of printing the electrically conductive paste for manufacturing the internal electrode layer 30 on the dielectric sheet will be described with reference to FIGS. 6 and 7. FIG. 6 is a schematic diagram showing a cross section of a dielectric sheet when printing an electrically conductive paste P1. FIG. 7 is a schematic diagram showing a cross section of the dielectric sheet of FIG. 6 when printing an electrically conductive paste P2.

As shown in FIGS. 6 and 7, the dielectric sheet on which the pattern of the internal electrode layer 30 is printed includes a ceramic green sheet G, and an electrically conductive paste P1 and an electrically conductive paste P2 provided on the ceramic green sheet G. The electrically conductive paste P1 and the electrically conductive paste P2 are formed by the hollow portion of a screen S1 and the hollow portion of a screen S2.

First, as shown in FIG. 6, the electrically conductive paste P1 is provided on the ceramic green sheet G by using the screen S1 having hollow portions formed in a pattern corresponding to, for example, the outer shape of the intermediate electrode layer 33.

Next, as shown in FIG. 7, the electrically conductive paste P2 is screen-printed on the electrically conductive paste P1 using the screen S2 having hollow portions formed in a pattern corresponding to, for example, the sixth region ECA2 and the eighth region ECB2, and the coupling portion E0. Thus, the portions corresponding to the sixth region ECA2 and the eighth region ECB2 are thicker than the other regions by the amount of the electrically conductive paste P2 that has been screen-printed.

Here, the electrically conductive paste P1 and the electrically conductive paste P2 shown in FIG. 7, for example, are portions that function as the intermediate electrode layer 33 of the multilayer ceramic capacitor. In this way, a dielectric sheet on which the electrically conductive paste P33 is formed is prepared.

Similarly for the second region EA2 of the first internal electrode layer 31 and the fourth region EB2 of the second internal electrode layer 32, an electrically conductive paste is screen-printed on the electrically conductive paste corresponding to the first internal electrode layer 31 and the second internal electrode layer 32, using a screen having a hollow portion formed in a pattern corresponding to the second region EA2 and the fourth region EB2. As a result, the portions corresponding to the second region EA2 and the fourth region EB2 become thicker than other regions by the amount of the electrically conductive paste P2 screen-printed. In this manner, a dielectric sheet on which the electrically conductive pastes P31 and P32 are formed is prepared.

By laminating a predetermined number of dielectric sheets on which patterns of the internal electrode layers 30 are not printed, a portion P12 functioning as the first main surface-side outer layer portion 12 adjacent to the first main surface TS1 is formed.

Next, as shown in FIG. 8, a portion P11 functioning as the inner layer portion 11 is formed by sequentially laminating the screen-printed dielectric sheets shown in FIG. 7 on the surface of the portion P12 functioning as the first main surface-side outer layer portion 12. Here, specifically with reference to a portion surrounded by C in FIG. 8, the dielectric sheet G1 on which the electrically conductive paste P31 functioning as the first internal electrode layer 31 and the electrically conductive paste P32 functioning as the second internal electrode layer 32 are provided and the dielectric sheet G2 on which the electrically conductive paste P33 functioning as the intermediate electrode layer 33 is provided are sequentially and alternately laminated. The portion C in FIG. 8 is cut out in a subsequent step to form one multilayer chip. In order to prevent the first recessed portion DE1 and the second recessed portion DE2 from being formed, a dielectric paste may be provided between the electrically conductive paste P31 and the electrically conductive paste P32.

A predetermined number of dielectric sheets on which the pattern of the internal electrode layer 30 is not printed are laminated on the surface of the portion P11 functioning as the inner layer portion 11, such that a portion P13 functioning as the second main surface-side outer layer portion 13 adjacent to the second main surface TS2 is formed. With such a manufacturing method above, a multilayer sheet is manufactured.

The multilayer sheet is pressed in the height direction by means of hydrostatic pressing, for example, such that a multilayer block is produced.

The multilayer block is cut to a predetermined size, such that multilayer chips are cut out. At this time, corner portions and ridge portions of the multilayer chip may be rounded by barrel polishing or the like.

The multilayer chip is fired to produce the multilayer body 10. The firing temperature depends on the materials of the dielectric layers 20 and the internal electrode layers 30, but is preferably 900°C or more and 1400°C or less. Here, by adjusting the thickness of the electrically conductive paste for the internal electrode layers 30 according to the region, as well as adjusting the pressing conditions and firing conditions, it is possible to obtain the multilayer body 10 having the configuration of the internal electrode layers 30 of one embodiment and the surface shape of the first main surface TS1 and the second main surface TS2. For example, by adjusting the application state including the thickness of the electrically conductive paste for the internal electrode layers 30 and the pressing conditions, sloped portions such as the first sloped portion FA1 with gradually decreasing thickness are formed, and the internal electrode layers 30 of one embodiment can be obtained.

An electrically conductive paste functioning as a base electrode layer is applied to both end surfaces of the multilayer body 10.

In one embodiment, the electrically conductive paste is also applied to the first main surface TS1 and the second main surface TS2, and the first lateral surface WS1 and the second lateral surface WS2 of the multilayer body 10. At this time, the electrically conductive paste is applied so that the distance L1 between the first external electrode 40A and the second external electrode 40B is longer than the distance Lt0 in the length direction L from the end adjacent to the first end surface LS1 of the second region EA2 to the end adjacent to the second end surface LS2 of the fourth region EB2 in the length direction L, or the distance Lt0 in the length direction L from the end adjacent to the first end surface LS1 of the sixth region ECA2 to the end adjacent to the second end surface LS2 of the eighth region ECB2 in the length direction L.

An example of a more specific manufacturing method will be described. The first main surface TS1 or the second main surface TS2 of the multilayer body 10 includes the first flat surface FPA1, the second flat surface FPA2, the third flat surface FPB1, the fourth flat surface FPB2, the first recessed portion DE1, and the second recessed portion DE2 corresponding to the positions of the second region EA2, the fourth region EB2, the sixth region ECA2, and the eighth region ECB2. In addition, the first sloped surface FC1, the second sloped surface FC2, the third sloped surface FC3, and the fourth sloped surface FC4 are formed on the periphery thereof. Further, the first plane surface portion PA1, the second plane surface portion PA2, the third plane surface portion PB1, and the fourth plane surface portion PB2 are each provided closer to the end surface than each of the sloped surfaces.

Therefore, for example, the electrically conductive paste is applied to the first plane surface portion PA1, the second plane surface portion PA2, the third plane surface portion PB1, and the fourth plane surface portion PB2, each of which is located closer to the end surface than each of the sloped surfaces. By applying the electrically conductive paste to the multilayer body 10 in this manner, the electrically conductive paste is applied so that the distance L1 between the first external electrode 40A and the second external electrode 40B is longer than the distance Lt0 in the length direction L from the end adjacent to the first end surface LS1 of the second region EA2 to the end adjacent to the second end surface LS2 of the fourth region EB2, or the distance Lt0 in the length direction L from the end adjacent to the first end surface LS1 of the sixth region ECA2 to the end adjacent to the second end surface LS2 of the eighth region ECB2. The first sloped surface FC1, the second sloped surface FC2, the third sloped surface FC3, and the fourth sloped surface FC4 may be partially coated with an electrically conductive paste at a portion of each of them adjacent to the end surface.

The above method is one example of a manufacturing method, and the present invention is not limited thereto. The base electrode layer may also be adjusted by removal after the firing treatment.

In one embodiment, the base electrode layer is a fired layer. An electrically conductive paste containing a glass component and a metal is applied to the multilayer body 10 by a method such as dipping. Thereafter, a firing process is performed to form a base electrode layer. The temperature of the firing treatment at this time is preferably 700°C or more and 900°C or less.

In a case in which the multilayer chip before firing and the electrically conductive paste applied to the multilayer chip are fired simultaneously, it is preferable that the fired layer be formed by firing a layer to which a ceramic material is added instead of a glass component. At this time, it is particularly preferable to use, as the ceramic material to be added, the same type of ceramic material as the dielectric layer 20. In this case, an electrically conductive paste is applied to the multilayer chip before firing, and the multilayer chip and the electrically conductive paste applied to the multilayer chip are fired simultaneously, such that the multilayer body 10 having a fired layer formed therein is formed.

Thereafter, the plated layer is formed on the surface of the base electrode layer. In one embodiment, the first plated layer 60A is formed on the first base electrode layer 50A. The second plated layer 60B is formed on the second base electrode layer 50B. In one embodiment, the Ni plated layer and the Sn plated layer are formed as the plated layer. Upon performing the plating process, electrolytic plating or electroless plating may be adopted.

However, the electroless plating has room for improvement in that a pretreatment with a catalyst or the like is necessary in order to improve the plating deposition rate, and thus the process is complicated. Therefore, normally, electrolytic plating is preferably adopted. The Ni plated layer and the Sn plated layer are sequentially formed, for example, by barrel plating.

When the electrically conductive resin layer is provided as the base electrode layer, the electrically conductive resin layer may cover the fired layer. When the electrically conductive resin layer is provided, an electrically conductive resin paste including a thermosetting resin and a metal component is applied onto the fired layer, and then heat-treated at a temperature of 250°C to 550°C or higher. As a result, the thermosetting resin is thermally cured to form an electrically conductive resin layer. The atmosphere at the time of this heat treatment is preferably an N₂ atmosphere. Furthermore, in order to prevent scattering of the resin and to prevent oxidation of various metal components, the oxygen concentration is preferably 100 ppm or less.

By such a manufacturing process, the multilayer ceramic capacitor 1 is manufactured.

### <Second Embodiment>

The multilayer ceramic capacitor 1 according to the second embodiment is not limited to the configuration shown in FIGS. 1 to 4B. For example, the multilayer ceramic capacitor 1 may be a multilayer ceramic capacitor with a three-portion configuration as shown in FIG. 9, and the advantageous effects of the present disclosure can be obtained.

The multilayer ceramic capacitor 1 according to the second embodiment will be described below with reference to FIGS. 9 and 10. In the following description, detailed explanations of configurations that are the same as those in the first embodiment may be omitted. FIG. 9 is a diagram for explaining a schematic configuration of a multilayer body with a three-portion configuration according to the second embodiment, and corresponds to FIG. 2A in the first embodiment. FIG. 10 is a schematic diagram showing a portion of a multilayer sheet in which a portion that functions as the first main surface-side outer layer portion and a portion that functions as the second main surface-side outer layer portion are provided above and below a portion that functions as the inner layer portion in the second embodiment.

As shown in FIG. 1 and FIG. 2, the multilayer ceramic capacitor 1 according to the first embodiment includes the first recessed portion DE1 as a recessed portion provided in approximately the middle in the length direction L on the first main surface TS1, and the second recessed portion DE2 as a recessed portion provided in approximately the middle in the length direction L on the second main surface TS2. However, the multilayer ceramic capacitor 1 according to the second embodiment includes, as shown in FIG. 9, two first recessed portions DE1 provided on the first main surface TS1, and two second recessed portions DE2 provided on the second main surface TS2. However, the recessed portions may not be provided.

The plurality of internal electrode layers 30 include a plurality of first internal electrode layers 31, a plurality of second internal electrode layers 32, and intermediate electrode layers 33.

As shown in FIG. 9, the intermediate electrode layers 33 according to the second embodiment include first intermediate electrode layers 331 and second intermediate electrode layers 332.

Each of the first intermediate electrode layers 331 includes a first electrode layer-side counter portion EC1A, a first intermediate electrode layer counter portion EC1B, and a first coupling portion E10. The first electrode layer-side counter portion EC1A is a region opposed to the first internal electrode layer 31 provided adjacent in the lamination direction T, and is located inside the multilayer body 10. The first intermediate electrode layer counter portion EC1B is a region opposed to the second intermediate electrode layer 332 provided adjacent in the lamination direction T, and is located inside the multilayer body 10. The first coupling portion E10 is a portion that couples the first electrode layer-side counter portion EC1A and the first intermediate electrode layer counter portion EC1B, and is provided between the first electrode layer-side counter portion EC1A and the first intermediate electrode layer counter portion EC1B.

Each of the second intermediate electrode layers 332 includes a second electrode layer-side counter portion EC2A, a second intermediate electrode layer counter portion EC2B, and a second coupling portion E20. The second electrode layer-side counter portion EC2A is opposed to the second internal electrode layer 32 provided adjacent in the lamination direction T. The second intermediate electrode layer counter portion EC2B is opposed to the first intermediate electrode layer 331 provided adjacent in the lamination direction T. The second coupling portion E20 is a portion that couples the second electrode layer-side counter portion EC2A and the second intermediate electrode layer counter portion EC2B, and is provided between the second electrode layer-side counter portion EC2A and the second intermediate electrode layer counter portion EC2B.

As shown in FIG. 9, in the multilayer ceramic capacitor 1 according to the second embodiment, each of the first internal electrode layers 31 is provided adjacent to a corresponding one of the second intermediate electrode layers 332 in the length direction L. In the multilayer ceramic capacitor 1 according to the second embodiment, each of the second internal electrode layers 32 is provided adjacent to a corresponding one of the first intermediate electrode layer 331 in the length direction L.

In the multilayer ceramic capacitor 1 according to the second embodiment, the first internal electrode layer 31 and the second intermediate electrode layer 332, and the second internal electrode layer 32 and the first intermediate electrode layer 331 are laminated alternately with a corresponding one of the dielectric layers 20 interposed therebetween.

That is, in one embodiment, a capacitance CAP1 (first capacitor portion) is formed by the first counter portions EA and the first electrode layer-side counter portions EC1A being opposed to each other with a corresponding one of the dielectric layers 20 interposed therebetween. A capacitance CAP2 (second capacitor portion) is formed by the second counter portion EB and the second electrode layer-side counter portion EC2A being opposed to each other with a corresponding one of the dielectric layer interposed therebetween. A capacitance CAP3 (third capacitor portion) is formed by the first intermediate electrode layer counter portion EC1B and the second intermediate electrode layer counter portion EC2B being opposed to each other with a corresponding one of the dielectric layers 20 interposed therebetween. The first coupling portion E10 connects the capacitance CAP1 and the capacitance CAP3 in series. The second coupling portion E20 connects the capacitance CAP2 and the capacitance CAP3 in series. The multilayer ceramic capacitor 1 of one embodiment is a multilayer ceramic capacitor 1 with a series configuration of a three-portion configuration in which three capacitor portions connected in series are provided.

The shapes of the first counter portion EA, the second counter portion EB, the first electrode layer-side counter portion EC1A, the first intermediate electrode layer counter portion EC1B, the second electrode layer-side counter portion EC2A, and the second intermediate electrode layer counter portion EC2B are not particularly limited, but are preferably rectangular. However, the corner portions of the rectangular shape may be rounded, or the corner portions of the rectangular shape may be formed obliquely. The shapes of the first extension portion D1 and the second extension portion D2 are not particularly limited, but are preferably rectangular. However, the corner portions of the rectangular shape may be rounded, or the corner portions of the rectangular shape may be formed obliquely.

In addition, the multilayer body 10 includes a series capacitor forming portion 11E. The series capacitor forming portion 11E includes a portion where the first counter portion EA of the first internal electrode layer 31 and the first electrode layer-side counter portion EC1A of the intermediate electrode layer 33 are opposed to each other (a portion forming the capacitance CAP1), a portion where the second counter portion EB of the second internal electrode layer 32 and the second electrode layer-side counter portion EC2A of the intermediate electrode layer 33 are opposed to each other (a portion forming the capacitance CAP2), a portion where the first intermediate electrode layer counter portion EC1B and the second intermediate electrode layer counter portion EC2B of the intermediate electrode layer 33 are opposed to each other (a portion forming the capacitance CAP3), a portion that connects the capacitance CAP1 and the capacitance CAP3 in series, and a portion that connects the capacitance CAP2 and the capacitance CAP3 in series. The series capacitor forming portion 11E is configured as a portion of the inner layer portion 11. The portion forming the capacitance CAP1 (first capacitor portion), the portion forming the capacitance CAP2 (second capacitor portion), and the portion forming the capacitance CAP3 (third capacitor portion) of the series capacitor forming portion 11E are also referred to as a capacitor active portion.

The series capacitor forming portion 11E of the multilayer body 10 includes a first series connection region and a second series connection region. The first series connection region is a portion including the dielectric layer 20 and the first coupling portion E10, located between the portion forming the capacitance CAP1 and the portion forming the capacitance CAP3. The second series connection region is a portion including the dielectric layer 20 and the second coupling portion E20, located between the portion forming the capacitance CAP2 and the portion forming the capacitance CAP3. That is, the first series connection region is an aggregate of a portion of the plurality of dielectric layers 20 that overlaps with the first coupling portion E10 when viewed from the lamination direction T, and a plurality of the first coupling portions E10. The second series connection region is an aggregate of a portion of the plurality of dielectric layers 20 that overlaps with the second coupling portion E20 when viewed from the lamination direction T, and a plurality of the second coupling portions E20.

The external electrode 40 includes, as shown in FIG. 9, a first external electrode 40A provided adjacent to the first end surface LS1 of the multilayer body 10, and a second external electrode 40B provided adjacent to the second end surface LS2 of the multilayer body 10.

The first coupling portion E10 connects the capacitance CAP1 and the capacitance CAP3 in series. The second coupling portion E20 connects the capacitance CAP2 and the capacitance CAP3 in series. Therefore, between the first external electrode 40A connected to the first internal electrode layer 31 and the second external electrode 40B connected to the second internal electrode layer 32, capacitor characteristics due to the series connection capacitance are developed.

In this way, the multilayer ceramic capacitor 1 according to one embodiment differs from the first embodiment in the configuration of the internal electrode layers 30 inside the multilayer body 10. Specifically, while the internal electrode layers 30 in the multilayer ceramic capacitor 1 according to the first embodiment has a two-portion configuration, the internal electrode layers 30 in the multilayer ceramic capacitor 1 according to the second embodiment have a three-portion configuration, and the configuration of the internal electrode layers 30 inside the multilayer body 10 differs from the first embodiment.

On the other hand, there are similar configurations between the multilayer ceramic capacitor 1 according to the first embodiment and the multilayer ceramic capacitor 1 according to the second embodiment in terms of increasing coverage as follows. For example, as described above, in order to increase coverage, the thickness of the internal electrode layers is increased by the above-described manufacturing method. Therefore, the internal electrode layers 30 in regions with high coverage are thicker than the internal electrode layers 30 with low coverage.

In addition, a sloped portion where the thickness gradually changes is provided between the internal electrode layers 30 in regions with high coverage and the internal electrode layers 30 with low coverage. Also, in regions with high coverage, protruding surfaces are provided on the first main surface TS1 and the second main surface TS2. Furthermore, sloped surfaces are provided between the protruding surfaces in regions with high coverage and the plane surface portions in other regions. Also, as in the multilayer ceramic capacitor 1 according to the first embodiment, in regions with high coverage, when there is a gap in the middle in the length direction L between two internal electrode layers 30 provided in the length direction L, a recessed portion may be provided at a position on the protruding surface corresponding to that gap in the length direction L.

Therefore, in the description of the multilayer ceramic capacitor 1 according to one embodiment, configurations similar to the first embodiment provided by increasing the thickness of the internal electrode layers by the above-described manufacturing method in order to increase coverage as described above may be omitted for convenience of explanation.

As shown in FIG. 9, the first counter portion EA of each of the first internal electrode layers 31 includes a first region EA1 and a second region EA2. The second counter portion EB of each of the second internal electrode layers 32 includes a third region EB1 and a fourth region EB2.

In one embodiment, as shown in FIG. 9, the first electrode layer-side counter portion EC1A of the first intermediate electrode layer 331 includes a fifth region EC1A1 and a sixth region EC1A2. The fifth region EC1A1 is a region of the first electrode layer-side counter portion EC1A adjacent to the first end surface LS1. The sixth region EC1A2 is a region of the first electrode layer-side counter portion EC1A adjacent to the second end surface LS2.

In one embodiment, as shown in FIG. 9, the second electrode layer-side counter portion EC2A of the second intermediate electrode layer 332 includes a seventh region EC2A1 and an eighth region EC2A2. The seventh region EC2A1 is a region of the second electrode layer-side counter portion EC2A adjacent to the second end surface LS2. The eighth region EC2A2 is a region of the second electrode layer-side counter portion EC2A adjacent to the first end surface LS1.

The coverage of the first intermediate electrode layer counter portion EC1B and the coverage of the second intermediate electrode layer counter portion EC2B are higher than the coverage of the region of the first counter portion EA adjacent to the first end surface LS1 and the coverage of the region of the second counter portion EB adjacent to the second end surface LS2.

The coverage of the first intermediate electrode layer counter portion EC1B and the coverage of the second intermediate electrode layer counter portion EC2B are higher than the coverage of the region of the first electrode layer-side counter portion EC1A adjacent to the first end surface LS1 and the coverage of the region of the second electrode layer-side counter portion EC2A adjacent to the second end surface LS2.

With such a configuration, it is possible to increase the thickness of the internal electrode layers 30 in the second region EA2, the fourth region EB2, the sixth region EC1A2, the first intermediate electrode layer counter portion EC1B, the eighth region EC2A2, and the second intermediate electrode layer counter portion EC2B, and increase the coverage, thereby increasing the capacitance, while reducing or preventing an increase in size of the multilayer ceramic capacitor 1. The thickness of the first coupling portion E10 of the first intermediate electrode layer 331 is preferably the same as the thickness of the sixth region EC1A2 of the first electrode layer-side counter portion EC1A and the first intermediate electrode layer counter portion EC1B. The thickness of the second coupling portion E20 of the second intermediate electrode layer 332 is preferably the same as the thickness of the eighth region EC2A2 of the second electrode layer-side counter portion EC2A and the second intermediate electrode layer counter portion EC2B. With such a configuration, it is possible to connect the capacitance CAP1, the capacitance CAP2, and the capacitance CAP3 in series with higher reliability. In addition, this facilitates manufacturing. However, the present invention is not limited thereto.

The plurality of internal electrode layers 30 further include sloped portions. For example, as shown in FIG. 9, the first internal electrode layer 31 includes a first sloped portion FA1 that connects the first region EA1 and the second region EA2. As shown in FIG. 9, the second internal electrode layer 32 includes a second sloped portion FB1 that connects the third region EB1 and the fourth region EB2.

As shown in FIG. 9, the first intermediate electrode layer 331 includes a third sloped portion FCA1 that connects the fifth region EC1A1 and the sixth region EC1A2. As shown in FIG. 9, the second intermediate electrode layer 332 includes a fourth sloped portion FCB1 that connects the seventh region EC2A1 and the eighth region EC2A2.

The first internal electrode layer 31 further includes a fifth sloped portion FA2 located at the first extension portion D1. The fifth sloped portion FA2 is preferably located closer to the first end surface LS1 than the end of the first intermediate electrode layer 331 adjacent to the first end surface LS1 in the length direction L. The second internal electrode layer 32 further includes a sixth sloped portion FB2 located at the second extension portion D2. The sixth sloped portion FB2 is preferably located closer to the second end surface LS2 than the end of the second intermediate electrode layer 332 adjacent to the second end surface LS2 in the length direction L.

As shown in FIG. 9, the multilayer ceramic capacitor includes a first protruding surface EpsA that is exposed from the first external electrode 40A and the second external electrode 40B, and protrudes toward the center in the length direction L.

As shown in FIG. 9, the first protruding surface EpsA includes a first flat surface FPA1 and two first recessed portions DE1. The first recessed portions DE1 are recess-shaped portions that extend in the width direction W. The two first recessed portions DE1 are provided at positions corresponding to gaps between the first internal electrode layer 31 and the second internal electrode layer 32 in the length direction L of the first flat surface FPA1.

The first flat surface FPA1 is a surface perpendicular to the lamination direction T and is located approximately in the middle in the length direction L of the first main surface TS1.

As shown in FIG. 9, the second main surface TS2 includes a second protruding surface EpsB that is exposed from the first external electrode 40A and the second external electrode 40B, and protrudes toward the center in the length direction L.

The second protruding surface EpsB includes a third flat surface FPB1 and two second recessed portions DE2. The second recessed portion DE2 is a recess-shaped portion that extends in the width direction W. The two second recessed portions DE2 are provided at positions corresponding to gaps between the first internal electrode layers 31 and the second internal electrode layers 32 in the length direction L of the third flat surface FPB1.

### <Measurement of Various Parameters>

Hereinafter, a method of measuring various parameters will be described. As mentioned above, descriptions of configurations similar to those of the first embodiment may be omitted. The multilayer ceramic capacitor 1 according to the second embodiment has a three-portion configuration, which is different from the first embodiment. Therefore, the measurement points in the measurement method according to the second embodiment are different from those of the first embodiment. The measurement points according to one embodiment will be described below.

The measurement points are set in regions with high coverage and thick thickness, and regions with low coverage and thin thickness. The measurement values are the average values of each region. In one embodiment, the measurement points MB1 to MB10 described below are set.

The measurement points MB1 to MB5 are set in the first main surface-side inner layer portion 112. The measurement point MB1 is a portion including the first region EA1 of the first internal electrode layer 31 and the fifth region EC1A1 of the first intermediate electrode layer 331 in the first main surface-side inner layer portion 112. The measurement point MB2 is a portion including the second region EA2 of the first internal electrode layer 31 and the sixth region EC1A2 of the first intermediate electrode layer 331 in the first main surface-side inner layer portion 112.

The measurement point MB3 is a portion including the first intermediate electrode layer counter portion EC1B of the first intermediate electrode layer 331 and the second intermediate electrode layer counter portion EC2B of the second intermediate electrode layer 332 in the first main surface-side inner layer portion 112.

The measurement point MB4 is a portion including the fourth region EB2 of the second internal electrode layer 32 and the eighth region EC2A2 of the second intermediate electrode layer 332 in the first main surface-side inner layer portion 112. The measurement point MB5 is a portion including the third region EB1 of the second internal electrode layer 32 and the seventh region EC2A1 of the second intermediate electrode layer 332 in the first main surface-side inner layer portion 112.

The measurement points MB6 to MB10 are set in the second main surface-side inner layer portion 113. The measurement point MB6 is a portion including the first region EA1 of the first internal electrode layer 31 and the fifth region EC1A1 of the first intermediate electrode layer 331 in the second main surface-side inner layer portion 113. The measurement point MB7 is a portion including the second region EA2 of the first internal electrode layer 31 and the sixth region EC1A2 of the first intermediate electrode layer 331 in the second main surface-side inner layer portion 113.

The measurement point MB8 is a portion including the first intermediate electrode layer counter portion EC1B of the first intermediate electrode layer 331 and the second intermediate electrode layer counter portion EC2B of the second intermediate electrode layer 332 in the second main surface-side inner layer portion 113.

The measurement point MB9 is a portion including the fourth region EB2 of the second internal electrode layer 32 and the eighth region EC2A2 of the second intermediate electrode layer 332 in the second main surface-side inner layer portion 113. The measurement point MB10 is a portion including the third region EB1 of the second internal electrode layer 32 and the seventh region EC2A1 of the second intermediate electrode layer 332 in the second main surface-side inner layer portion 113.

The measurement points MB1 and MB6 are set at the center position of the distance Le1 shown in FIG. 9 in the length direction L. The measurement points MB2 and MB7 are set at the center position of the second region EA2 of the first internal electrode layer 31 shown in FIG. 9 in the length direction L. The measurement points MB3 and M8 are set at the center position of the distance Le0 shown in FIG. 9 in the length direction L. The measurement points MB4 and M9 are set at the center position of the fourth region EB2 of the second internal electrode layer 32 shown in FIG. 9 in the length direction L. The measurement points M5 and M10 are set at the center position of the distance Le2 shown in FIG. 9 in the length direction L.

### <Manufacturing Method>

Next, a manufacturing method of the multilayer ceramic capacitor 1 according to the second embodiment will be described. As described above, descriptions of configurations similar to those of the first embodiment may be omitted. The manufacturing method of the multilayer ceramic capacitor 1 according to one embodiment is not limited as long as it satisfies the requirements described above. However, a preferred manufacturing method includes the following steps. Details of each step will be described below.

Here, a method for manufacturing a multilayer sheet for manufacturing a multilayer chip will be described with reference to FIG. 10. The multilayer sheet is manufactured by laminating dielectric sheets. The method for manufacturing dielectric sheets shown in FIGS. 6 and 7 is the same as that of the first embodiment, and thus a description thereof will be omitted.

As shown in FIG. 10, the portion P11 functioning as the inner layer portion 11 is formed by sequentially laminating the screen-printed dielectric sheets shown in FIG. 7 on the surface of the portion P12 functioning as the first main surface-side outer layer portion 12. Here, specifically with reference to a portion surrounded by C in FIG. 10, the dielectric sheet G1 on which the electrically conductive paste P31 functioning as the first internal electrode layer 31 and the electrically conductive paste P332 functioning as the second intermediate electrode layer 332 are provided, and the dielectric sheet G2 on which the electrically conductive paste P331 functioning as the first intermediate electrode layer 331 and the electrically conductive paste P32 functioning as the second internal electrode layer 32 are provided are sequentially and alternately laminated. The portion C in FIG. 8 is cut out in a subsequent step to form one multilayer chip.

A predetermined number of dielectric sheets on which the pattern of the internal electrode layer 30 is not printed are laminated on the surface of the portion P11 functioning as the inner layer portion 11, such that a portion P13 functioning as the second main surface-side outer layer portion 13 adjacent to the second main surface TS2 is formed. With the above such manufacturing method, a multilayer sheet is manufactured.

In the dielectric sheet according to one embodiment, the electrically conductive paste P2 is applied to portions functioning as the second region EA2 of the first internal electrode layer 31, the fourth region EB2 of the second internal electrode layer 32, the sixth region EC1A2 of the first intermediate electrode layer 331, the eighth region EC2A2 of the second intermediate electrode layer 332, the first intermediate electrode layer counter portion EC1B, and the second intermediate electrode layer counter portion EC2B. Therefore, the second region EA2 of the first internal electrode layer 31, the fourth region EB2 of the second internal electrode layer 32, the sixth region EC1A2 of the first intermediate electrode layer 331, the eighth region EC2A2 of the second intermediate electrode layer 332, the first intermediate electrode layer counter portion EC1B, and the second intermediate electrode layer counter portion EC2B become thicker, and high coverage portions are established.

### <Third Embodiment>

In the multilayer ceramic capacitor 1 with a three-portion configuration according to the second embodiment, as shown in FIG. 9, regions with high coverage are provided in the first internal electrode layer 31 and the second internal electrode layer 32, but the present invention is not limited to such a configuration. For example, in the multilayer ceramic capacitor 1 with a three-portion configuration, as shown in FIG. 11, regions with high coverage may be provided only in the intermediate electrode layer 33, and regions with high coverage may not be provided in the first internal electrode layer 31 and the second internal electrode layer 32.

Hereinafter, the multilayer ceramic capacitor 1 with a three-portion configuration according to the third embodiment will be described with reference to FIGS. 11 and 12. In the following description, detailed explanations of configurations that are the same as those of the second embodiment will be omitted. FIG. 11 is a schematic diagram for explaining the range of a high coverage portion in the multilayer body with a three-portion configuration according to the third embodiment. FIG. 12 is a schematic diagram showing a portion of a multilayer sheet in which a portion functioning as the first main surface-side outer layer portion and a portion functioning as the second main surface-side outer layer portion are provided above and below a portion functioning as the inner layer portion in the third embodiment.

The multilayer ceramic capacitor 1 according to one embodiment differs from the second embodiment in the configuration of the internal electrode layers inside the multilayer body 10. Specifically, in the multilayer ceramic capacitor 1 with a three-portion configuration according to the second embodiment, the high coverage portion is set in the first internal electrode layer 31, the second internal electrode layer 32, the first intermediate electrode layer 331, and the second intermediate electrode layer 332. However, in the multilayer ceramic capacitor 1 with a three-portion configuration according to the third embodiment, as shown in FIG. 11, the high coverage portion is not set in the first internal electrode layer 31 and the second internal electrode layer 32, but high coverage portions are set in the first intermediate electrode layer 331 and the second intermediate electrode layer 332.

### <Measurement of Various Parameters>

The measurement methods of various parameters in the third embodiment are basically the same as those in the above-described embodiments. The measurement points in the measurement method according to the third embodiment are the points excluding MB2, MB4, MB7, and MB9 from the measurement points in the second embodiment.

### <Manufacturing Method>

A manufacturing method of the multilayer ceramic capacitor 1 according to the third embodiment will be described. As described above, descriptions of configurations similar to those of the first embodiment may be omitted. The manufacturing method of the multilayer ceramic capacitor 1 according to one embodiment is not limited as long as it satisfies the requirements described above. However, a preferred manufacturing method includes the following steps. Details of each step will be described below.

Next, as shown in FIG. 12, a portion P11 functioning as the inner layer portion 11 is formed by sequentially laminating the screen-printed dielectric sheets shown in FIG. 7 on the surface of the portion P12 functioning as the first main surface-side outer layer portion 12. Here, specifically with reference to a portion surrounded by C in FIG. 12, the dielectric sheet G1 on which the electrically conductive paste P31 functioning as the first internal electrode layer 31 and the electrically conductive paste P332 functioning as the second intermediate electrode layer 332 are provided, and the dielectric sheet G2 on which the electrically conductive paste P331 functioning as the first intermediate electrode layer 331 and the electrically conductive paste P32 functioning as the second internal electrode layer 32 is provided are sequentially and alternately laminated. The portion C in FIG. 12 is cut out in a subsequent step to form one multilayer chip.

A predetermined number of dielectric sheets on which the pattern of the internal electrode layer 30 is not printed are laminated on the surface of the portion P11 functioning as the inner layer portion 11, such that a portion P13 functioning as the second main surface-side outer layer portion 13 adjacent to the second main surface TS2 is formed. With the above such manufacturing method, a multilayer sheet is manufactured. In the electrically conductive paste according to one embodiment, the electrically conductive paste P2 is applied only to the portion functioning as the intermediate electrode layer 33, and as shown in FIG. 11, only the intermediate electrode layer 33 becomes thicker and a high coverage portion is set.

### <Fourth Embodiment>

The multilayer ceramic capacitor 1 according to the fourth embodiment is not limited to the configuration shown in FIGS. 1 to 4B. For example, the multilayer ceramic capacitor 1 may be a multilayer ceramic capacitor with a four-portion configuration as shown in FIG. 13.

Hereinafter, a description will be given of the multilayer ceramic capacitor 1 according to the fourth embodiment with reference to FIGS. 13 and 14. In the following description, a detailed description of the same components as those of the first embodiment is omitted. FIG. 13 is a schematic diagram for explaining the range of the high coverage portion of the four-portion configuration multilayer body 10 according to the fourth embodiment. FIG. 14 is a schematic diagram showing a portion of the multilayer sheet in which a portion functioning as the first main surface-side outer layer portion 12 and a portion functioning as the second main surface-side outer layer portion 13 are formed above and below a portion functioning as the inner layer portion 11 in the fourth embodiment.

The multilayer ceramic capacitor 1 according to one embodiment is different from the first embodiment in the internal electrode layers 30 inside the multilayer body 10 and the external electrodes 40. Specifically, while the multilayer ceramic capacitor 1 according to the first embodiment had a two-portion configuration of the internal electrode layers 30, the multilayer ceramic capacitor 1 according to the fourth embodiment has a four-portion configuration of the internal electrode layers 30, and the configuration of the internal electrode layers 30 inside the multilayer body 10 is different from the first embodiment.

The plurality of internal electrode layers 30 include a plurality of first internal electrode layers 31, a plurality of second internal electrode layers 32, and intermediate electrode layers 33.

As shown in FIG. 13, the intermediate electrode layers 33 each include a first intermediate electrode layer 331, a second intermediate electrode layer 332, and a third intermediate electrode layer 333.

The first intermediate electrode layer 331 includes a first electrode layer-side counter portion EC1A opposed to the first internal electrode layer 31 provided adjacent to the first intermediate electrode layer 331 in the lamination direction T, a first intermediate electrode layer counter portion EC1B opposed to the third intermediate electrode layer 333 provided adjacent to the first intermediate electrode layer 331 in the lamination direction T, and a first coupling portion E10.

The second intermediate electrode layer 332 includes a second electrode layer-side counter portion EC2A opposed to the second internal electrode layer 32 provided adjacent to the second intermediate electrode layer 332 in the lamination direction T, a second intermediate electrode layer counter portion EC2B opposed to the third intermediate electrode layer 333 provided adjacent to the second intermediate electrode layer 332 in the lamination direction T, and a second coupling portion E20.

The third intermediate electrode layer 333 includes a third intermediate electrode layer counter portion EC3A opposed to the first intermediate electrode layer 331 provided adjacent to the third intermediate electrode layer 333 in the lamination direction T, a fourth intermediate electrode layer counter portion EC3B opposed to the second intermediate electrode layer 332 provided adjacent to the third intermediate electrode layer 333 in the lamination direction T, and a third coupling portion E30.

As shown in FIG. 13, in the multilayer ceramic capacitor 1 according to the fourth embodiment, the first internal electrode layer 31, the third intermediate electrode layer 333, and the second internal electrode layer 32 are provided adjacent to each other in the length direction L. In the multilayer ceramic capacitor 1 according to the fourth embodiment, the first intermediate electrode layer 331 and the second intermediate electrode layer 332 are provided adjacent to each other in the length direction L.

In the multilayer ceramic capacitor 1 according to the fourth embodiment, the first internal electrode layer 31, the third intermediate electrode layer 333, and the second internal electrode layer 32, and the first intermediate electrode layer 331 and the second intermediate electrode layer 332 are laminated alternately with a corresponding one of the dielectric layers 20 interposed therebetween.

That is, in one embodiment, the capacitance CAP1 (first capacitor portion) is formed by the first counter portion EA and the first electrode layer-side counter portion EC1A opposing each other with a corresponding one of the dielectric layers 20 interposed therebetween. The capacitance CAP2 (second capacitor portion) is formed by the second counter portion EB and the second electrode layer-side counter portion EC2A opposing each other with a corresponding one of the dielectric layers 20 interposed therebetween. The capacitance CAP3 (third capacitor portion) is formed by the first intermediate electrode layer counter portion EC1B and the third intermediate electrode layer counter portion EC3A opposing each other with a corresponding one of the dielectric layers 20 interposed therebetween. The capacitance CAP4 (fourth capacitor portion) is formed by the second intermediate electrode layer counter portion EC2B and the fourth intermediate electrode layer counter portion EC3B opposing each other with a corresponding one of the dielectric layers 20 interposed therebetween. The first coupling portion E10 connects the capacitance CAP1 and the capacitance CAP3 in series. The second coupling portion E20 connects the capacitance CAP2 and the capacitance CAP4 in series. The third coupling portion E30 connects the capacitance CAP3 and the capacitance CAP4 in series. The multilayer ceramic capacitor 1 according to one embodiment is a multilayer ceramic capacitor 1 with a series configuration of a four-portion configuration in which four capacitor portions connected in series are formed.

The shapes of the first counter portion EA, the second counter portion EB, the first electrode layer-side counter portion EC1A, the first intermediate electrode layer counter portion EC1B, the second electrode layer-side counter portion EC2A, the second intermediate electrode layer counter portion EC2B, the third intermediate electrode layer counter portion EC3A, and the fourth intermediate electrode layer counter portion EC3B are not particularly limited, but are preferably rectangular. However, the corner portions of the rectangular shape may be rounded, or the corner portions of the rectangular shape may be formed obliquely. The shapes of the first extension portion D1 and the second extension portion D2 are not particularly limited, but are preferably rectangular. However, the corner portions of the rectangular shape may be rounded, or the corner portions of the rectangular shape may be formed obliquely.

In addition, the multilayer body 10 includes a series capacitor forming portion 11E. The series capacitor forming portion 11E includes a portion where the first counter portion EA of the first internal electrode layer 31 and the first electrode layer-side counter portion EC1A of the intermediate electrode layer 33 are opposed to each other (a portion forming the capacitance CAP1), a portion where the second counter portion EB of the second internal electrode layer 32 and the second electrode layer-side counter portion EC2A of the intermediate electrode layer 33 are opposed to each other (a portion forming the capacitance CAP2), a portion where the first intermediate electrode layer counter portion EC1B of the intermediate electrode layer 33 and the third intermediate electrode layer counter portion EC3A are opposed to each other (a portion forming the capacitance CAP3), a portion where the second intermediate electrode layer counter portion EC2B of the intermediate electrode layer 33 and the fourth intermediate electrode layer counter portion EC3B are opposed to each other (a portion forming the capacitance CAP4), a portion connecting the capacitance CAP1 and the capacitance CAP3 in series, a portion connecting the capacitance CAP2 and the capacitance CAP4 in series, and a portion connecting the capacitance CAP3 and the capacitance CAP4 in series. The series capacitor forming portion 11E defines and functions as a portion of the inner layer portion 11. The portion forming the capacitance CAP1 (first capacitor portion), the portion forming the capacitance CAP2 (second capacitor portion), the portion forming the capacitance CAP3 (third capacitor portion), and the portion forming the capacitance CAP4 (fourth capacitor portion) in the series capacitor forming portion 11E are also referred to as a capacitor active portion.

In addition, the series capacitor forming portion 11E of the multilayer body 10 includes a first series connection region, a second series connection region, and a third series connection region. The first series connection region is a portion including the dielectric layer 20 and the first coupling portion E10, located between the portion forming the capacitance CAP1 and the portion forming the capacitance CAP3. The second series connection region is a portion including the dielectric layer 20 and the second coupling portion E20, located between the portion forming the capacitance CAP2 and the portion forming the capacitance CAP4. The third series connection region is a portion including the dielectric layer 20 and the third coupling portion E30, located between the portion forming the capacitance CAP3 and the portion forming the capacitance CAP4.

That is, the first series connection region is an aggregate of a portion of the plurality of dielectric layers 20 overlapping with the first coupling portion E10 when viewed from the lamination direction T, and the plurality of first coupling portions E10. The second series connection region is an aggregate of a portion of the plurality of dielectric layers 20 overlapping with the second coupling portion E20 when viewed from the lamination direction T, and the plurality of second coupling portions E20. The third series connection region is an aggregate of a portion of the plurality of dielectric layers 20 overlapping with the third coupling portion E30 when viewed from the lamination direction T, and the plurality of third coupling portions E30.

As illustrated in FIG. 13, the external electrode 40 includes a first external electrode 40A provided adjacent to the first end surface LS1 of the multilayer body 10, and a second external electrode 40B provided adjacent to the second end surface LS2 of the multilayer body 10.

The first coupling portion E10 connects the capacitance CAP1 and the capacitance CAP3 in series. The second coupling portion E20 connects the capacitance CAP2 and the capacitance CAP4 in series. The third coupling portion E30 connects the capacitance CAP3 and the capacitance CAP4 in series. Therefore, capacitor characteristics due to the series connection capacitance are developed between the first external electrode 40A connected to the first internal electrode layer 31 and the second external electrode 40B connected to the second internal electrode layer 32.

In this way, the multilayer ceramic capacitor 1 according to one embodiment differs from the first embodiment in the configuration of the internal electrode layers 30 inside the multilayer body 10. Specifically, while the multilayer ceramic capacitor 1 according to the first embodiment has a two-portion configuration of the internal electrode layers 30, the multilayer ceramic capacitor 1 according to the fourth embodiment has a four-portion configuration of the internal electrode layers 30, and the configuration of the internal electrode layers 30 inside the multilayer body 10 differs from the first embodiment.

On the other hand, there are similar configurations between the multilayer ceramic capacitor 1 according to the first embodiment and the multilayer ceramic capacitor 1 according to the fourth embodiment in terms of increasing coverage as described below. Therefore, in the description of the multilayer ceramic capacitor 1 according to one embodiment, the configurations similar to the first embodiment formed by increasing the thickness of the internal electrode layers to increase coverage through the above-described manufacturing method may be omitted for convenience of explanation.

The coverage of the first intermediate electrode layer counter portion EC1B, the coverage of the second intermediate electrode layer counter portion EC2B, the coverage of the third intermediate electrode layer counter portion EC3A, and the coverage of the fourth intermediate electrode layer counter portion EC3B are higher than the coverage of the portion of the first counter portion EA adjacent to the first end surface LS1 and the coverage of the portion of the second counter portion EB adjacent to the second end surface LS2.

The coverage of the first intermediate electrode layer counter portion EC1B, the coverage of the second intermediate electrode layer counter portion EC2B, the coverage of the third intermediate electrode layer counter portion EC3A, and the coverage of the fourth intermediate electrode layer counter portion EC3B are higher than the coverage of the portion of the first electrode layer-side counter portion EC1A adjacent to the first end surface LS1 and the coverage of the portion of the second electrode layer-side counter portion EC2A adjacent to the second end surface LS2.

The coverage of the third intermediate electrode layer 333 is higher than the coverage of the portion of the first internal electrode layer 31 adjacent to the first end surface LS1 and the coverage of the portion of the second internal electrode layer 32 adjacent to the second end surface LS2.

### <Measurement of Various Parameters>

The measurement methods for various parameters in the fourth embodiment are basically the same as those in the above-described embodiments. Similarly to other embodiments, the measurement points in the measurement method according to the fourth embodiment are set in regions where the coverage is high and the thickness is thick, and regions where the coverage is low and the thickness is thin.

### <Manufacturing Method>

The manufacturing method of the multilayer ceramic capacitor 1 according to the fourth embodiment will be described. As mentioned above, descriptions of configurations similar to the first embodiment may be omitted. The manufacturing method of the multilayer ceramic capacitor 1 according to one embodiment is not limited as long as it satisfies the above-described requirements. However, a preferred manufacturing method includes the following steps. Details of each step are described below.

Next, as shown in FIG. 14, a portion P11 functioning as the inner layer portion 11 is formed by sequentially laminating the screen-printed dielectric sheets as shown in FIG. 7 on the surface of the portion P12 functioning as the first main surface-side outer layer portion 12. Here, specifically with reference to a portion surrounded by C in FIG. 14, the dielectric sheet G1 on which the electrically conductive paste P31, the electrically conductive paste P32, and the electrically conductive paste P333 respectively functioning as the first internal electrode layer 31, the second internal electrode layer 32, and the third intermediate electrode layer 333 are provided, and the dielectric sheet G2 on which the electrically conductive paste P331 and the electrically conductive paste P332 functioning as the first intermediate electrode layer 331 and the second intermediate electrode layer 332 are provided are sequentially and alternately laminated. The portion C in FIG. 14 is cut out in a subsequent step to form one multilayer chip.

A predetermined number of dielectric sheets on which the pattern of the internal electrode layer 30 is not printed are laminated on the surface of the portion P11 functioning as the inner layer portion 11, such that a portion P13 functioning as the second main surface-side outer layer portion 13 adjacent to the second main surface TS2 is formed. With the above such manufacturing method, a multilayer sheet is manufactured. In the dielectric sheet according to one embodiment, the electrically conductive paste P2 is applied to portions functioning as the first internal electrode layer 31, the second internal electrode layer 32, and the intermediate electrode layer 33, and as shown in FIG. 13, portions of the first internal electrode layer 31, the second internal electrode layer 32, and the intermediate electrode layer 33 are thickened to establish high coverage portions.

### <Fifth Embodiment>

The multilayer ceramic capacitor 1 with a four-portion configuration according to the fourth embodiment has high coverage regions provided in the first internal electrode layer 31 and the second internal electrode layer 32 as shown in FIG. 13, but the present invention is not limited to such a configuration. For example, in the multilayer ceramic capacitor 1 with a four-portion configuration, as shown in FIG. 15, high coverage regions may be provided only in the intermediate electrode layer 33, and high coverage regions may not be provided in the first internal electrode layer 31 and the second internal electrode layer 32.

The multilayer ceramic capacitor 1 according to the fifth embodiment will be described below with reference to FIGS. 15 and 16. In the following description, detailed explanations of configurations that are the same as those in the first embodiment will be omitted. FIG. 15 is a schematic diagram for explaining the range of high coverage portions in the multilayer body with a four-portion configuration according to the fifth embodiment. FIG. 16 is a schematic diagram showing a portion of a multilayer sheet in which a portion functioning as the first main surface-side outer layer portion and a portion functioning as the second main surface-side outer layer portion are provided above and below a portion functioning as the inner layer portion in the fifth embodiment.

The multilayer ceramic capacitor 1 of one embodiment differs from the fourth embodiment in the configuration of the internal electrode layers inside the multilayer body 10. Specifically, in the multilayer ceramic capacitor 1 with a four-portion configuration according to the fourth embodiment, high coverage portions are set in portions of the first internal electrode layer 31, the second internal electrode layer 32, the first intermediate electrode layer 331, the second intermediate electrode layer 332, and the third intermediate electrode layer 333. However, in the multilayer ceramic capacitor 1 with a four-portion configuration according to the fifth embodiment, as shown in FIG. 15, high coverage portions are not set in the first internal electrode layer 31 and the second internal electrode layer 32, and are set in portions of the first intermediate electrode layer 331, the second intermediate electrode layer 332, and the third intermediate electrode layer 333.

### <Measurement of Various Parameters>

The measurement methods for various parameters in the fifth embodiment are basically the same as those in the above-described embodiments. Similarly to the other embodiments, the measurement points in the measurement method according to the fifth embodiment are set in regions with high coverage and thick thickness, and regions with low coverage and thin thickness.

### <Manufacturing Method>

The manufacturing method of the multilayer ceramic capacitor 1 according to the fifth embodiment will be described. As mentioned above, descriptions of configurations similar to those of the first embodiment may be omitted. The manufacturing method of the multilayer ceramic capacitor 1 according to one embodiment is not limited as long as it satisfies the above-described requirements. However, a preferred manufacturing method includes the following steps. Details of each step are described below.

Next, as shown in FIG. 16, the portion P11 functioning as the inner layer portion 11 is formed by sequentially laminating screen-printed dielectric sheets as shown in FIG. 7 on the surface of the portion P12 functioning as the first main surface-side outer layer portion 12. Here, specifically with reference to a portion surrounded by C in FIG. 16, the dielectric sheet G1 on which the electrically conductive paste P31, the electrically conductive paste P32, and the electrically conductive paste P333 functioning as the first internal electrode layer 31, the second internal electrode layer 32, and the third intermediate electrode layer 333 are provided, and the dielectric sheet G2 on which the electrically conductive paste P331 and the electrically conductive paste P332 functioning as the first intermediate electrode layer 331 and the second intermediate electrode layer 332 are provided are sequentially and alternately laminated. The portion C in FIG. 16 is cut out in a subsequent step to form one multilayer chip.

A predetermined number of dielectric sheets on which the pattern of the internal electrode layer 30 is not printed are laminated on the surface of the portion P11 functioning as the inner layer portion 11, such that a portion P13 functioning as the second main surface-side outer layer portion 13 adjacent to the second main surface TS2 is formed. With such a manufacturing method above, a multilayer sheet is manufactured. In the electrically conductive paste according to one embodiment, the electrically conductive paste P2 is applied only to the portion functioning as the intermediate electrode layer 33, and as shown in FIG. 15, only a portion of the intermediate electrode layer 33 becomes thicker and a high coverage portion is established.

The multilayer ceramic capacitor 1 according to the embodiment described above achieves the following advantageous effects. In a conventional multilayer ceramic capacitor, there is a space between the surface of the multilayer body and a virtual plane connecting the surface of the first external electrode and the surface of the second external electrode. This space necessarily exists as long as the external electrode has a thickness in the lateral surface, but it does not contribute to the capacitance density.

One method of improving the capacitance is to improve the coverage of the internal electrode layer to improve the net effective surface. Here, since there is a positive correlation between the coverage of the internal electrode layer and the thickness of the internal electrode layer, it is necessary to increase the thickness of the internal electrode layer in order to improve the coverage. Therefore, in order to design the multilayer body with the same dimension in the lamination direction T, it is necessary to reduce the number of the internal electrode layers by the amount of thickening the internal electrode layers. Therefore, the effect of increasing the capacitance by increasing the thickness of the internal electrode layer is canceled by the decrease in the number of internal electrode layers.

According to the present disclosure, it is possible to provide multilayer ceramic capacitors that are each able to increase the capacitance without increasing the size of the multilayer ceramic capacitor 1 by effectively utilizing the space present in the portion between the surface of the multilayer body and the virtual plane connecting the surface of the first external electrode and the surface of the second external electrode, even in multilayer ceramic capacitors with a series configuration for high voltage resistance specifications.

The multilayer ceramic capacitor 1 according to one embodiment of the present invention includes: the multilayer body 10 including the plurality of dielectric layers 20 and the plurality of internal electrode layers 30 that are laminated, the first main surface TS1 and the second main surface TS2 opposed to each other in the lamination direction T, the first lateral surface WS1 and the second lateral surface WS2 opposed to each other in the width direction W orthogonal or substantially orthogonal to the lamination direction T, and the first end surface LS1 and the second end surface LS2 opposed to each other in the length direction L orthogonal or substantially orthogonal to the lamination direction T and the width direction W; the first external electrode 40A on the first end surface LS1; and the second external electrode 40B on the second end surface LS2. The plurality of internal electrode layers 30 include the first internal electrode layers 31, the second internal electrode layers 32, and the intermediate electrode layers 33. Each of the first internal electrode layers 31 includes, at one end portion thereof, the first extension portion D1 that extends toward the first end surface LS1 and connects to the first external electrode 40A, and the first counter portion EA that is connected to the first extension portion D1 and opposed to a corresponding one of the internal electrode layers 30 adjacent in the lamination direction T. Each of the second internal electrode layers 32 includes, at one end portion thereof, the second extension portion D2 that extends toward the second end surface LS2 and connects to the second external electrode 40B, and the second counter portion EB that is connected to the second extension portion D2 and opposed to a corresponding one of the internal electrode layers 30 adjacent in the lamination direction T. Each of the intermediate electrode layers 33 is not connected to either the first external electrode 40A or the second external electrode 40B, and provides a series-connected capacitor element together with the first internal electrode layer 31 and the second internal electrode layer 32. At least a portion of each of the intermediate electrode layers 33 has a coverage higher than a coverage of a region of the first counter portion EA of the first internal electrode layer 31 adjacent to the first end surface LS1, and higher than a coverage of a region of the second counter portion EB of the second internal electrode layer 32 adjacent to the second end surface LS2.

With such a configuration, it is possible to provide a multilayer ceramic capacitor 1 that is able to increase the capacitance without increasing the size of the multilayer ceramic capacitor 1, even in a multilayer ceramic capacitor 1 with high voltage resistance specifications.

In the multilayer ceramic capacitor 1 according to one embodiment of the present invention, each of the intermediate electrode layers 33 includes the first electrode layer-side counter portion ECA that is opposed to a corresponding one of the first internal electrode layers 31 adjacent in the lamination direction T, and the second electrode layer-side counter portion ECB that is opposed to a corresponding one of the second internal electrode layers 32 adjacent in the lamination direction T, the first counter portion EA of each of the first internal electrode layers 31 is opposed to a corresponding one of the intermediate electrode layers 33 as an internal electrode layer adjacent in the lamination direction T, and the second counter portion EB of each of the second internal electrode layers 32 is opposed to a corresponding one of the intermediate electrode layers as an internal electrode layer adjacent in the lamination direction T.

With this configuration, even in the multilayer ceramic capacitor 1 with a two-portion configuration for high voltage resistance, it is possible to increase the capacitance without increasing the size of the multilayer ceramic capacitor 1.

In the multilayer ceramic capacitor 1 according to one embodiment of the present invention, a coverage of a region of the first electrode layer-side counter portion ECA adjacent to the second end surface LS2 is higher than a coverage of a region of the first counter portion EA adjacent to the first end surface LS1, and a coverage of a region of the second electrode layer-side counter portion ECB adjacent to the first end surface LS1 is higher than a coverage of a region of the second counter portion EB adjacent to the second end surface LS2.

With such a configuration, it is possible to increase the capacitance without increasing the size of the multilayer ceramic capacitor 1.

In the multilayer ceramic capacitor 1 according to one embodiment of the present invention, a coverage of a region of the first electrode layer-side counter portion ECA adjacent to the second end surface LS2 is higher than a coverage of a region of the first electrode layer-side counter portion ECA adjacent to the first end surface LS1, and a coverage of a region of the second electrode layer-side counter portion ECB adjacent to the first end surface LS1 is higher than a coverage of a region of the second electrode layer-side counter portion ECB adjacent to the second end surface LS2.

With such a configuration, it is possible to increase the capacitance without increasing the size of the multilayer ceramic capacitor 1.

In the multilayer ceramic capacitor 1 according to one embodiment of the present invention, a coverage of a region of the first counter portion EA adjacent to the second end surface LS2 is higher than a coverage of a region of the first counter portion EA adjacent to the first end surface LS1, and a coverage of a region of the second counter portion EB adjacent to the first end surface LS1 is higher than a coverage of a region of the second counter portion EB adjacent to the second end surface LS2.

With such a configuration, it is possible to increase the capacitance without increasing the size of the multilayer ceramic capacitor 1.

In the multilayer ceramic capacitor 1 according to one embodiment of the present invention, a coverage of a region of the first counter portion EA adjacent to the second end surface LS2 is higher than a coverage of a region of the first electrode layer-side counter portion ECA adjacent to the first end surface LS1, and a coverage of a region of the second counter portion EB adjacent to the first end surface LS1 is higher than a coverage of a region of the first electrode layer-side counter portion ECA adjacent to the second end surface LS2.

With such a configuration, it is possible to increase the capacitance without increasing the size of the multilayer ceramic capacitor 1.

In the multilayer ceramic capacitor 1 according to one embodiment of the present invention, the intermediate electrode layers 33 include the first intermediate electrode layers 331 and the second intermediate electrode layers 332. The first intermediate electrode layers 331 each include the first electrode layer-side counter portion EC1A that is opposed to a corresponding one of the first internal electrode layers 31 adjacent in the lamination direction T, and the first intermediate electrode layer counter portion EC1B that is opposed to a corresponding one of the second intermediate electrode layers 332 adjacent in the lamination direction T. The second intermediate electrode layers 332 each include the second electrode layer-side counter portion EC2A that is opposed to a corresponding one of the second internal electrode layers 32 adjacent in the lamination direction T, and the second intermediate electrode layer counter portion EC2B that is opposed to a corresponding one of the first intermediate electrode layers 331 adjacent in the lamination direction T.

With this configuration, even in the multilayer ceramic capacitor 1 with a three-portion configuration for high voltage resistance, it is possible to increase the capacitance without increasing the size of the multilayer ceramic capacitor 1.

In the multilayer ceramic capacitor 1 according to one embodiment of the present invention, a coverage of the first intermediate electrode layer counter portion EC1B and a coverage of the second intermediate electrode layer counter portion EC2B are higher than a coverage of a region of the first counter portion EA adjacent to the first end surface LS1 and a coverage of a region of the second counter portion EB adjacent to the second end surface LS2.

With this configuration, it is possible to increase the capacitance without increasing the size of the multilayer ceramic capacitor 1.

In the multilayer ceramic capacitor 1 according to one embodiment of the present invention, a coverage of the first intermediate electrode layer counter portion EC1B and a coverage of the second intermediate electrode layer counter portion EC2B are higher than a coverage of a region of the first electrode layer-side counter portion EC1A adjacent to the first end surface LS1 and a coverage of a region of the second electrode layer-side counter portion EC2A adjacent to the second end surface LS2.

With this configuration, it is possible to increase the capacitance without increasing the size of the multilayer ceramic capacitor 1.

In the multilayer ceramic capacitor 1 according to one embodiment of the present invention, the intermediate electrode layers 33 include the first intermediate electrode layers 331, second intermediate electrode layers 332, and third intermediate electrode layers 333. The first intermediate electrode layers 331 each include the first electrode layer-side counter portion EC1A that is opposed to a corresponding one of the first internal electrode layers 31 adjacent in the lamination direction T, and the first intermediate electrode layer counter portion EC1B that is opposed to a corresponding one of the third intermediate electrode layers 333 adjacent in the lamination direction T. The second intermediate electrode layers 332 each include the second electrode layer-side counter portion EC2A that is opposed to a corresponding one of the second internal electrode layers 32 adjacent in the lamination direction T, and the second intermediate electrode layer counter portion EC2B that is opposed to a corresponding one of the third intermediate electrode layers 333 adjacent in the lamination direction T. The third intermediate electrode layers 333 each include the third intermediate electrode layer counter portion EC3A that is opposed to a corresponding one of the first intermediate electrode layers 331 adjacent in the lamination direction T, and the fourth intermediate electrode layer counter portion EC3B that is opposed to a corresponding one of the second intermediate electrode layer 332 adjacent in the lamination direction T.

With this configuration, even in the multilayer ceramic capacitor 1 with a four-portion configuration, it is possible to increase the capacitance without increasing the size of the multilayer ceramic capacitor 1.

In the multilayer ceramic capacitor 1 according to one embodiment of the present invention, a coverage of the first intermediate electrode layer counter portion EC1B, a coverage of the second intermediate electrode layer counter portion EC2B, a coverage of the third intermediate electrode layer counter portion EC3A, and a coverage of the fourth intermediate electrode layer counter portion EC3B are higher than a coverage of the first counter portion EA and a coverage of the second counter portion EB.

With this configuration, it is possible to increase the capacitance without increasing the size of the multilayer ceramic capacitor 1.

In the multilayer ceramic capacitor 1 according to one embodiment of the present invention, a coverage of the first intermediate electrode layer counter portion EC1B, a coverage of the second intermediate electrode layer counter portion EC2B, a coverage of the third intermediate electrode layer counter portion EC3A, and a coverage of the fourth intermediate electrode layer counter portion EC3B are higher than a coverage of the first electrode layer-side counter portion EC1A and a coverage of the second electrode layer-side counter portion EC2A.

With such a configuration, it is possible to increase the capacitance without increasing the size of the multilayer ceramic capacitor 1.

In the multilayer ceramic capacitor 1 according to one embodiment of the present invention, a coverage of the third intermediate electrode layer 333 is higher than a coverage of the first internal electrode layer 31 and a coverage of the second internal electrode layer 32.

With such a configuration, it is possible to increase the capacitance without increasing the size of the multilayer ceramic capacitor 1.

In the multilayer ceramic capacitor 1 according to one embodiment of the present invention, when a portion of the first counter portion EA adjacent to the second end surface LS2 is defined as the second region EA2, and a portion of the second counter portion EB adjacent to the first end surface LS1 is defined as the fourth region EB2, an end portion of the second region EA2 adjacent to the first end surface LS1 is located closer to the second end surface LS2 than an end portion of the first external electrode 40A adjacent to the second end surface LS2, and an end portion of the fourth region EB2 adjacent to the second end surface LS2 is located closer to the first end surface LS1 than an end portion of the second external electrode 40B adjacent to the first end surface LS1.

With such a configuration, it is possible to further increase the capacitance without increasing the size of the multilayer ceramic capacitor 1.

In the multilayer ceramic capacitor 1 according to one embodiment of the present invention, the multilayer body 10 includes the exposed portion Ep exposed from the first external electrode 40A and the second external electrode 40B, the first covered portion C1 covered by the first external electrode 40A, and the second covered portion C2 covered by the second external electrode 40B. The maximum distance T0 in the lamination direction T of the exposed portion Ep is longer than the maximum distance T1 in the lamination direction T between a surface of the first main surface TS1 of the multilayer body 10 and a surface of the second main surface TS2 of the multilayer body 10 in each of the first covered portion C1 and the second covered portion C2, and shorter than the maximum distance T2 in the lamination direction T between a surface adjacent to the first main surface TS1 and a surface adjacent to the second main surface TS2 of each of the first external electrode 40A and the second external electrode 40B.

With such a configuration, it is possible to increase the capacitance without increasing the size of the multilayer ceramic capacitor 1.

In the multilayer ceramic capacitor 1 according to one embodiment of the present invention, the first main surface TS1 includes the first covered surface C1sA covered by the first external electrode 40A, the second covered surface C2sA covered by the second external electrode 40B, and the first protruding surface EpsA that is exposed from the first external electrode 40A and the second external electrode 40B and protrudes toward a center in the length direction L.

With such a configuration, it is possible to increase the capacitance while suppressing the occurrence of cracks in the multilayer body 10 without increasing the size of the multilayer ceramic capacitor 1.

In the multilayer ceramic capacitor 1 according to one embodiment of the present invention, the first protruding surface EpsA includes the recessed portion DE1 extending in the width direction.

This makes it possible to increase the capacitance while reducing the size of the multilayer ceramic capacitor 1 and further suppressing the occurrence of cracks in the multilayer body 10, even in a multilayer ceramic capacitor 1 having a multiple-portion configuration.

The multilayer ceramic capacitor 1 according to one embodiment of the present invention includes: the multilayer body 10 including the plurality of dielectric layers 20 and the plurality of internal electrode layers 30 that are laminated, the first main surface TS1 and the second main surface TS2 opposed to each other in the lamination direction T, the first lateral surface WS1 and the second lateral surface WS2 opposed to each other in the width direction W orthogonal or substantially orthogonal to the lamination direction T, and the first end surface LS1 and the second end surface LS2 opposed to each other in the length direction L orthogonal or substantially orthogonal to the lamination direction T and the width direction W; the first external electrode 40A on the first end surface LS1; and the second external electrode 40B on the second end surface LS2. The plurality of internal electrode layers 30 include the first internal electrode layers 31, the second internal electrode layers 32, and the intermediate electrode layers 33. Each of the first internal electrode layers 31 includes, at one end portion thereof, the first extension portion D1 that extends toward the first end surface LS1 and connects to the first external electrode 40A, and the first counter portion EA that is connected to the first extension portion D1 and opposed to a corresponding one of the intermediate electrode layers 33 adjacent in the lamination direction T. Each of the second internal electrode layers 32 includes, at one end portion thereof, the second extension portion D2 that extends toward the second end surface LS2 and connects to the second external electrode 40B, and the second counter portion EB that is connected to the second extension portion D2 and opposed to a corresponding one of the intermediate electrode layers 33 adjacent in the lamination direction T. Each of the intermediate electrode layers 33 is not connected to either the first external electrode 40A or the second external electrode 40B, and includes the first electrode layer-side counter portion ECA that is opposed to a corresponding one of the first internal electrode layers 31 adjacent in the lamination direction T, and the second electrode layer-side counter portion ECB that is opposed to a corresponding one of the second internal electrode layers 32 adjacent in the lamination direction T. The first internal electrode layers 31, the intermediate electrode layers 33, and the second internal electrode layers 32 provide a series-connected capacitor element. The first counter portion EA includes the first region EA1 adjacent to the first end surface LS1, and the second region EA2 adjacent to the second end surface LS2 and having a coverage higher than a coverage of the first region EA1. The second counter portion EB includes the third region EB1 adjacent to the second end surface LS2, and the fourth region EB2 adjacent to the first end surface LS1 and having a coverage higher than a coverage of the third region EB1. The first electrode layer-side counter portion ECA includes the fifth region ECA1 adjacent to the first end surface LS1, and the sixth region ECA2 adjacent to the second end surface LS2 and having a coverage higher than a coverage of the first region EA1. The second electrode layer-side counter portion ECB includes the seventh region ECB1 adjacent to the second end surface LS2, and the eighth region ECB2 adjacent to the first end surface LS1 and having a coverage higher than a coverage of the seventh region ECB1.

This makes it possible to increase the capacitance without increasing the size of the multilayer ceramic capacitor 1, even in a multilayer ceramic capacitor 1 with high voltage resistance specifications.

The present invention is not limited to the configurations of the above-described embodiments, and can be appropriately modified and applied without changing the gist of the present invention. In addition, a combination of two or more of the individual desirable configurations described in the above embodiments is also included in the present invention.

### EXPLANATION OF REFERENCE NUMERALS

1 multilayer ceramic capacitor
10 multilayer body
20 dielectric layer
30 internal electrode layer
31 first internal electrode layer
32 second internal electrode layer
33 intermediate electrode layer
40A first external electrode
40B second external electrode
D1 first extension portion
D2 second extension portion
EA first counter portion
EB second counter portion
L length direction
LS1 first end surface
LS2 second end surface
T lamination direction
TS1 first main surface
TS2 second main surface
W width direction
WS1 first lateral surface
WS2 second lateral surface

## Claims

1. A multilayer ceramic capacitor comprising:
a multilayer body including a plurality of dielectric layers and a plurality of internal electrode layers that are laminated, a first main surface and a second main surface opposed to each other in a lamination direction, a first lateral surface and a second lateral surface opposed to each other in a width direction orthogonal or substantially orthogonal to the lamination direction, and a first end surface and a second end surface opposed to each other in a length direction orthogonal or substantially orthogonal to the lamination direction and the width direction;
a first external electrode on the first end surface; and
a second external electrode on the second end surface, wherein
the plurality of internal electrode layers include first internal electrode layers, second internal electrode layers, and intermediate electrode layers,
each of the first internal electrode layers includes, at one end portion thereof, a first extension portion that extends toward the first end surface and connects to the first external electrode, and a first counter portion that is connected to the first extension portion and opposed to a corresponding one of the internal electrode layers adjacent in the lamination direction,
each of the second internal electrode layers includes, at one end portion thereof, a second extension portion that extends toward the second end surface and connects to the second external electrode, and a second counter portion that is connected to the second extension portion and opposed to a corresponding one of the internal electrode layers adjacent in the lamination direction,
each of the intermediate electrode layers is not connected to either the first external electrode or the second external electrode, and provides a series-connected capacitor element together with the first internal electrode layer and the second internal electrode layer, and
at least a portion of each of the intermediate electrode layers has a coverage higher than a coverage of a region of the first counter portion of the first internal electrode layer adjacent to the first end surface, and higher than a coverage of a region of the second counter portion of the second internal electrode layer adjacent to the second end surface.

2. The multilayer ceramic capacitor according to claim 1, wherein
each of the intermediate electrode layers includes a first electrode layer-side counter portion that is opposed to a corresponding one of the first internal electrode layers adjacent in the lamination direction, and a second electrode layer-side counter portion that is opposed to a corresponding one of the second internal electrode layers adjacent in the lamination direction,
the first counter portion of each of the first internal electrode layers is opposed to a corresponding one of the intermediate electrode layers as an internal electrode layer adjacent in the lamination direction, and
the second counter portion of each of the second internal electrode layers is opposed to a corresponding one of the intermediate electrode layers as an internal electrode layer adjacent in the lamination direction.

3. The multilayer ceramic capacitor according to claim 2, wherein
a coverage of a region of the first electrode layer-side counter portion adjacent to the second end surface is higher than a coverage of a region of the first counter portion adjacent to the first end surface, and
a coverage of a region of the second electrode layer-side counter portion adjacent to the first end surface is higher than a coverage of a region of the second counter portion adjacent to the second end surface.

4. The multilayer ceramic capacitor according to claim 2 or 3, wherein
a coverage of a region of the first electrode layer-side counter portion adjacent to the second end surface is higher than a coverage of a region of the first electrode layer-side counter portion adjacent to the first end surface, and
a coverage of a region of the second electrode layer-side counter portion adjacent to the first end surface is higher than a coverage of a region of the second electrode layer-side counter portion adjacent to the second end surface.

5. The multilayer ceramic capacitor according to any one of claims 2 to 4,
a coverage of a region of the first counter portion adjacent to the second end surface is higher than a coverage of a region of the first counter portion adjacent to the first end surface, and
a coverage of a region of the second counter portion adjacent to the first end surface is higher than a coverage of a region of the second counter portion adjacent to the second end surface.

6. The multilayer ceramic capacitor according to any one of claims 2 to 5, wherein
a coverage of a region of the first counter portion adjacent to the second end surface is higher than a coverage of a region of the first electrode layer-side counter portion adjacent to the first end surface, and
a coverage of a region of the second counter portion adjacent to the first end surface is higher than a coverage of a region of the first electrode layer-side counter portion adjacent to the second end surface.

7. The multilayer ceramic capacitor according to claim 1, wherein
the intermediate electrode layers include first intermediate electrode layers and second intermediate electrode layers,
the first intermediate electrode layers each include a first electrode layer-side counter portion that is opposed to a corresponding one of the first internal electrode layers adjacent in the lamination direction, and a first intermediate electrode layer counter portion that is opposed to a corresponding one of the second intermediate electrode layers adjacent in the lamination direction, and
the second intermediate electrode layers each include a second electrode layer-side counter portion that is opposed to a corresponding one of the second internal electrode layers adjacent in the lamination direction, and a second intermediate electrode layer counter portion that is opposed to a corresponding one of the first intermediate electrode layers adjacent in the lamination direction.

8. The multilayer ceramic capacitor according to claim 7, wherein a coverage of the first intermediate electrode layer counter portion and a coverage of the second intermediate electrode layer counter portion are higher than a coverage of a region of the first counter portion adjacent to the first end surface and a coverage of a region of the second counter portion adjacent to the second end surface.

9. The multilayer ceramic capacitor according to claim 7 or 8, wherein a coverage of the first intermediate electrode layer counter portion and a coverage of the second intermediate electrode layer counter portion are higher than a coverage of a region of the first electrode layer-side counter portion adjacent to the first end surface and a coverage of a region of the second electrode layer-side counter portion adjacent to the second end surface.

10. The multilayer ceramic capacitor according to claim 1, wherein
the intermediate electrode layers include first intermediate electrode layers, second intermediate electrode layers, and third intermediate electrode layers,
the first intermediate electrode layers each include a first electrode layer-side counter portion that is opposed to a corresponding one of the first internal electrode layers adjacent in the lamination direction, and a first intermediate electrode layer counter portion that is opposed to a corresponding one of the third intermediate electrode layers adjacent in the lamination direction,
the second intermediate electrode layers each include a second electrode layer-side counter portion that is opposed to a corresponding one of the second internal electrode layers adjacent in the lamination direction, and a second intermediate electrode layer counter portion that is opposed to a corresponding one of the third intermediate electrode layers adjacent in the lamination direction, and
the third intermediate electrode layers each include a third intermediate electrode layer counter portion that is opposed to a corresponding one of the first intermediate electrode layers adjacent in the lamination direction, and a fourth intermediate electrode layer counter portion that is opposed to a corresponding one of the second intermediate electrode layer adjacent in the lamination direction.

11. The multilayer ceramic capacitor according to claim 10, wherein a coverage of the first intermediate electrode layer counter portion, a coverage of the second intermediate electrode layer counter portion, a coverage of the third intermediate electrode layer counter portion, and a coverage of the fourth intermediate electrode layer counter portion are higher than a coverage of the first counter portion and a coverage of the second counter portion.

12. The multilayer ceramic capacitor according to claim 10 or 11, wherein a coverage of the first intermediate electrode layer counter portion, a coverage of the second intermediate electrode layer counter portion, a coverage of the third intermediate electrode layer counter portion, and a coverage of the fourth intermediate electrode layer counter portion are higher than a coverage of the first electrode layer-side counter portion and a coverage of the second electrode layer-side counter portion.

13. The multilayer ceramic capacitor according to any one of claims 10 to 12, wherein a coverage of the third intermediate electrode layer is higher than a coverage of the first internal electrode layer and a coverage of the second internal electrode layer.

14. The multilayer ceramic capacitor according to any one of claims 1 to 13, wherein, when a portion of the first counter portion adjacent to the second end surface is defined as a second region, and a portion of the second counter portion adjacent to the first end surface is defined as a fourth region,
an end portion of the second region adjacent to the first end surface is located closer to the second end surface than an end portion of the first external electrode adjacent to the second end surface, and
an end portion of the fourth region adjacent to the second end surface is located closer to the first end surface than an end portion of the second external electrode adjacent to the first end surface.

15. The multilayer ceramic capacitor according to any one of claims 1 to 14, wherein
the multilayer body includes an exposed portion exposed from the first external electrode and the second external electrode, a first covered portion covered by the first external electrode, and a second covered portion covered by the second external electrode, and
a maximum distance in the lamination direction of the exposed portion is longer than a maximum distance in the lamination direction between a surface of the first main surface of the multilayer body and a surface of the second main surface of the multilayer body in each of the first covered portion and the second covered portion, and shorter than a maximum distance in the lamination direction between a surface adjacent to the first main surface and a surface adjacent to the second main surface of each of the first external electrode and the second external electrode.

16. The multilayer ceramic capacitor according to any one of claims 1 to 15, wherein the first main surface includes a first covered surface covered by the first external electrode, a second covered surface covered by the second external electrode, and a first protruding surface that is exposed from the first external electrode and the second external electrode and protrudes toward a center in the length direction.

17. The multilayer ceramic capacitor according to claim 16, wherein the first protruding surface includes a recessed portion extending in the width direction.

18. A multilayer ceramic capacitor comprising:
a multilayer body including a plurality of dielectric layers and a plurality of internal electrode layers that are laminated, a first main surface and a second main surface opposed to each other in a lamination direction, a first lateral surface and a second lateral surface opposed to each other in a width direction orthogonal or substantially orthogonal to the lamination direction, and a first end surface and a second end surface opposed to each other in a length direction orthogonal or substantially orthogonal to the lamination direction and the width direction;
a first external electrode on the first end surface; and
a second external electrode on the second end surface, wherein
the plurality of internal electrode layers include first internal electrode layers, second internal electrode layers, and intermediate electrode layers,
each of the first internal electrode layers includes, at one end portion thereof, a first extension portion that extends toward the first end surface and connects to the first external electrode, and a first counter portion that is connected to the first extension portion and opposed to a corresponding one of the intermediate electrode layers adjacent in the lamination direction,
each of the second internal electrode layers includes, at one end portion thereof, a second extension portion that extends toward the second end surface and connects to the second external electrode, and a second counter portion that is connected to the second extension portion and opposed to a corresponding one of the intermediate electrode layers adjacent in the lamination direction,
each of the intermediate electrode layers is not connected to either the first external electrode or the second external electrode, and includes a first electrode layer-side counter portion that is opposed to a corresponding one of the first internal electrode layers adjacent in the lamination direction, and a second electrode layer-side counter portion that is opposed to a corresponding one of the second internal electrode layers adjacent in the lamination direction,
the first internal electrode layers, the intermediate electrode layers, and the second internal electrode layers provide a series-connected capacitor element,
the first counter portion includes a first region adjacent to the first end surface, and a second region adjacent to the second end surface and having a coverage higher than a coverage of the first region,
the second counter portion includes a third region adjacent to the second end surface, and a fourth region adjacent to the first end surface and having a coverage higher than a coverage of the third region,
the first electrode layer-side counter portion includes a fifth region adjacent to the first end surface, and a sixth region adjacent to the second end surface and having a coverage higher than a coverage of the first region, and the second electrode layer-side counter portion includes a seventh region adjacent to the second end surface, and an eighth region adjacent to the first end surface and having a coverage higher than a coverage of the seventh region.
